(19) Europäisches Patentamt
European Patent Office
Office européen des brevets

(11) EP 2 036 865 A1

(12) **EUROPEAN PATENT APPLICATION**
published in accordance with Art. 153(4) EPC

(43) Date of publication:
**18.03.2009 Bulletin 2009/12**

(21) Application number: **07744313.3**

(22) Date of filing: **29.05.2007**

(51) Int Cl.:
***C02F 1/48*** *(2006.01)* ***B01D 19/00*** *(2006.01)*
***C02F 1/20*** *(2006.01)* ***C02F 5/00*** *(2006.01)*

(86) International application number:
**PCT/JP2007/060893**

(87) International publication number:
**WO 2007/139103 (06.12.2007 Gazette 2007/49)**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **29.05.2006 JP 2006148331**
**28.05.2007 JP 2007140795**
**28.05.2007 JP 2007140796**

(71) Applicant: **Shiga Functional Water Laboratory Corporation**
**Sagamihara-shi, Kanagawa**
**229-0015 (JP)**

(72) Inventor: **SHIGA, Seiki**
**Kanagawa 2290015 (JP)**

(74) Representative: **HOFFMANN EITLE**
**Patent- und Rechtsanwälte**
**Arabellastraße 4**
**81925 München (DE)**

(54) **ELECTROMAGNETIC FIELD TREATMENT METHOD AND ELECTROMAGNETIC FIELD TREATMENT EQUIPMENT OF WATER**

(57) For example, a coil 2 is provide on the outer side of a water pipe 1 of a water channel, water to be treated 3 is fed, and a specific alternating current having a specific frequency or a specific peak current is supplied from an AC power supply 4 to the coil 2. As a frequency of the specific alternating current, one resonant frequency is selected out of a resonant frequency group having plural resonant frequencies. A resonant magnetic field is induced in the channel by the specific peak current. An oscillating electromagnetic field induced by such a specific alternating current is imparted to the water to be treated 3 and subjecting the water to be treated 3 to electromagnetic field treatment, whereby active treated water 5 that is simply and easily and highly efficiently activated can be obtained.

FIG.1

1
6
5
3
2
4

EP 2 036 865 A1

## Description

### Technical Field

The present invention relates to an electromagnetic field treatment method and an electromagnetic field treatment apparatus for water for efficiently generating function water.

### Background Art

Various methods for physicochemical treatment for improving a function of water have been examined. For example, it is well known from the past that acid water having disinfection and cleaning functions is generated or electrolytic redaction water containing abundant hydrogen is generated by subjecting a water solution to electrolytic treatment. There is proposed a technique for applying electromagnetic field treatment to water and, for example, dividing clusters of the water into small pieces to change a characteristic of the water (see, for example, Japanese Unexamined Patent Publication No . 7-68266) or changing the water into water with high cleaning function to prevent scale and the like from adhering to water channels through which household liquid wastes, industrial liquid wastes, and the like flow, toilet facilities, boiler facilities, waste water treatment facilities, or the like (see, for example, Japanese Unexamined Patent Publication No.11-156365 and 2000-212782). Such water activated by applying physicochemical treatment to normal water is called function water.

In an electromagnetic field treatment method for generating the function water, for, example, in Japanese Unexamined Patent Publication No.7-68266, an electric field generated by a pulse-like voltage or the electric field and a magnetic field are imparted to water to be treated. In this way, energy for disconnecting bonding of water molecules, which form clusters, is concentrated at a time, the clusters of the water are divided into small pieces, and high function water excellent in a sense of taste and the like is provided.

In Japanese Unexamined Patent Publication No.11-156365, permanent magnets of magnetic field generating means are arranged to face a waterway such that a strong magnetic field is formed in an area near electrodes as magnetic field generating means attached to the waterway. In this way, scale components in the waterway are efficiently separated out and changed to sludge, whereby the scale components are prevented from adhering in a conduit and the like as scale or clogging.

In Japanese Unexamined Patent Publication No. 2000-212782, an alternating current, a frequency of which temporally changes in a band of 20 Hz to 1 MHz, is applied to, for example, a coil wound around the outer side of a pipe. Electron energy generated by modulation control for this frequency gives electrolytic energy to a fluid flowing through the pipe with fluid molecules and ions in the fluid as media. The surface of scale and an inner wall of the pipe are strongly negatively charged, the scale and the inner wall of the pipe repel each other, the scale changes to small crystals and bonding of the crystals become unstable, and the scale is easily removed from the inner wall of the pipe. Alternatively, red rust caused in an inner wall of an iron pipe is finally changed to stable black rust and the progress of a corrosion reaction of the pipe is prevented by the generated electrons.

### Disclosure of the Invention

#### Problems to be Solved by the Invention

However, in the electromagnetic field treatment methods described above, the effect of the methods may not be sufficiently shown depending on a type of a water solution as the water to be treated. Since the activation of water by the electromagnetic field treatment cannot be stably performed, prevention of adhesion of scale/removal of scale or rust prevention may not be able to be performed. Therefore, for example, in Patent Document 3, before the electromagnetic field treatment for the water to be treated is performed, it is necessary to test the effect of modulated electric field treatment of the water through a desk test in advance. Consequently, the methods of the electromagnetic field treatment are extremely complicated and low in operability. Moreover, since conditions for the modulated electric field treatment need to be changed according to a type of the water to be treated, universality of the methods is poor.

The problems described above are caused by the fact that physicochemical clarification has not be sufficiently performed concerning a generation mechanism for function water by electromagnetic field treatment for water. Besides, various proposals have been made concerning a generation method for function water by electromagnetic field treatment for water. However, since an experimental and scientific analysis of the generation mechanism for function water is difficult, there are quite a few proposals in which reliability of an electromagnetic field treatment system itself is doubtful.

The present invention has been devised in view of the circumstance described above and it is an object of the present invention to provide an electromagnetic field treatment method and an electromagnetic field treatment apparatus for water for generating function water highly efficiently and stably on the basis of an experimental and scientific ground, simply and easily, and with high economy and universality.

Means for Solving the Problems

The inventor performed a detailed experiment concerning a dissolving ability for active treated water obtained by applying oscillating electromagnetic field treatment to water and activating the water. The inventor found that, in activation of water by treatment of an oscillating electromagnetic field induced by an electromagnetic field inducing current such as an alternating current fed to a coil, a resonant frequency was present in frequencies of the electromagnetic field inducing current and measured a value of the resonant frequency. The inventor found that, in electromagnetic field treatment for water performed by using an electromagnetic field including an oscillating electric field generated by application of a voltage of a specific frequency and a static magnetic field generated from a permanent magnet or the like, a resonant frequency was present in frequencies of the generated oscillating electric field. Moreover, the inventor obtained an experimental new fact concerning specificity of the resonant frequency in the activation of water. The present invention is devised on the basis of these kinds of new knowledge.

In order to attain the object, an electromagnetic field treatment method for water according to a first invention is an electromagnetic field treatment method for water for feeding an electromagnetic field inducing current to a coil, imparting an oscillating electromagnetic field induced in the coil to water, and activating the water, the electromagnetic field treatment method for water including: selecting one resonant frequency out of a first resonant frequency group of the electromagnetic field inducing current for activating the water or a second resonant frequency group of the electromagnetic field inducing current for activating the water; and inducing an oscillating electromagnetic field in the coil with an electromagnetic field inducing current of the selected one resonant frequency.

An electromagnetic field treatment method for water according to a second invention is an electromagnetic field treatment method for water for feeding an electromagnetic field inducing current to a coil, imparting an oscillating electromagnetic field induced in the coil to water, and activating the water, the electromagnetic field treatment method for water including: selecting one resonant frequency out of a first resonant frequency group of the electromagnetic field inducing current for activating the water or a second resonant frequency group of the electromagnetic field inducing current for activating the water; and inducing an oscillating electromagnetic field in the coil with an electromagnetic field inducing current of a frequency in a half-value width in a resonance characteristic of the selected resonant frequency.

An electromagnetic field treatment method for water according to a third invention is an electromagnetic field treatment method for water for feeding an electromagnetic field inducing current to a coil, imparting an oscillating electromagnetic field induced in the coil to water, and activating the water, the electromagnetic field treatment method for water including: selecting one resonant frequency out of a first resonant frequency group of the electromagnetic field inducing current for activating the water and one resonant frequency out of a second resonant frequency group of the electromagnetic field inducing current for activating the water; and inducing an oscillating electromagnetic field in the coil with an electromagnetic field inducing current of the one resonant frequency selected from the first resonant frequency group and an electromagnetic field inducing current of the one resonant frequency selected from the second resonant frequency group.

An electromagnetic field treatment method for water according to a fourth invention is an electromagnetic field treatment method for water for feeding an electromagnetic field inducing current to a coil, imparting an oscillating electromagnetic field induced in the coil to water, and activating the water, the electromagnetic field treatment method for water including: selecting one resonant frequency out of a first resonant frequency group of the electromagnetic field inducing current for activating the water and one resonant frequency out of a second resonant frequency group of the electromagnetic field inducing current for activating the water; and inducing an oscillating electromagnetic field in the coil with an electromagnetic field inducing current of a frequency in a half-value width in a resonance characteristic of the resonant frequency selected from the first resonant frequency group and an electromagnetic field inducing current of a frequency in a half-value width in a resonance characteristic of the resonant frequency selected from the second resonant frequency group.

In the first to forth inventions, an insulator is arranged in a waterway of an area, around which the coil is wound, to change a flow of the water and subject the water to electromagnetic field treatment.

An electromagnetic field treatment method for water according to a fifth invention is a water magnetic field treatment method for imparting an electromagnetic field including an oscillating electric field generated by application of a voltage changing at a fixed period and a static magnetic field generated by a permanent magnet or an electromagnet and activating the water, the electromagnetic field treatment method for water including: selecting one resonant frequency out of a first resonant frequency group of the voltage for activating the water or a second resonant frequency group of the voltage for activating the water; and generating the oscillating electric field with application of a voltage of the selected one resonant frequency.

An electromagnetic field treatment method for water according to a sixth invention is a water magnetic field treatment method for imparting an electromagnetic field including an oscillating electric field generated by application of a voltage changing at a fixed period and a static magnetic field generated by a permanent magnet or an electromagnet and activating the water, the electromagnetic field treatment method for water including: selecting one resonant frequency out of a first resonant frequency group of the voltage for activating the water or a second resonant frequency group of the voltage for activating the water; and generating the oscillating electric field with application of a voltage of a frequency in a half-value width in a resonance characteristic of the selected resonant frequency.

An electromagnetic field treatment method for water according to a seventh invention is a water magnetic field treatment method for imparting an electromagnetic field including an oscillating electric field generated by application of a voltage changing at a fixed period and a static magnetic field generated by a permanent magnet or an electromagnet and activating the water, the electromagnetic field treatment method for water including: selecting one resonant frequency out of a first resonant frequency group of the voltage for activating the water and one resonant frequency out of a second resonant frequency group of the voltage for activating the water; and generating the oscillating electric field with application of a voltage of the one resonant frequency selected out of the first resonant frequency group and application of a voltage of the one resonant frequency selected out of the second resonant frequency group.

An electromagnetic field treatment method for water according to a eighth invention is a water magnetic field treatment method for imparting an electromagnetic field including an oscillating electric field generated by application of a voltage changing at a fixed period and a static magnetic field generated by a permanent magnet or an electromagnet and activating the water, the electromagnetic field treatment method for water including: selecting one resonant frequency out of a first resonant frequency group of the voltage for activating the water and one resonant frequency out of a second resonant frequency group of the voltage for activating the water; and generating the oscillating electric field with application of a voltage of a frequency in a half-value width in a resonance characteristic of the resonant frequency selected out of the first resonant frequency group and application of a voltage of a frequency in a half-value width in a resonance characteristic of the resonant frequency selected out of the second resonant frequency group.

In the fifth to eighth inventions, the influence of electromagnetic noise on the electromagnetic field imparted to the water is eliminated.

In the first to eighth inventions, the influence of terrestrial magnetism on the oscillating electromagnetic field or the electromagnetic field imparted to the water is eliminated. After degassing of carbon dioxide is applied to the water, the water is subjected to electromagnetic field treatment.

Alternatively, an electromagnetic field treatment apparatus for water according to a ninth invention is an electromagnetic field treatment apparatus for water that feeds an electromagnetic field inducing current to a coil, imparts an oscillating electromagnetic field induced in the coil to water, and activates the water, the electromagnetic field treatment apparatus for water including: a coil; and a power supply that supplies, to the coil, an electromagnetic field inducing current of one resonant frequency selected out of a first resonant frequency group of the electromagnetic field inducing current for activating the water or a second resonant frequency group of the electromagnetic field inducing current for activating the water.

An electromagnetic field treatment apparatus for water according to a tenth invention is an electromagnetic field treatment apparatus for water that feeds an electromagnetic field inducing current to a coil, imparts an oscillating electromagnetic field induced in the coil to water, and activates the water, the electromagnetic field treatment apparatus for water including: a coil; and a power supply that supplies, to the coil, an electromagnetic field inducing current of a frequency in a half-value width in a resonance characteristic of one resonant frequency selected out of a first resonant frequency group of the electromagnetic field inducing current for activating the water or a second resonant frequency group of the electromagnetic field inducing current for activating the water.

An electromagnetic field treatment apparatus for water according to an eleventh invention is an electromagnetic field treatment apparatus for water that feeds an electromagnetic field inducing current to a coil, imparts an oscillating electromagnetic field induced in the coil to water, and activates the water, the electromagnetic field treatment apparatus for water including: a coil; an alternating-current supplying unit that supplies an alternating current obtained by amplitude-modulating one resonant frequency in a first resonant frequency group of the electromagnetic field inducing current for activating the water and one resonant frequency in a second resonant frequency group of the electromagnetic field inducing current for activating the water; and a driving power supply unit that drives the alternating-current supplying unit.

An electromagnetic field treatment apparatus for water according to a twelfth invention is an electromagnetic field treatment apparatus for water that feeds an electromagnetic field inducing current to a coil, imparts an oscillating electromagnetic field induced in the coil to water, and activates the water, the electromagnetic field treatment apparatus for water including: a coil; an alternating-current supplying unit that supplies an alternating current obtained by amplitude-modulating a frequency in a half-value width in a resonance characteristic of one resonant frequency in a first resonant frequency group of the electromagnetic field inducing current for activating the water and a frequency in a half-value width in a resonance frequency of one resonant frequency in a second resonant frequency group of the electromagnetic field inducing current for activating the water; and a driving power supply unit that drives the alternating-current supplying unit.

An electromagnetic field treatment apparatus for water according to a thirteenth invention is a water magnetic field treatment apparatus that imparts an electromagnetic field including an oscillating electric field generated by application of a voltage changing at a fixed period and a static magnetic field generated by a permanent magnet or an electromagnet and activates the water, the electromagnetic field treatment apparatus for water including: a permanent magnet or an electromagnet; and a power supply that supplies a voltage of one resonant frequency selected out of a first resonant frequency group of the voltage for activating the water or a second resonant frequency group of the voltage for activating the water.

An electromagnetic field treatment apparatus for water according to a fourteenth invention is a water magnetic field treatment apparatus that imparts an electromagnetic field including an oscillating electric field generated by application of a voltage changing at a fixed period and a static magnetic field generated by a permanent magnet or an electromagnet and activates the water, the electromagnetic field treatment apparatus for water including: a permanent magnet or an electromagnet; and a power supply that supplies a voltage of a frequency in a half-value width in a resonance characteristic of one resonant frequency selected out of a first resonant frequency group of the voltage for activating the water or a second resonant frequency group of the voltage for activating the water.

An electromagnetic field treatment apparatus for water according to a fifteenth invention is a water magnetic field treatment apparatus that imparts an electromagnetic field including an oscillating electric field generated by application of a voltage changing at a fixed period and a static magnetic field generated by a permanent magnet or an electromagnet and activates the water, the electromagnetic field treatment apparatus for water including: a permanent magnet or an electromagnet; and a power supply that supplies a voltage of one resonant frequency selected out of a first resonant frequency group of the voltage for activating the water and a voltage of one resonant frequency selected out of a second resonant frequency group of the voltage for activating the water.

An electromagnetic field treatment apparatus for water according to a sixteenth invention is a water magnetic field treatment apparatus that imparts an electromagnetic field including an oscillating electric field generated by application of a voltage changing at a fixed period and a static magnetic field generated by a permanent magnet or an electromagnet and activates the water, the electromagnetic field treatment apparatus for water including: a permanent magnet or an electromagnet; and a power supply that supplies a voltage of a frequency in a half-value width in a resonance characteristic of one resonant frequency selected out of a first resonant frequency group of the voltage for activating the water and a voltage of a frequency in a half-value width in a resonance characteristic of one resonant frequency selected out of a second resonant frequency group of the voltage for activating the water.

In the thirteen to sixteenth inventions, means for eliminating the influence of electromagnetic noise on the electromagnetic field imparted to the water is attached.

In the ninth to sixteenth inventions, means for eliminating the influence of terrestrial magnetism on the oscillating electromagnetic field or the electromagnetic field imparted to the water is attached. After degassing of carbon dioxide is applied to the water, the electromagnetic field treatment is applied to the water.

In the first to fourth inventions and the ninth to twelfth inventions, the first resonant frequency group includes a resonant frequency $A_{-2}$ at 151.5 Hz or in the vicinity thereof, a resonant frequency $A_{-1}$ at 222.5 Hz or in the vicinity thereof, a resonant frequency $A_0$ at 345.0 Hz or in the vicinity thereof, a resonant frequency $A_1$ at 484 Hz or in the vicinity thereof, a resonant frequency $A_2$ at 954 Hz or in the vicinity thereof, a resonant frequency $A_3$ at 3.5 kHz or in the vicinity thereof, a resonant frequency $A_4$ at 7.0 kHz or in the vicinity thereof, a resonant frequency $A_5$ at 20.0 kHz or in the vicinity thereof, a resonant frequency $A_6$ at 37.3 kHz or in the vicinity thereof, and a resonant frequency $A_7$ at 80.0 kHz or in the vicinity thereof, and the second resonant frequency group includes a resonant frequency $B_{-2}$ at 205.0 Hz or in the vicinity thereof, a resonant frequency $B_{-1}$ at 301.0 Hz or in the vicinity thereof, a resonant frequency $B_0$ at 466.0 Hz or in the vicinity thereof, a resonant frequency $B_1$ at 655 Hz or in the vicinity thereof, a resonant frequency $B_2$ at 1.29 kHz or in the vicinity thereof, a resonant frequency $B_3$ at 4.73 kHz or in the vicinity thereof, a resonant frequency $B_4$ at 9.47 kHz or in the vicinity thereof, a resonant frequency $8_5$ at 27.0 kHz or in the vicinity thereof, a resonant frequency $B_6$ at 50.4 kHz or in the vicinity thereof, and a resonant frequency $B_7$ at 108.0 kHz or in the vicinity thereof.

In the first to fourth inventions and the ninth to twelfth inventions, in a preferred mode, peak intensity of an oscillating magnetic field induced in the coil by the electromagnetic field inducing current of the resonant frequency is set to the intensity of a resonant magnetic field having specific magnetic intensity or magnetic field intensity in a half-value width in a resonance characteristic of the resonant magnetic field by setting a peak current of the electromagnetic field inducing current of the resonant frequency to a specific current value. The intensity of the resonant magnetic field is a positive integer times as large as magnetic field intensity in a base mode.

In a preferred mode, magnetic field intensities in the base mode of the resonant magnetic field in the electromagnetic field inducing current of the resonant frequencies $A_i$ (i = integers -2 to 7) are, in order of the numbers of i, 5.3 mG or in the vicinity thereof, 7.4 mG or in the vicinity thereof, 12.3 mG or in the vicinity thereof, 17.3 mG or in the vicinity thereof, 31.9 mG or in the vicinity thereof, 130.6 mG or in the vicinity thereof, 323.0 mG or in the vicinity thereof, 1123.5 mG or in the vicinity thereof, 2556.0 mG or in the vicinity thereof, and 6039.0 mG or in the vicinity thereof, and magnetic field intensities in the base mode of the resonant magnetic field in the electromagnetic field inducing current of the resonant frequencies $B_j$ (j = integers -2 to 7) are, in order of the numbers of j, 7.1 mG or in the vicinity thereof, 10.4 mG or in the vicinity thereof, 16.3 mG or in the vicinity thereof, 23.5 mG or in the vicinity thereof, 47.1 mG or in the vicinity thereof, 188.2 mG or in the vicinity thereof, 463.5 mG or in the vicinity thereof, 1601.0 mG or in the vicinity thereof, 3342.5 mG or in the vicinity thereof, and 7302.9 mG or in the vicinity thereof.

In the fifth to eighth inventions and the thirteenth to sixteenth inventions, the first resonant frequency group includes a resonant frequency $E_{-2}$ at 303 Hz or in the vicinity thereof, a resonant frequency $E_{-1}$ at 445 Hz or in the vicinity thereof, a resonant frequency $E_0$ at 690 Hz or in the vicinity thereof, a resonant frequency $E_1$ at 968 Hz or in the vicinity thereof, a resonant frequency $E_2$ at 1.91 kHz or in the vicinity thereof, a resonant frequency $E_3$ at 7.0 kHz or in the vicinity thereof, a resonant frequency $E_4$ at 14.0 kHz or in the vicinity thereof, a resonant frequency $E_5$ at 40.0 kHz or in the vicinity thereof, a resonant frequency $E_6$ at 74.6 kHz or in the vicinity thereof, and a resonant frequency $E_7$ at 160.0 kHz or in the vicinity thereof, and the second resonant frequency group includes a resonant frequency $F_{-2}$ at 410 Hz or in the vicinity thereof, a resonant frequency $F_{-1}$ at 602 Hz or in the vicinity thereof, a resonant frequency $F_0$ at 932 Hz or in the vicinity thereof, a resonant frequency $F_1$ at 1.31 kHz or in the vicinity thereof, a resonant frequency $F_2$ at 2.58 kHz or in the vicinity thereof, a resonant frequency $F_3$ at 9.45 kHz or in the vicinity thereof, a resonant frequency $F_4$ at 18.94 kHz or in the vicinity thereof, a resonant frequency $F_5$ at 54.0 kHz or in the vicinity thereof, a resonant frequency $F_6$ at 100.8 kHz or in the vicinity thereof, and a resonant frequency $F_7$ at 216.0 kHz or in the vicinity thereof.

In the fifth to eighth inventions and the thirteenth to sixteenth inventions, in a preferred mode, magnetic field intensity of the static magnetic field is the intensity of a specific resonant magnetic field or magnetic field intensity in a half-value width in a resonance characteristic of the resonant magnetic field. The intensity of the resonant magnetic field is a positive integer times as large as magnetic field intensity in a base mode.

In a preferred mode, magnetic field intensities in the base mode of the resonant magnetic field at the resonant frequencies $E_i$ (i = integers -2 to 7) are, in order of the numbers of i, 5.3 mG or in the vicinity thereof, 7.4 mG or in the vicinity thereof, 12.3 mG or in the vicinity thereof, 17.3 mG or in the vicinity thereof, 31.9 mG or in the vicinity thereof, 130.6 mG or in the vicinity thereof, 323.0 mG or in the vicinity thereof, 1123.5 mG or in the vicinity thereof, 2556. 0 mG or in the vicinity thereof, and 6039.0 mG or in the vicinity thereof, and magnetic field intensities in the base mode of the resonant magnetic field at the resonant frequencies $F_j$ (j = integers -2 to 7) are, in order of the numbers of j, 7.1 mG or in the vicinity thereof, 10.4 mG or in the vicinity thereof, 16.3 mG or in the vicinity thereof, 23.5 mG or in the vicinity thereof, 47.1 mG or in the vicinity thereof, 188.5 mG or in the vicinity thereof, 463.5 mG or in the vicinity thereof, 1601.0 mG or in the vicinity thereof, 3342.5 mG or in the vicinity thereof, and 7302.9 mG or in the vicinity thereof.

## Effect of the Invention

With the configuration of the present invention, it is possible to provide a highly efficient electromagnetic field treatment method and a highly efficient electromagnetic field treatment apparatus for water that simple and easy and excellent in universality and stability.

## Brief Description of the Drawings

Fig. 1 is an explanatory diagram showing an example of a method of performing electromagnetic field treatment according to a first embodiment of the present invention;

Fig. 2 is a waveform chart of an example of an alternating current according to the first embodiment of the present invention;

Fig. 3 is an explanatory diagram showing a method of performing another kind of electromagnetic field treatment according to the first embodiment of the present invention;

Fig. 4 is a diagram of an experimental apparatus for the electromagnetic field treatment used in the first embodiment of the present invention;

Fig. 5 is a graph showing a resonance characteristic of a resonant frequency $A_1$ in the alternating current according to the first embodiment of the present invention;

Fig. 6 is a graph showing a resonance characteristic of a resonant frequency $A_2$ in the alternating current according to the first embodiment of the present invention;

Fig. 7 is a graph showing a resonance characteristic of a resonant frequency $A_3$ in the alternating current according to the first embodiment of the present invention;

Fig. 8 is a graph showing a resonance characteristic of a resonant frequency $A_4$ in the alternating current according to the first embodiment of the present invention;

Fig. 9 is a graph showing a resonance characteristic of a resonant frequency $A_5$ in the alternating current according to the first embodiment of the present invention;

Fig. 10 is a graph showing a resonance characteristic of a resonant frequency $A_6$ in the alternating current according to the first embodiment of the present invention;

Fig. 11 is a graph showing a resonance characteristic of a resonant frequency $A_{-2}$ in the alternating current according to the first embodiment of the present invention;

Fig. 12 is a graph showing a resonance characteristic of a resonant frequency $A_{-1}$ in the alternating current according to the first embodiment of the present invention;

Fig. 13 is a graph showing a resonance characteristic of a resonant frequency $A_0$ in the alternating current according to the first embodiment of the present invention;

Fig. 14 is a graph showing a resonance characteristic of a resonant frequency $B_1$ in the alternating current according to the first embodiment of the present invention;

Fig. 15 is a graph showing a resonance characteristic of a resonant frequency $B_2$ in the alternating current according to the first embodiment of the present invention;

Fig. 16 is a graph showing a resonance characteristic of a resonant frequency $B_3$ in the alternating current according to the first embodiment of the present invention;

Fig. 17 is a graph showing a resonance characteristic of a resonant frequency $B_4$ in the alternating current according to the first embodiment of the present invention;

Fig. 18 is a graph showing a resonance characteristic of a resonant frequency $B_5$ in the alternating current according to the first embodiment of the present invention;

Fig. 19 is a graph showing a resonance characteristic of a resonant frequency $B_6$ in the alternating current according to the first embodiment of the present invention;

Fig. 20 is a graph showing a resonance characteristic of a resonant frequency $B_{-2}$ in the alternating current according to the first embodiment of the present invention;

Fig. 21 is a graph showing a resonance characteristic of a resonant frequency $B_{-1}$ in the alternating current according to the first embodiment of the present invention;

Fig. 22 is a graph showing a resonance characteristic of a resonant frequency $B_0$ in the alternating current according to the first embodiment of the present invention;

Fig. 23 is a graph showing a resonance characteristic of a resonant magnetic field at the resonant frequency $A_1$ according to the first embodiment of the present invention;

Fig. 24 is a graph showing a resonance characteristic of a resonant magnetic field at the resonant frequency $A_2$ according to the first embodiment of the present invention;

Fig. 25 is a graph showing a resonance characteristic of a resonant magnetic field at the resonant frequency $A_3$ according to the first embodiment of the present invention;

Fig. 26 is a graph showing a resonance characteristic of a resonant magnetic field at the resonant frequency $A_4$ according to the first embodiment of the present invention;

Fig. 27 is a graph showing a resonance characteristic of a resonant magnetic field at the resonant frequency $A_5$ according to the first embodiment of the present invention;

Fig. 28 is a graph showing a resonance characteristic of a resonant magnetic field at the resonant frequency $A_6$ according to the first embodiment of the present invention;

Fig. 29 is a graph showing a resonance characteristic of a resonant magnetic field at the resonant frequency $A_{-2}$ according to the first embodiment of the present invention;

Fig. 30 is a graph showing a resonance characteristic of a resonant magnetic field at the resonant frequency $A_{-1}$ according to the first embodiment of the present invention;

Fig. 31 is a graph showing a resonance characteristic of a resonant magnetic field at the resonant frequency $A_0$ according to the first embodiment of the present invention;

Fig. 32 is a graph showing a resonance characteristic of a resonant magnetic field at the resonant frequency $B_1$ according to the first embodiment of the present invention;

Fig. 33 is a graph showing a resonance characteristic of a resonant magnetic field at the resonant frequency $B_2$ according to the first embodiment of the present invention;

Fig. 34 is a graph showing a resonance characteristic of a resonant magnetic field at the resonant frequency $B_3$ according to the first embodiment of the present invention;

Fig. 35 is a graph showing a resonance characteristic of a resonant magnetic field at the resonant frequency $B_4$ according to the first embodiment of the present invention;

Fig. 36 is a graph showing a resonance characteristic of a resonant magnetic field at the resonant frequency $B_5$ according to the first embodiment of the present invention;

Fig. 37 is a graph showing a resonance characteristic of a resonant magnetic field at the resonant frequency $B_6$ according to the first embodiment of the present invention;

Fig. 38 is a graph showing a resonance characteristic of a resonant magnetic field at the resonant frequency $B_{-2}$ according to the first embodiment of the present invention;

Fig. 39 is a graph showing a resonance characteristic of a resonant magnetic field at the resonant frequency $B_{-1}$

according to the first embodiment of the present invention;

Fig. 40 is a graph showing a resonance characteristic of a resonant magnetic field at the resonant frequency $B_0$ according to the first embodiment of the present invention;

Fig. 41 is a graph showing an example of a distribution of resonant magnetic fields in the first embodiment of the present invention;

Fig. 42 is a graph showing another example of the distribution of resonant magnetic fields in the first embodiment of the present invention;

Fig. 43 is a correlation diagram between a resonant frequency and a resonant magnetic field in the first embodiment of the present invention;

Fig. 44 is another correlation diagram between the resonant frequency and the resonant magnetic field in the first embodiment of the present invention;

Fig. 45 is a waveform chart showing an example of alternating currents used in electromagnetic field treatment according to a second embodiment of the present invention;

Fig. 46 is an explanatory diagram showing a method of performing another kind of electromagnetic field treatment according to a second embodiment of the present invention;

Fig. 47 is an explanatory diagram showing a method of performing still another kind of electromagnetic field treatment according to the second embodiment of the present invention;

Fig. 48 is a graph showing persistency of the effect of active treated water subjected to the electromagnetic field treatment according to the second embodiment of the present invention;

Fig. 49 is a schematic diagram for explaining the effect of the electromagnetic field treatment according to the second embodiment of the present invention;

Fig. 50 is a schematic diagram showing a method of eliminating the influence of terrestrial magnetism according to a third embodiment of the present invention;

Fig. 51 is a sectional view showing a method of magnetically shielding the terrestrial magnetism according to the third embodiment of the present invention;

Fig. 52 is a sectional view showing another method of magnetically shielding the terrestrial magnetism according to the third embodiment of the present invention;

Fig. 53 is a sectional view showing a method of demagnetizing the terrestrial magnetism according to the third embodiment of the present invention;

Fig. 54 is a schematic diagram of an electromagnetic field treatment apparatus according to a fourth embodiment of the present invention;

Fig. 55 is a circuit block diagram of generation of a specific alternating current in the electromagnetic field treatment apparatus according to the fourth embodiment of the present invention;

Fig. 56 is a diagram of a channel changing mechanism for water to be treated in a preferred mode of the fourth embodiment of the present invention;

Fig. 57 is an arrangement diagram of the electromagnetic field treatment apparatus in the preferred mode of the fourth embodiment of the present invention;

Fig. 58 is a diagram showing a schematic configuration of an electromagnetic field treatment apparatus according to a modification of the fourth embodiment of the present invention;

Fig. 59 is a graph showing a resonance characteristic of a resonant frequency $A_7$ in a unipolar current according to the fourth embodiment of the present invention;

Fig. 60 is a graph showing a resonance characteristic of a resonant frequency $B_7$ in a unipolar current according to the fourth embodiment of the present invention;

Fig. 61 is a graph showing a resonance characteristic of a resonant magnetic field at the resonant frequency $A_7$ according to the fourth embodiment of the present invention;

Fig. 62 is a graph showing a resonance characteristic of a resonant magnetic field at the resonant frequency $B_7$ according to the fourth embodiment of the present invention;

Fig. 63 is an explanatory diagram showing an example of a method of performing electromagnetic field treatment and an electromagnetic field treatment apparatus according to a fifth embodiment of the present invention;

Fig. 64 is a voltage waveform chart showing an example of an AC voltage $V_E$ according to the fifth embodiment of the present invention;

Fig. 65 is an explanatory diagram showing a method of performing another kind of electromagnetic field treatment according to the fifth embodiment of the present invention;

Fig. 66 is a diagram of an experimental apparatus for the electromagnetic field treatment used in the fifth embodiment of the present invention;

Fig. 67 is a graph showing an example of a resonance characteristic of a resonant frequency at the AC voltage $V_E$ according to the fifth embodiment of the present invention;

Fig. 68 is a graph showing an example of a distribution of resonant magnetic fields in the fifth embodiment of the present invention;

Fig. 69 is a correlation diagram between a resonant frequency and a resonant electromagnetic field in the fifth embodiment of the present invention;

Fig. 70 is an explanatory diagram showing an example of a method of performing electromagnetic field treatment and an electromagnetic field treatment apparatus according to a sixth embodiment of the present invention;

Fig. 71 is a waveform chart showing an example of an AC voltage used for electromagnetic field treatment according to a seventh embodiment of the present invention;

Fig. 72 is an explanatory diagram showing a method of performing another kind of electromagnetic field treatment according to the seventh embodiment of the present invention;

Fig. 73 is a graph schematically showing persistency of the effect of active treated water subjected to the electromagnetic field treatment according to the seventh embodiment of the present invention;

Fig. 74 is an explanatory diagram showing a method of shielding an electromagnetic field from the outside according to an eighth embodiment of the present invention;

Fig. 75 is another explanatory diagram showing the method of shielding an electromagnetic field from the outside according to the eighth embodiment of the present invention;

Fig. 76 is a voltage waveform chart showing a modification of a voltage or generating an oscillating electric field in the fifth to eighth embodiments of the present invention;

Fig. 77 is a voltage waveform chart showing a modification of a voltage for generating an electromagnetic field in the fifth to eighth embodiments of the present invention; and

Fig. 78 is a voltage waveform chart showing another modification of the voltage for generating an electromagnetic field in the fifth to eighth embodiments of the present invention.

Best Mode for carrying out the Invention

Several embodiments of the present invention are explained below with reference to the drawings.

[First Embodiment]

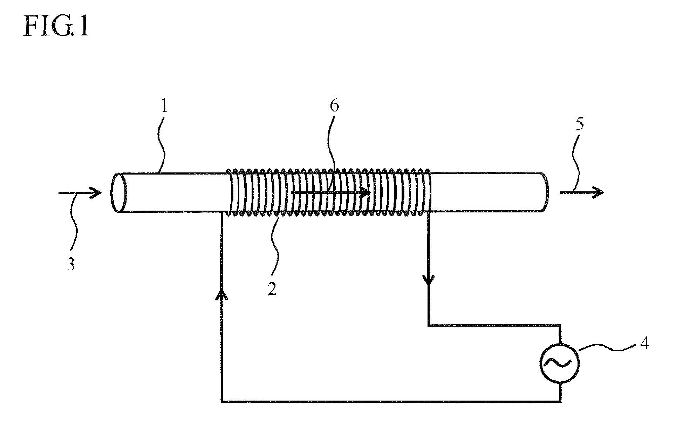

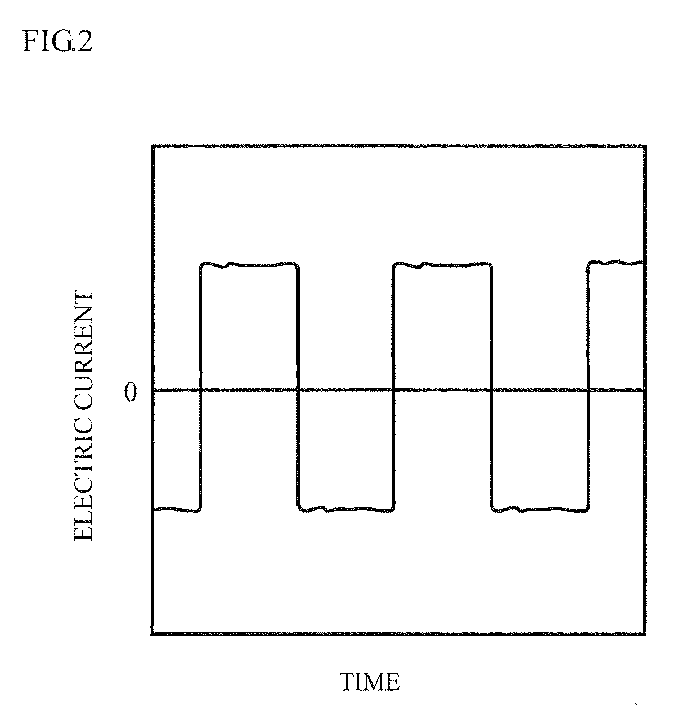

Fig. 1 is an explanatory diagram of an example of a method of subjecting water to electromagnetic field treatment in this embodiment. Fig. 2 is a current waveform chart showing an example of an alternating current as an electromagnetic field inducing current. As shown in Fig. 1, a coil 2 is provided on the outer side of a water pipe 1 of, for example, vinyl chloride, water to be treated 3 such as tap water or drainage is fed through the water pipe 1, and an alternating current of a resonant frequency as a specific frequency described later is supplied to the coil 2 through an AC power supply 4. As a waveform of the alternating current, a waveform with a steep temporal change such as a square waveform shown in Fig. 2 is suitable.

Moreover, as described in detail later, at the resonant frequency, an alternating peak current thereof is set to a specific current value. An induced magnetic field induced in the coil 2 by this specific current value is hereinafter referred to as resonant magnetic field. An oscillating electromagnetic field induced by the alternating current of the specific frequency in this way is imparted to the water to be treated 3, whereby active treated water 5 highly efficiently activated by the oscillating electromagnetic field is obtained as shown in Fig. 1.

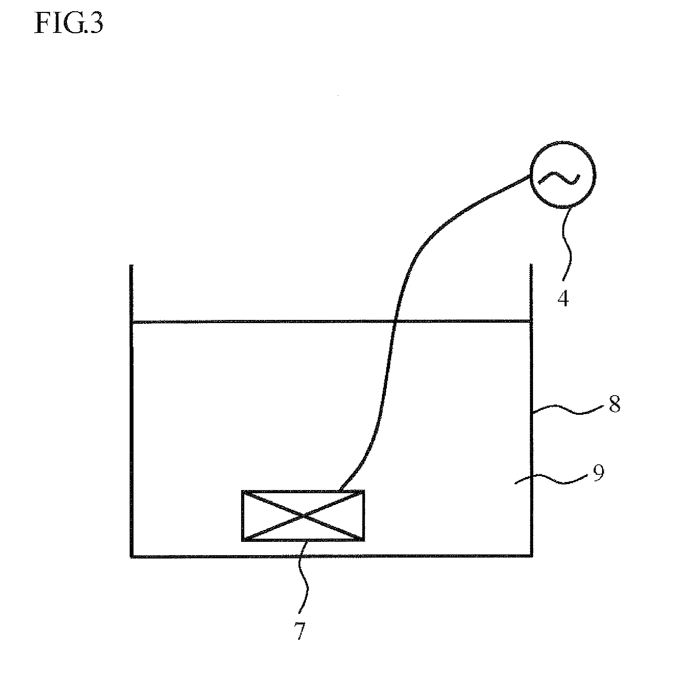

Alternatively, as shown in Fig. 3, an electromagnetic-field imparting unit 7 including a coil connected to the AC power supply 4 is immersed in pooled water 9. In this state, the alternating current of the resonant frequency as the specific frequency described above is supplied to the electromagnetic-field imparting unit 7. Alternatively at this resonant frequency, an alternating peak current thereof is set to a specific current value. In this way, an oscillating electromagnetic field induced by the alternating current of the specific frequency is imparted to the pooled water 9, whereby the pooled water 9 is activated by the oscillating electromagnetic field and changed to active treated water.

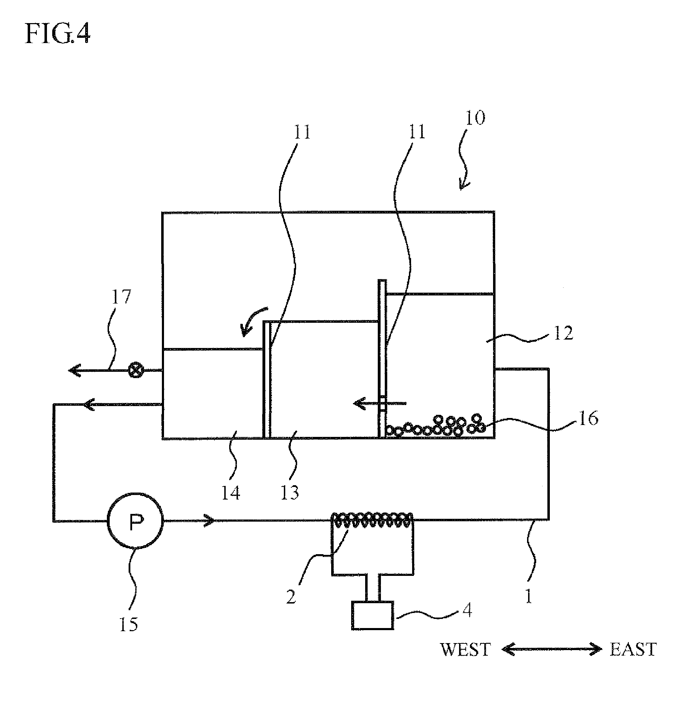

The resonant frequency and the oscillating magnetic field described above are explained in detail below. The inventor performed a detailed experiment concerning a dissolving characteristic of calcium phosphate ($Ca_3(PO_4)_2$) contained in active treated water generated by supplying alternating currents of various frequencies to a coil having a known electromagnetic characteristic and applying electromagnetic field treatment to tap water. In this experiment, specifically, an experimental apparatus for electromagnetic treatment schematically shown in Fig. 4 was used.

In this experimental apparatus, the inside of an experiment tank 10 is divided into three reservoir chambers 12, 13, and 14 by a partition plate 11. As water to be treated, room-temperature (about 20°C) tap water having a pH value of about 7 passed through ion exchange resin is used. This ion exchange water is circulated through the reservoir chambers 12, 13, and 14 in this order by a pump 15 provided along the water pipe 1. The coil 2 is wound around the outer side of the water pipe 1 on a downstream side of the pump 15 and connected to the AC power supply 4. This coil 2 is formed by uniformly winding a copper wire coil thirty-four times over the length of 14.4 cm of a pipe in a cylindrical shape at a winding diameter of 3.5 cmϕ. At the bottom of the reservoir chamber 12, calcium phosphate ($Ca_3(PO_4)_2$) 16

hardly soluble in normal water is placed in a powder state. A water sampling pipe 17 communicates with the reservoir chamber 14.

In the experiment, since the influence of terrestrial magnetism appears in an experiment result as described later, the axis of the coil 2 is set in an East to West direction. Since the influence of ions of calcium, magnesium, and the like in the tap water also appears in the result, the water to be treated is the tap water passed through the ion exchange resin.

In such an experimental apparatus, a frequency and an electric current of the alternating current of the square wave are variable in the AC power supply 4. Therefore, under conditions of frequencies and peak currents of various alternating currents, electromagnetic field treatment was applied to the tap water to change the tap water into active treated water and the density of mono calcium phosphate ion $(Ca(HPO_4))^{2-}$ in the active treated water in the reservoir chamber 14 was measured. The calcium phosphate 16 is dissolved by the active treated water according to chemical formula (1).

[chemical formula 1] $Ca_3(PO_4)_2+2H^+ \rightleftarrows 3Ca^{2+}+2(HPO_4)^{2-}$ (1)

In this way, solubility of the calcium phosphate 16 by the active treated water, i.e., dissolving ability of the active treated water was checked in detail. A pH value of the active treated water was measured. A frequency of the alternating current was checked in a range of 140 Hz to 115 kHz.

The measurement of the density of the mono calcium phosphate ion was performed by, after performing the electromagnetic field treatment for a fixed time (about 10 hours), opening a valve of the sampling pipe 17 to sample the active treated water in the reservoir chamber 14 and according to a publicly-known precipitation titration method using silver nitrate ($AgNO_3$) as a reference solution and using potassium chromate ($K_2CrO_4$) as an indicator.

As a result, it was fond that the solubility of the calcium phosphate 16 specifically increased in a specific frequency band of the alternating current as described above. It was also found that the solubility of the calcium phosphate 16 specifically increased at a specific current value of the alternating current. Such a specific frequency and such a specific current value in the alternating current are collectively explained below as a resonant frequency and a resonant magnetic field.

{Resonant frequency}

In the specific frequency, a plurality of two kinds of resonant frequencies having different characteristics clarified in explanation later are present. Therefore, these resonant frequencies are classified into a first resonant frequency group and a second resonant frequency group.

(First resonant frequency group)

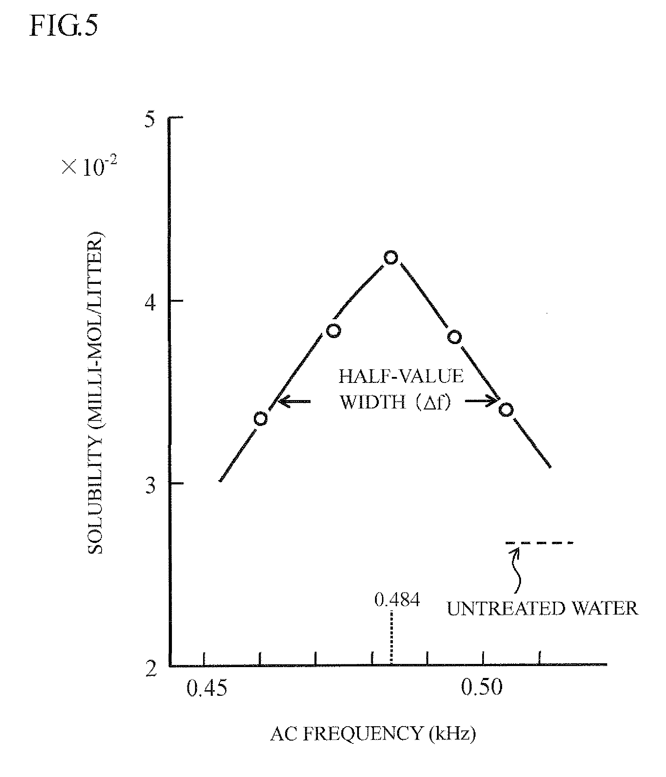

In this first resonant frequency group, as shown in Figs. 5 to 10, at least plural resonant frequencies $A_i$ (i = integers 1 to 6) are present. Figs. 5 to 10 are diagrams showing resonance characteristics of resonant frequencies in oscillating electromagnetic field treatment. In a frequency band in which the solubility of the calcium phosphate 16 shows specificity, a frequency of the alternating current fed to the coil 2 is plotted on the abscissa and the solubility of the calcium phosphate 16 is plotted on the ordinate.

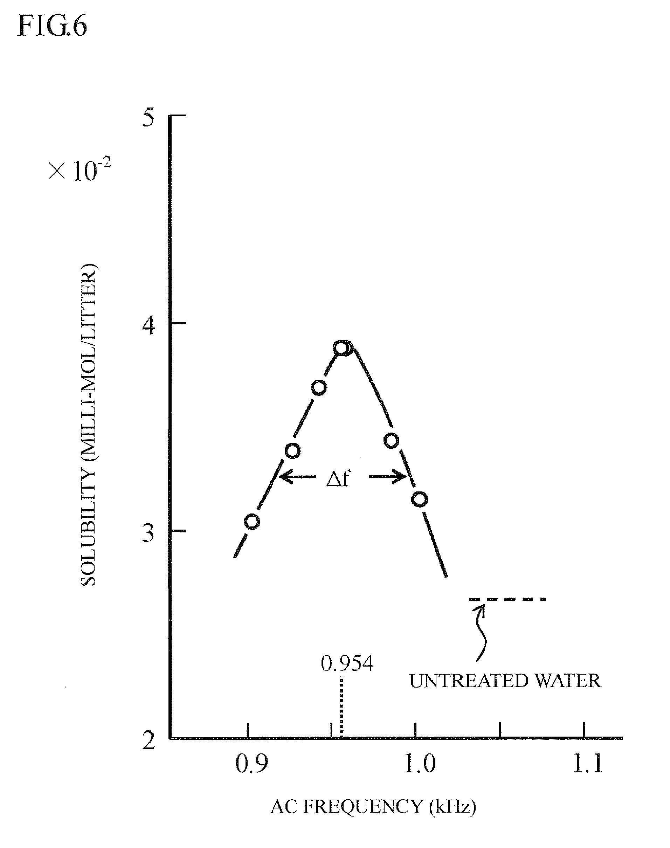

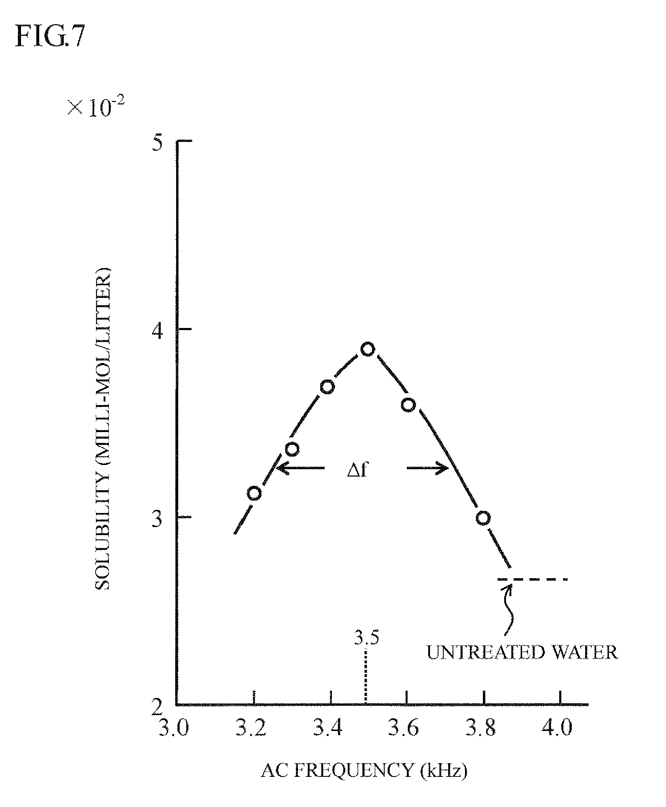

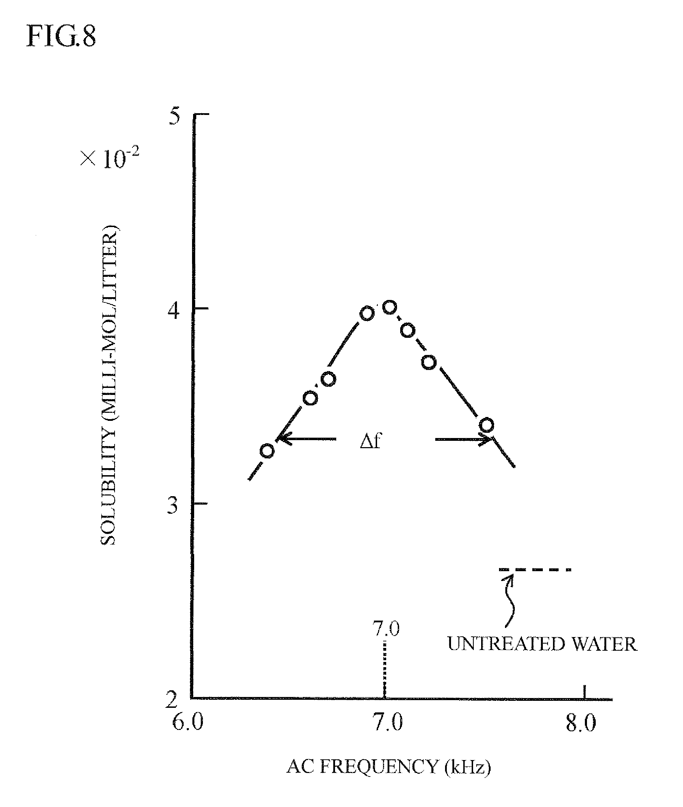

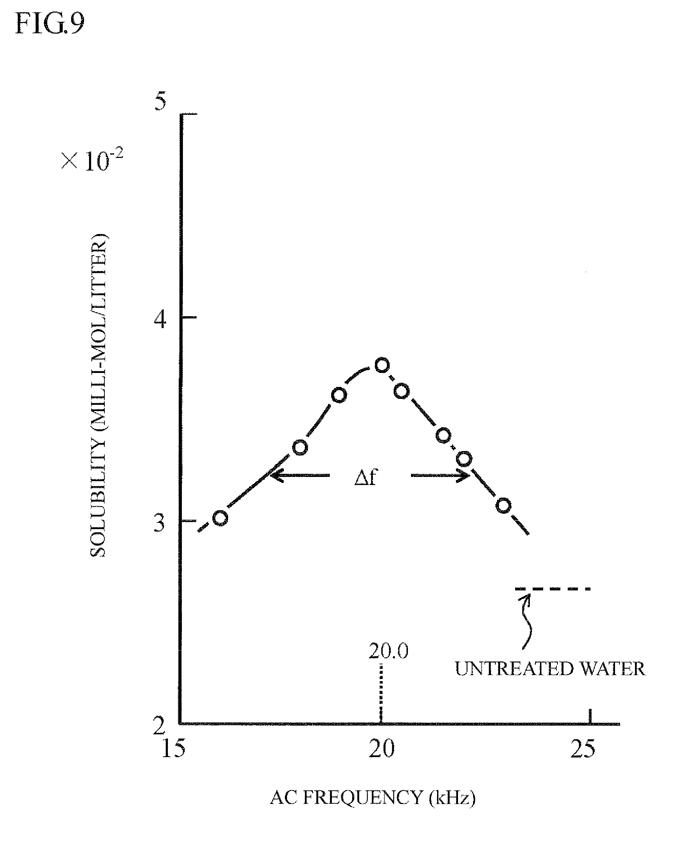

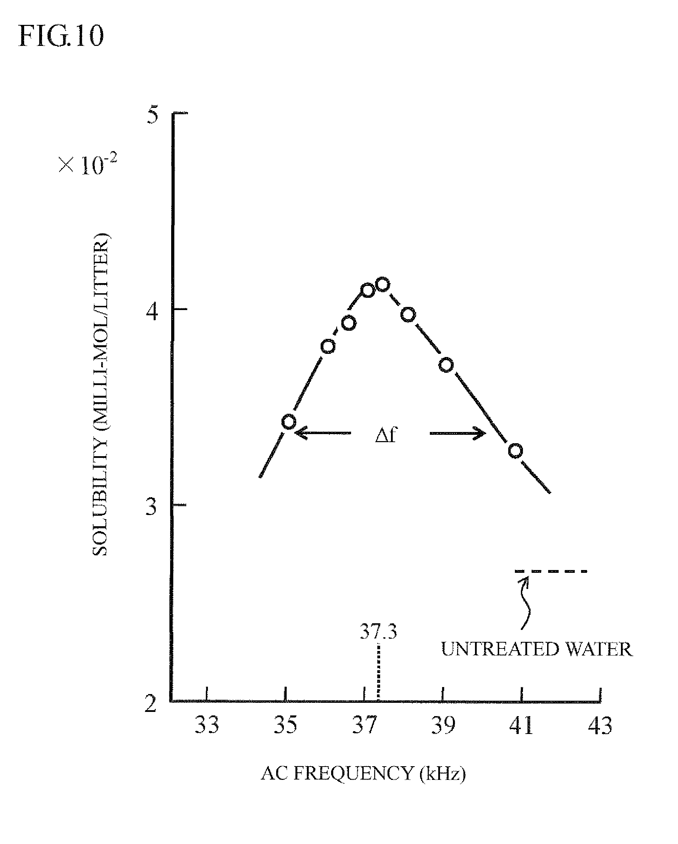

From Fig. 5, a resonant frequency $A_1$ is 484 Hz or in the vicinity thereof and a range of a half-value width (Δf) thereof is 462 to 504 Hz. The half-value width (Δf) is a frequency band in which the solubility of the calcium phosphate 16 is equal to or larger than a half of a difference between a maximum value of the solubility and solubility in the case of untreated water in a resonant frequency band having this specificity. Similarly, from Fig. 6, a resonant frequency $A_2$ is 954 Hz or in the vicinity thereof and a range of a half-value width (Δf) thereof is 915 to 995 Hz. From Fig. 7, a resonant frequency $A_3$ is 3.5 kHz or in the vicinity thereof and a range of a half-value width (Δf) thereof is 3.25 to 3.72 kHz. From Fig. 8, a resonant frequency $A_4$ is 7.0 kHz or in the vicinity thereof and a range of a half-value width (Δf) thereof is 6.46 to 7.54 kHz. From Fig. 9, a resonant frequency $A_5$ is 20.0 kHz or in the vicinity thereof and a range of a half-value width (Δf) thereof is 17.3 to 22.4 kHz. From Fig. 10, a resonant frequency $A_6$ is 37.3 kHz or in the vicinity thereof and a range of a half-value width (Δf) thereof is 34.9 to 40.3 kHz.

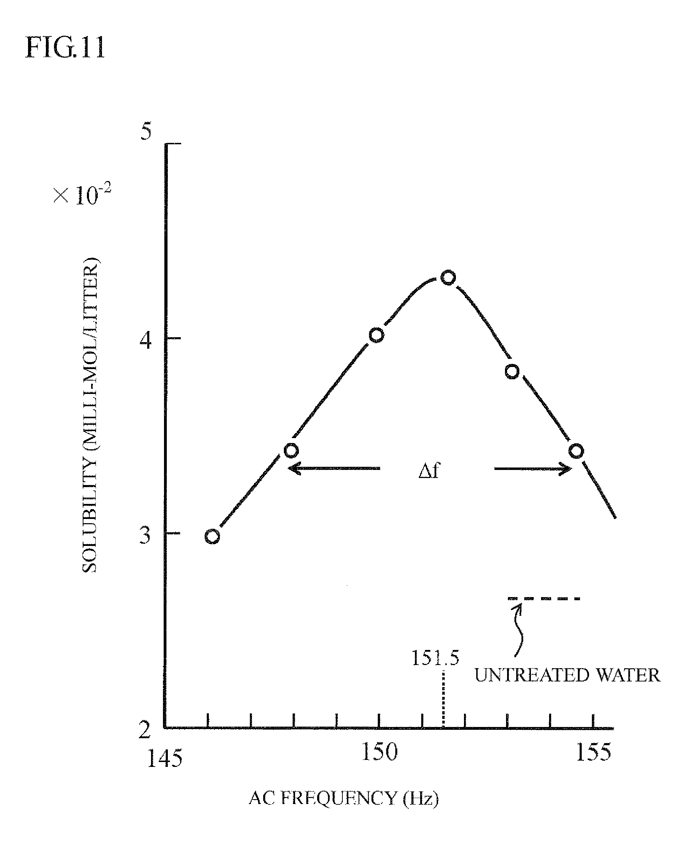

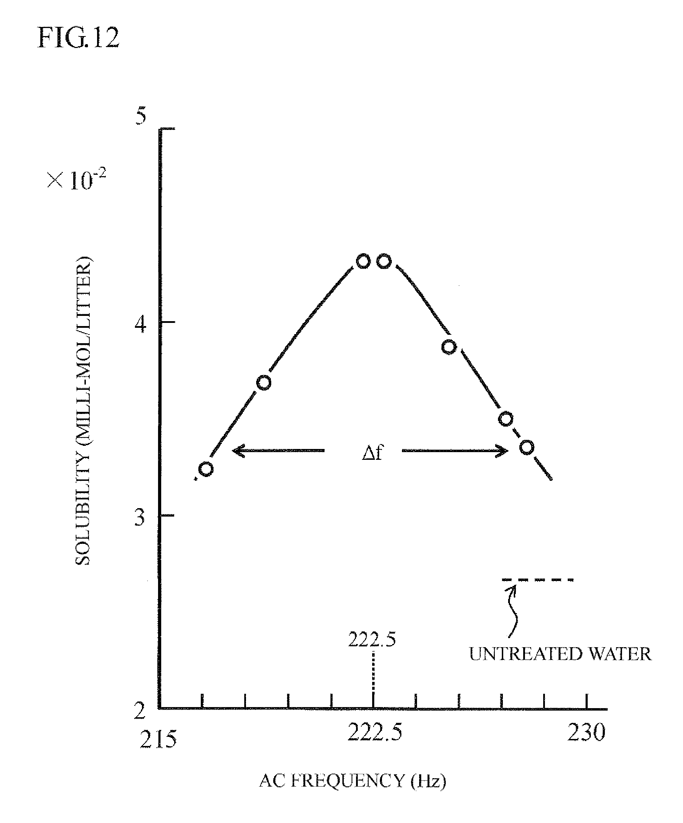

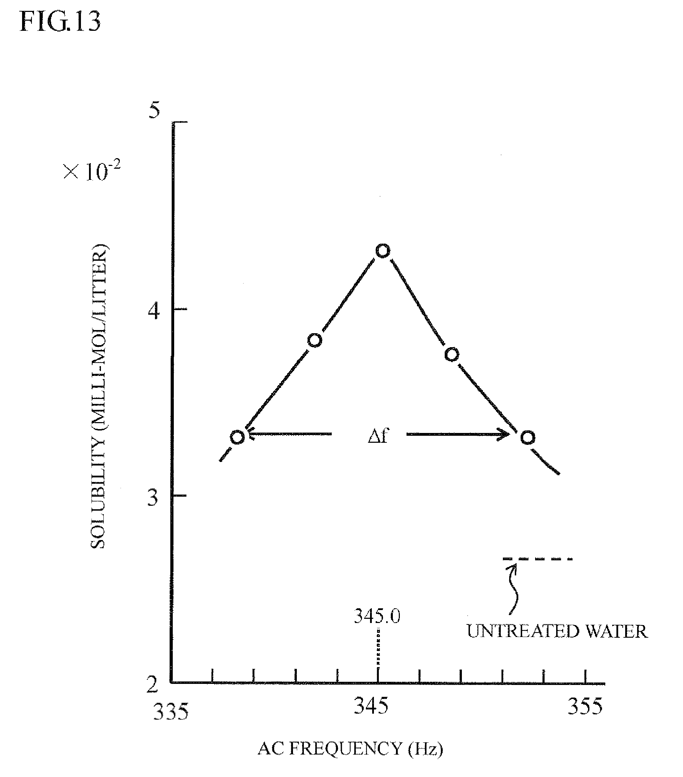

Moreover, in this first resonant frequency group, as shown in Figs. 11 to 13, resonant frequencies $A_i$ (i = integers -2 to 0) are present. From Fig. 11, a resonant frequency $A_{-2}$ is 151.5 Hz or in the vicinity thereof and a range of a half-value width (Δf) thereof is 147.5 to 154.7 Hz. From Fig. 12, a resonant frequency $A_{-1}$ is 222.5 Hz or in the vicinity thereof and a range of a half-value width (Δf) thereof is 217.2 to 228.1 Hz. From Fig. 13, a resonant frequency $A_0$ is 345.0 Hz or in the vicinity thereof and a range of a half-value width (Δf) thereof is 338.5 to 351.0 Hz.

(Second resonant frequency group)

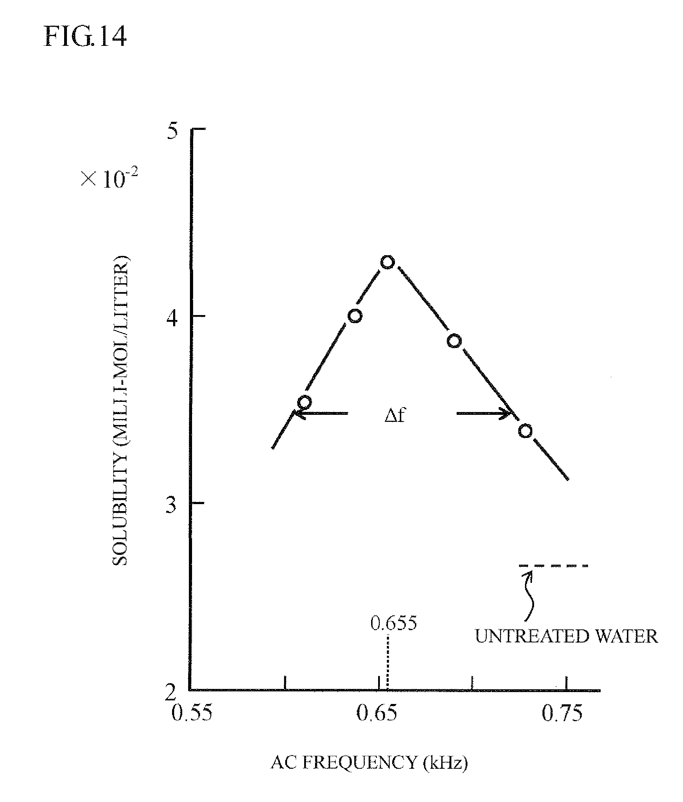

In the second frequency group, as shown in Figs. 14 to 19 and the like, at least plural resonant frequencies $B_i$ (i = integers 1 to 6) are present. In these figures, as in the case of Figs. 5 to 13, in a frequency band in which the solubility shows specificity, a frequency of the alternating current is plotted on the abscissa and the solubility is plotted on the ordinate.

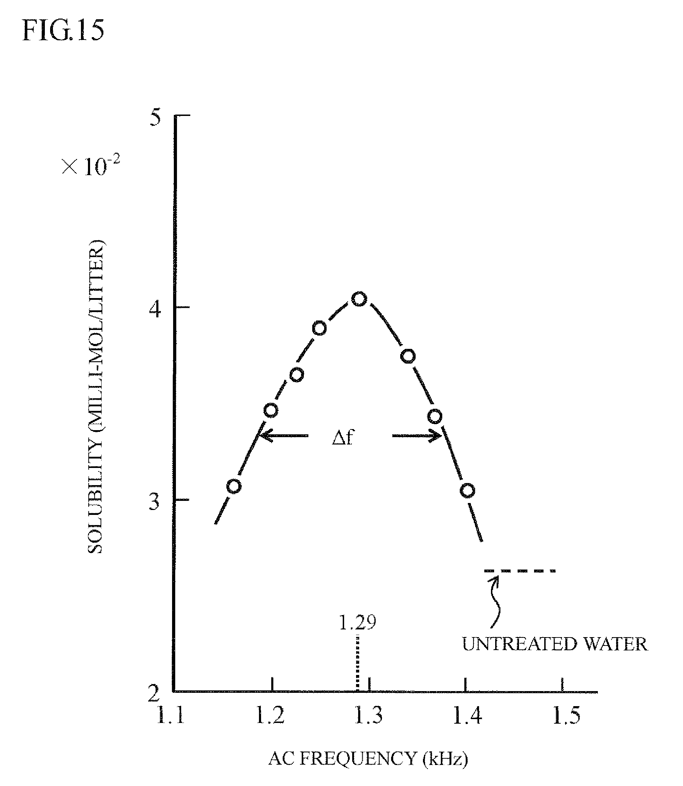

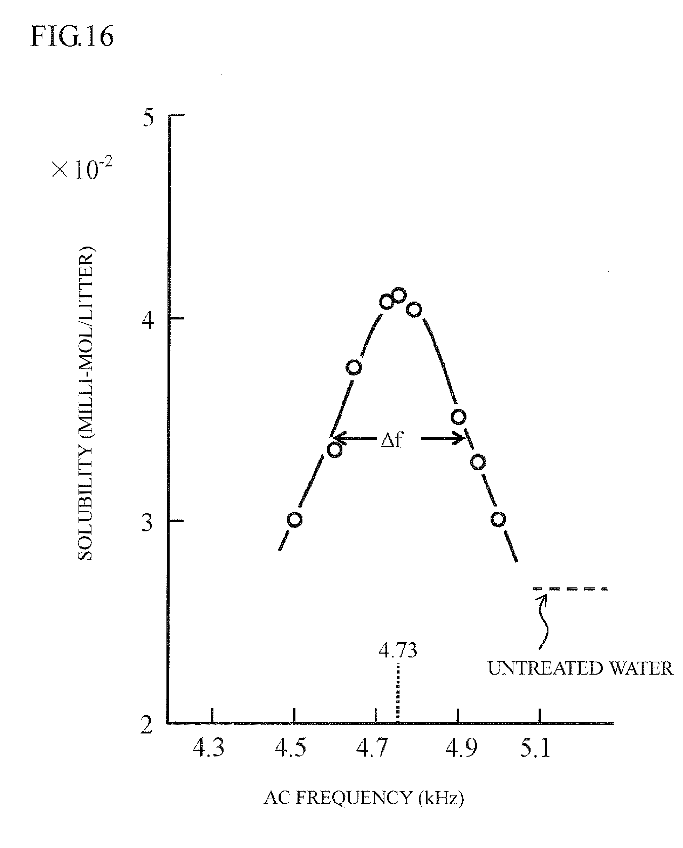

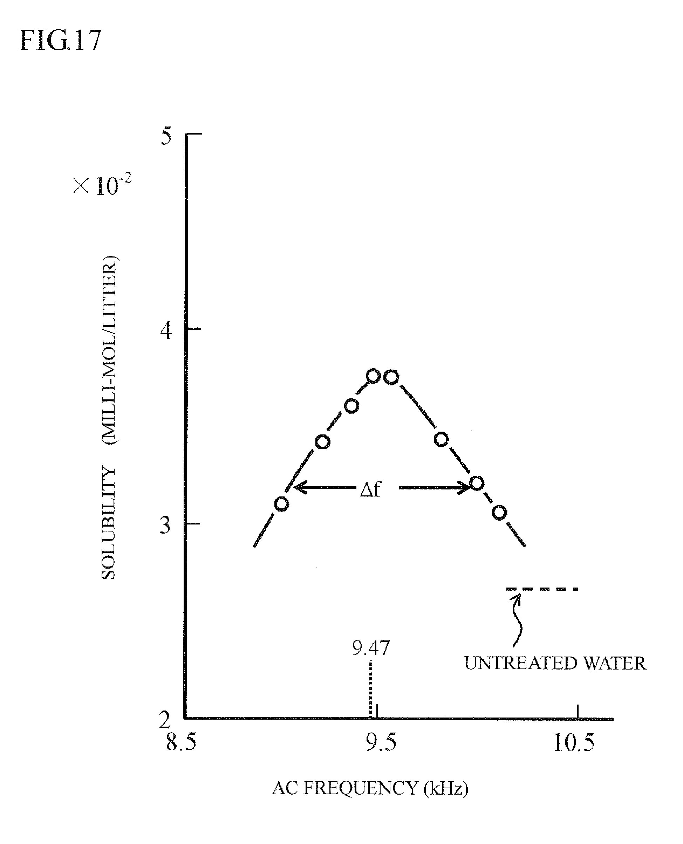

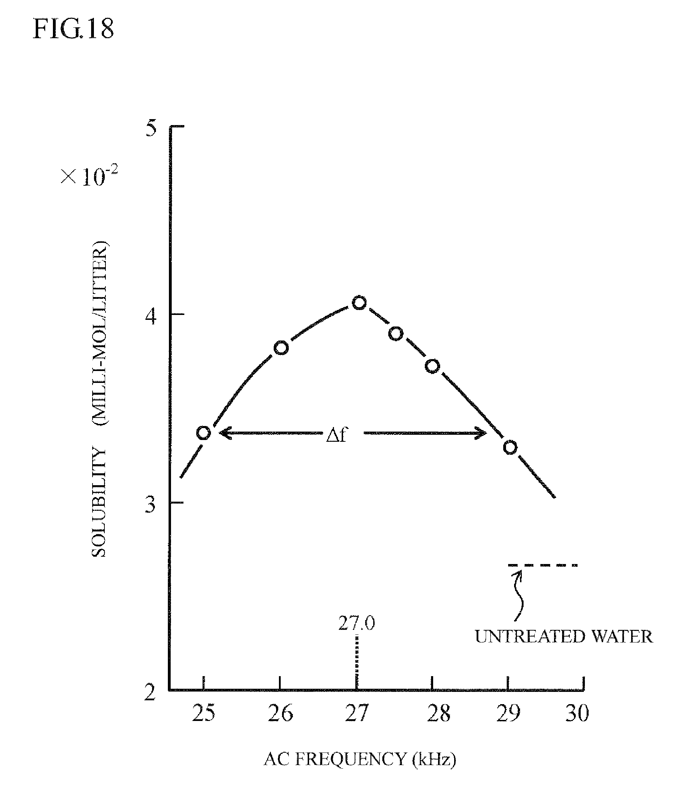

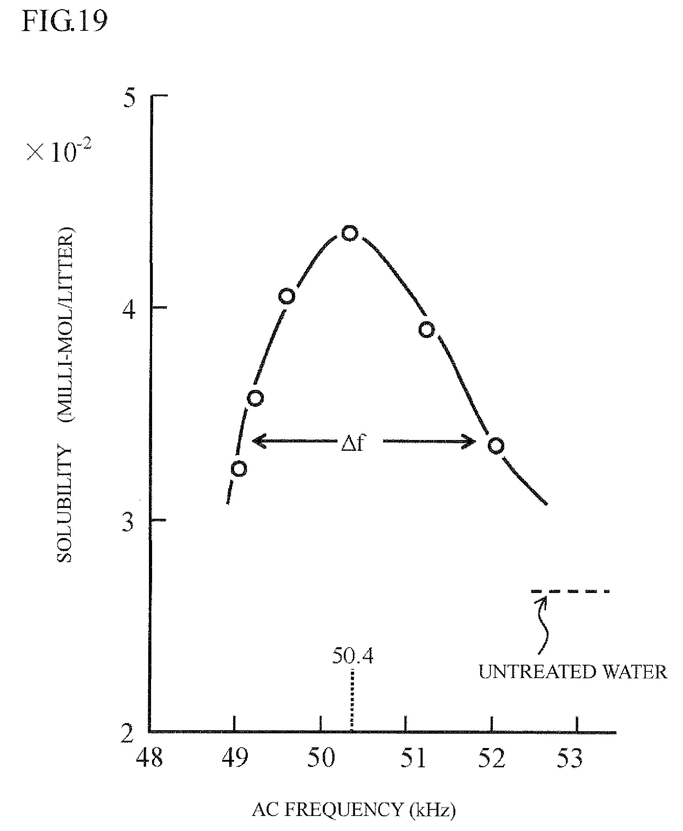

From Fig. 14, a resonant frequency $B_1$ is 655 Hz or in the vicinity thereof and a range of a half-value width (Δf) thereof is 606 to 722 Hz. Similarly, from Fig. 15, a resonant frequency $B_2$ is 1.29 kHz or in the vicinity thereof and a range of a half-value width (Δf) thereof is 1.19 to 1.38 kHz. From Fig. 16, a resonant frequency $B_3$ is 4.73 kHz or in the vicinity thereof and a range of a half-value width (Δf) thereof is 4.59 to 4.93 kHz. From Fig. 17, a resonant frequency $B_4$ is 9.47 kHz or in the vicinity thereof and a range of a half-value width (Δf) thereof is 9.06 to 9.98 kHz. From Fig. 18, a resonant frequency $B_5$ is 27.0 kHz or in the vicinity thereof and a range of a half-value width (Δf) thereof is 25.0 to 28.9 kHz. From Fig. 19, a resonant frequency $B_6$ is 50.4 kHz or in the vicinity thereof and a range of a half-value width (Δf) thereof is 49.1 to 51.8 kHz.

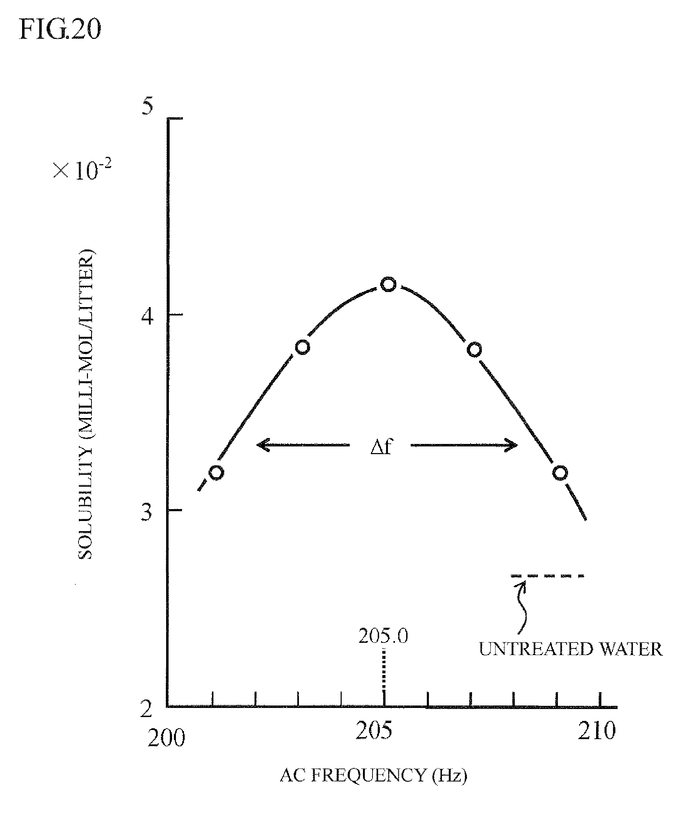

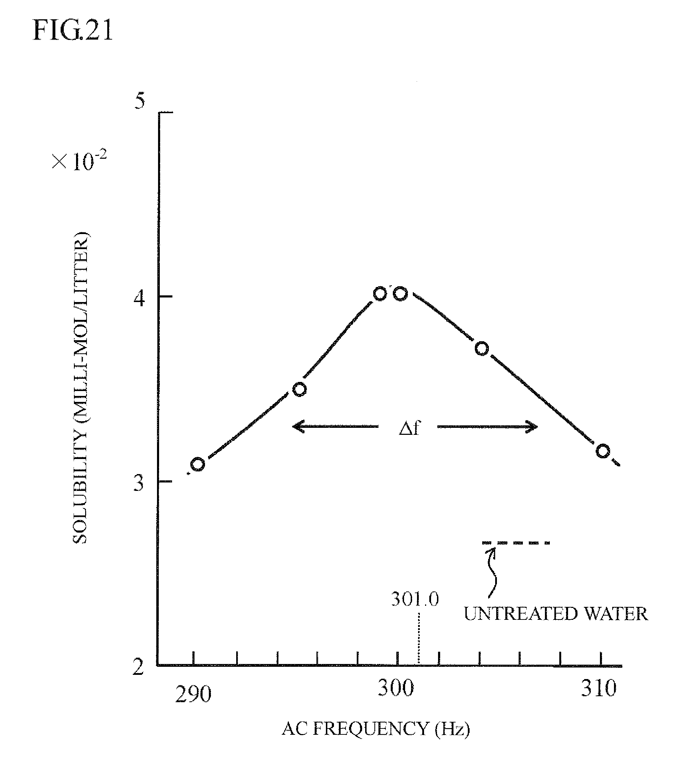

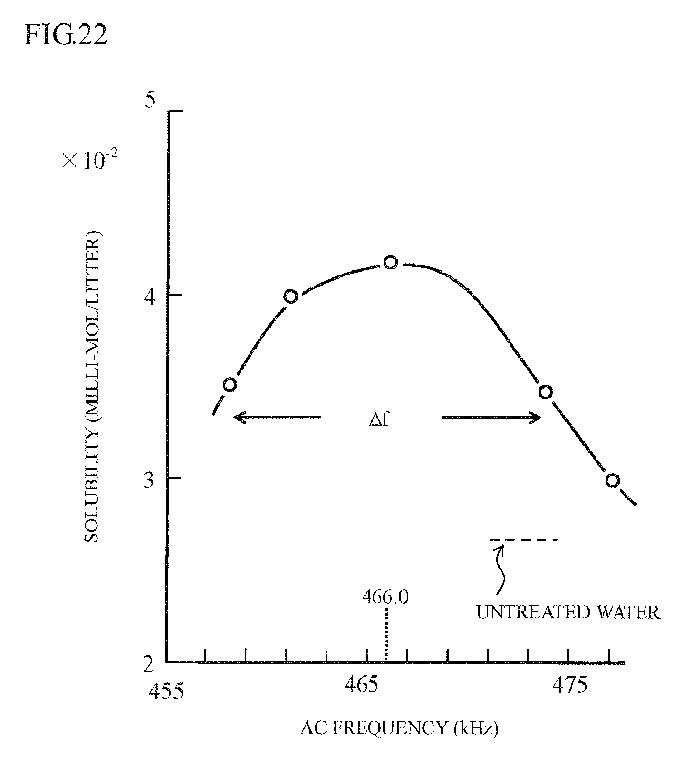

Moreover, in this second resonant frequency group, as shown in Figs. 20 to 22, resonant frequencies $B_i$ (i = integers -2 to 0) are present. From Fig. 20, a resonant frequency $B_{-2}$ is 205.0 Hz or in the vicinity thereof and a range of a half-value width (Δf) thereof is 201.5 to 208.5 Hz. From Fig. 21, a resonant frequency $B_{-1}$ is 301.0 Hz or in the vicinity thereof and a range of a half-value width (Δf) thereof is 293.0 to 310.5 Hz. From Fig. 22, a resonant frequency $B_0$ is 466.0 Hz or in the vicinity thereof and a range of a half-value width (Δf) thereof is 457.2 to 474.6 Hz.

As the vicinity of the resonant frequency $A_i$ and the resonant frequency $B_i$ (i = integers -2 to 6), about ±1.2% of the numerical values of the resonant frequencies are preferable. When the resonant frequencies are in this range, solubility equal to or higher than 80% of the solubility at the resonant frequencies is obtained. There is no problem in practical use for generation of function water.

The first resonant frequency group and the second resonant frequency group seem to have certain regularities, although a reason therefor is unclear at present. For example, a ratio ($B_i/A_i$) of the resonant frequency $B_i$ and the resonant frequency $A_i$ is a fixed value of about 1.35 when i is integers -2 to 6. This value is represented as a mass ratio of hydrogen aquc-ions and hydroxyl aquo-ions. However, it is unclear for the time being whether this is true or not. When these regularities are taken into account, it is assumed that 80 kHz is present as the resonant frequency $A_7$ in the first resonant frequency group and 108 kHz is present as $B_7$ in the second resonant frequency group. However, in these cases, since the oscillation is too high and origination tends to occur, resonant frequencies cannot be measured.

However, as described later, when an electric current of a positive square pulse waveform is sued instead of the alternating current of the square waveform shown in Fig. 2, 80.0 kHz of the resonant frequency $A_7$ and 108.0 kHz of the resonant frequency $B_7$ are measured.

In the first embodiment, an alternating current of any one frequency selected out of the first resonant frequency group or the second resonant frequency group is supplied from the AC power supply 4 to the coil 2 and an oscillating electromagnetic field is imparted to the water to be treated 3 in the water pipe 1. Consequently, the water to be treated 3 is simply and easily and efficiently activated.

{Resonant magnetic field}

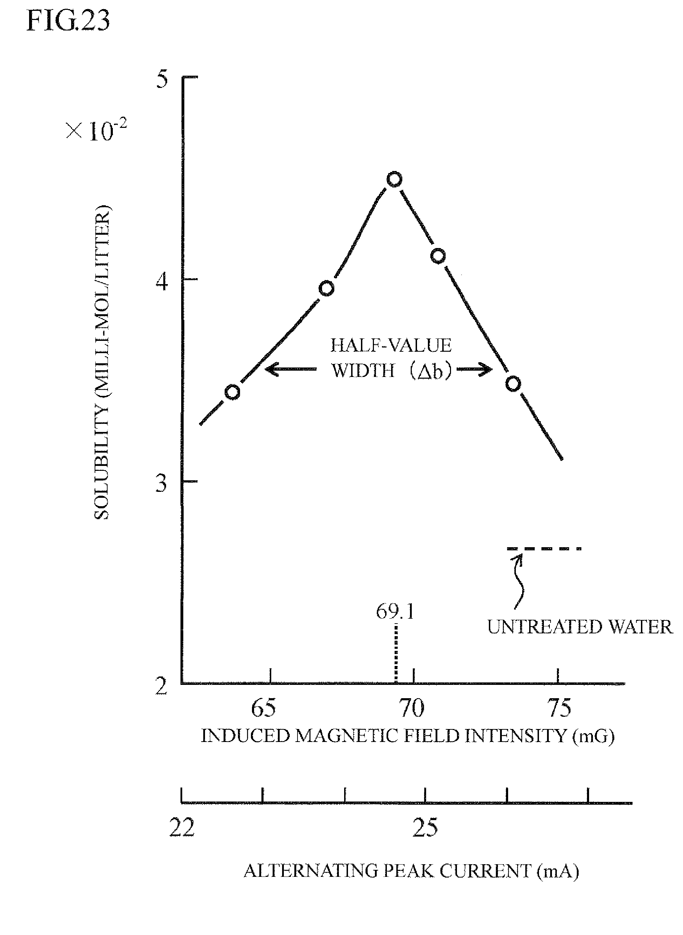

At the resonant frequencies, as shown in Figs. 23 to 40, moreover, the solubility of the calcium phosphate specifically increases according to a specific current value. Figs. 23 to 40 are diagrams showing resonance characteristics of resonant magnetic fields at the resonant frequencies. At a specific current value where the solubility of the calcium phosphate 16 shows specificity, an alternating peak current fed to the coil 2 and an induced magnetic field intensity at that point are plotted on the abscissa and the solubility of the calcium phosphate 6 is plotted on the ordinate. The induced magnetic field intensity is peak intensity of a magnetic field 6 that is induced and oscillates along a direction in which the water to be treated 3 flows in the coil 2 in association with an alternative current peak current.

From Fig. 23, at the resonant frequency $A_1$, the solubility specifically increases when the alternating peak current is 23.5 mA (milliamperes) and the induced magnetic field intensity at that point is 69.1 mG (milli-gausses) or in the vicinity thereof. An induced magnetic field at that point is a resonant magnetic field and a range of a half-value width (Δb) thereof is 64.1 to 72. 8 mG. This half-value width (Δb) is an area of induced magnetic field intensity where the solubility of the calcium phosphate 16 is equal to or larger than 1/2 of a difference between a maximum value of the solubility and solubility in the case of untreated water in a resonant magnetic field having this specificity.

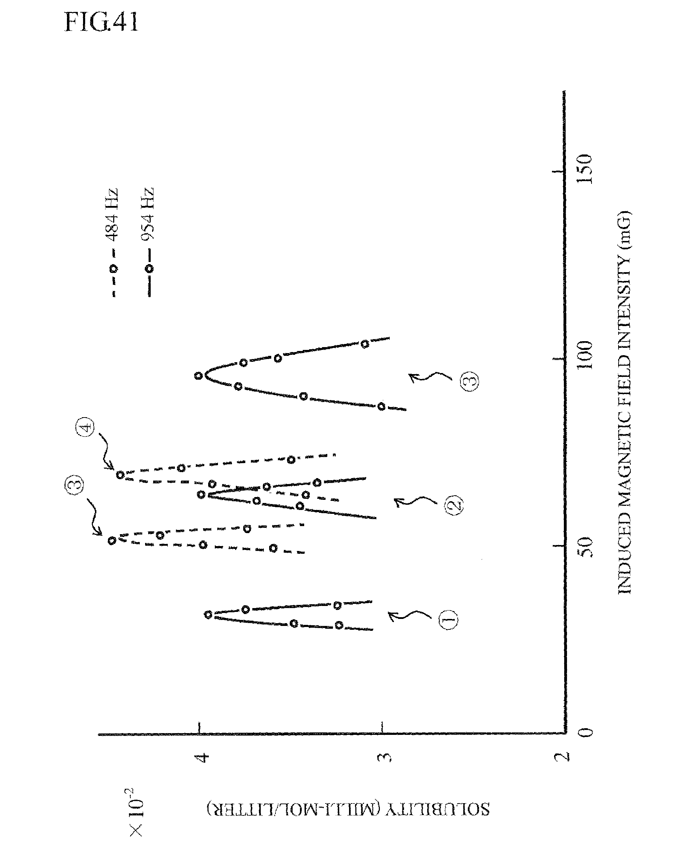

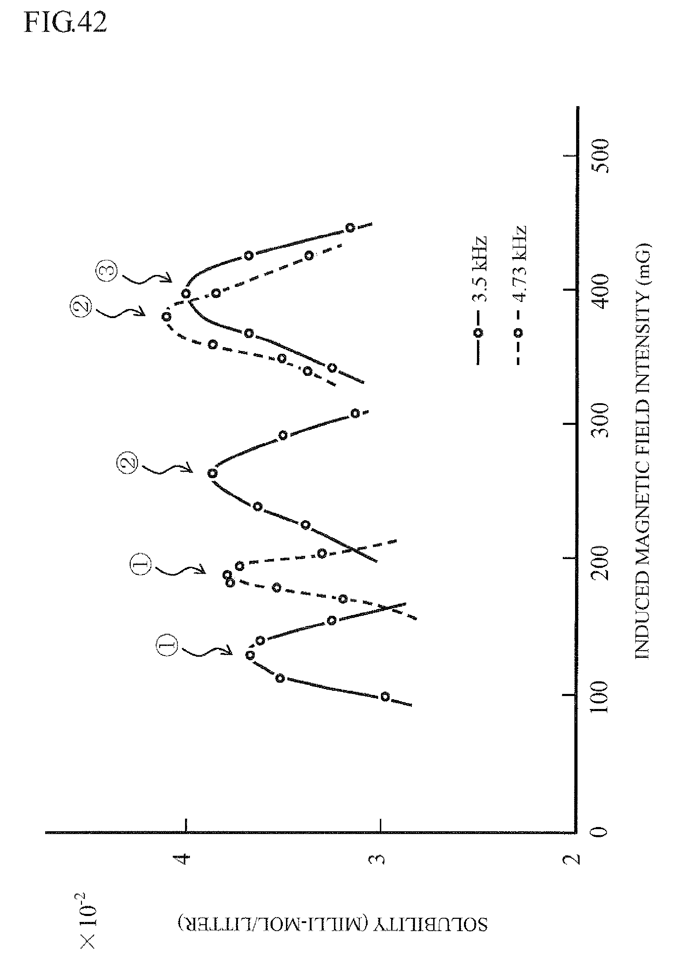

A large number of such resonant magnetic fields are present in the resonant frequency $A_1$. The resonant magnetic fields are explained with reference to Figs. 41 and 42. Figs. 41 and 42 are diagrams showing, with induced magnetic field intensity plotted on the abscissa and solubility of the calcium phosphate 16 plotted on the ordinate, a distribution of resonant magnetic fields. Figs. 41 and 42 are examples showing a state in which a large number of resonant magnetic fields in which solubility specifically increases are present. Broken lines in Fig. 41 indicate two resonant magnetic fields in the case of the resonant frequency $A_1$. Solid lines in the figure indicate three resonant magnetic fields in the case of the resonant frequency $A_2$. A broken line (4) is the same as a line shown in Fig. 23. As described later in detail, the resonant magnetic field is a resonant magnetic field in a quadruple mode. A broken line (3) indicates a resonant magnetic field in a similar triple mode. Similarly, solid lines (1), (2), and (3) in the figure indicate resonant magnetic fields in a base mode, a double mode, and a triple mode, respectively, in the case of the resonant frequency $A_2$.
Solid lines in Fig. 42 indicate three resonant magnetic fields in the case of the resonant frequency $A_3$. Broken lines in the figure indicate two resonant magnetic fields in the case of the resonant frequency $B_3$. Solid lines (1), (2), and (3) in the figure indicate a base mode, a double mode, and a triple mode, respectively, in the case of the resonant frequency $A_3$. Similarly, broken lines (1) and (2) are a base mode and a double mode, respectively, in the case of the resonant frequency $B_3$.
Therefore, at the resonant frequency $A_1$, although the experimental apparatus for electromagnetic field treatment could not be measured this time because an alternating peak current is too small, a resonant magnetic field in the base mode is present at 17.3 mG, which is a quarter of induced magnetic field intensity in the resonant magnetic field in the quadruple mode, or in the vicinity thereof and a large number of resonant magnetic fields in an n-times mode of the base mode are present. Here, n is a positive integer.

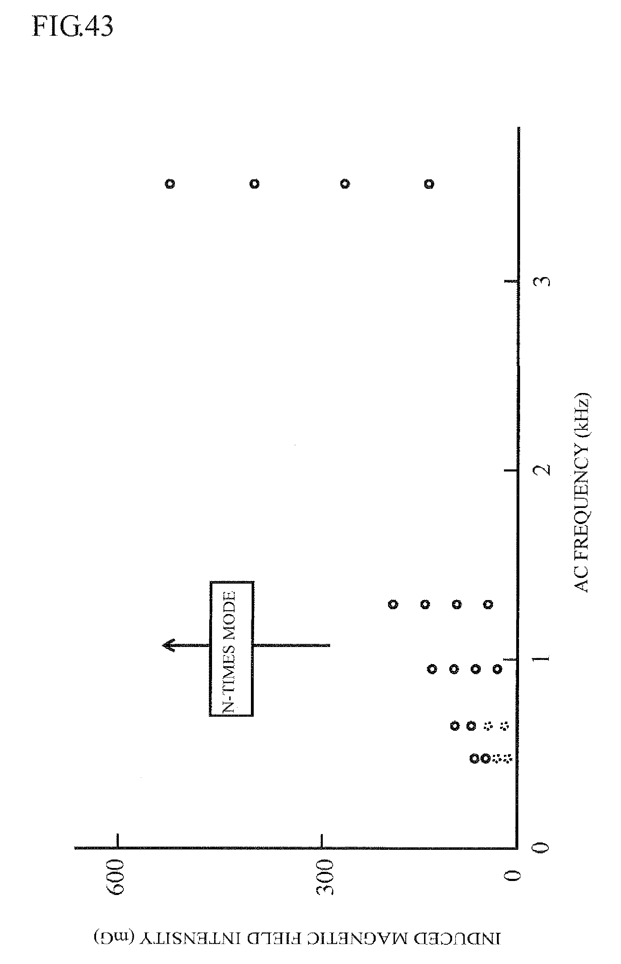

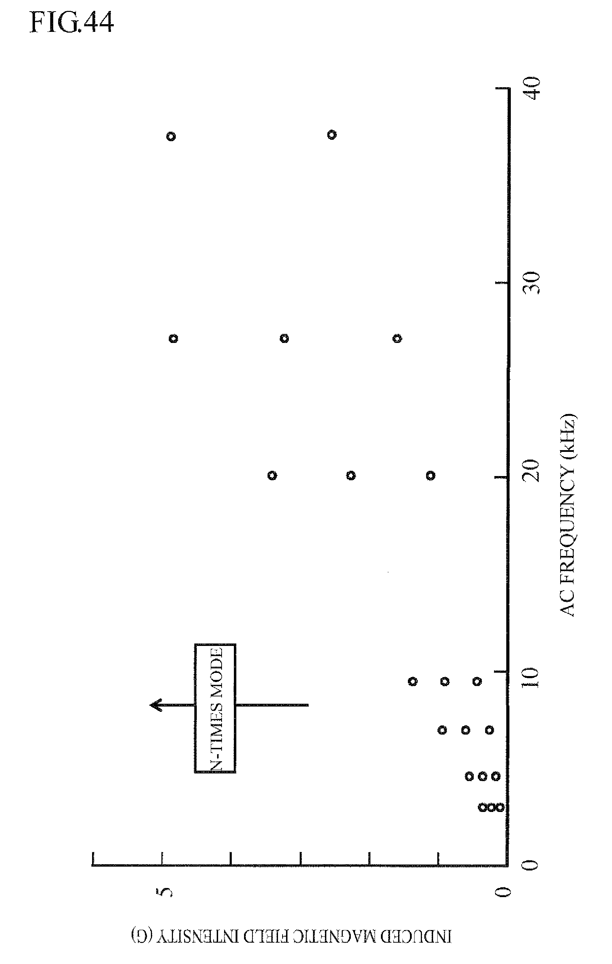

The presence of the large number of resonant magnetic fields in the n-times mode indicated at the resonant frequency $A_1$ is, as shown in Figs. 43 and 44, common to all the first and second resonant frequency groups described above. Figs. 43 and 44 are correlation diagrams of a resonant frequency and a resonant magnetic field. An AC frequency is plotted on the abscissa and induced magnetic field intensity in a resonant magnetic field is plotted on the ordinate. In the figure, circles indicate induced magnetic field intensities measured by the experimental apparatus. In the figure, modes up to the quadruple mode are shown and further modes are not shown. However, at the resonant frequencies $A_3$ and $B_3$ that are easily measured by this experimental apparatus, resonant magnetic fields in the n-times mode five or more times as large as the base mode are confirmed. Induced magnetic field intensities that cannot be measured because the alternating peak current is too small near the base mode are indicated by broken circles.

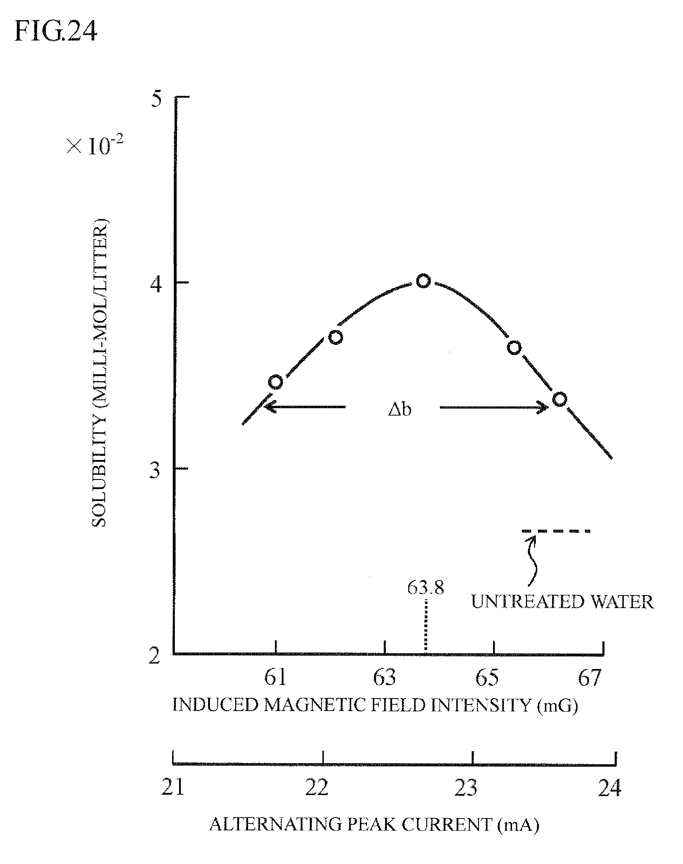

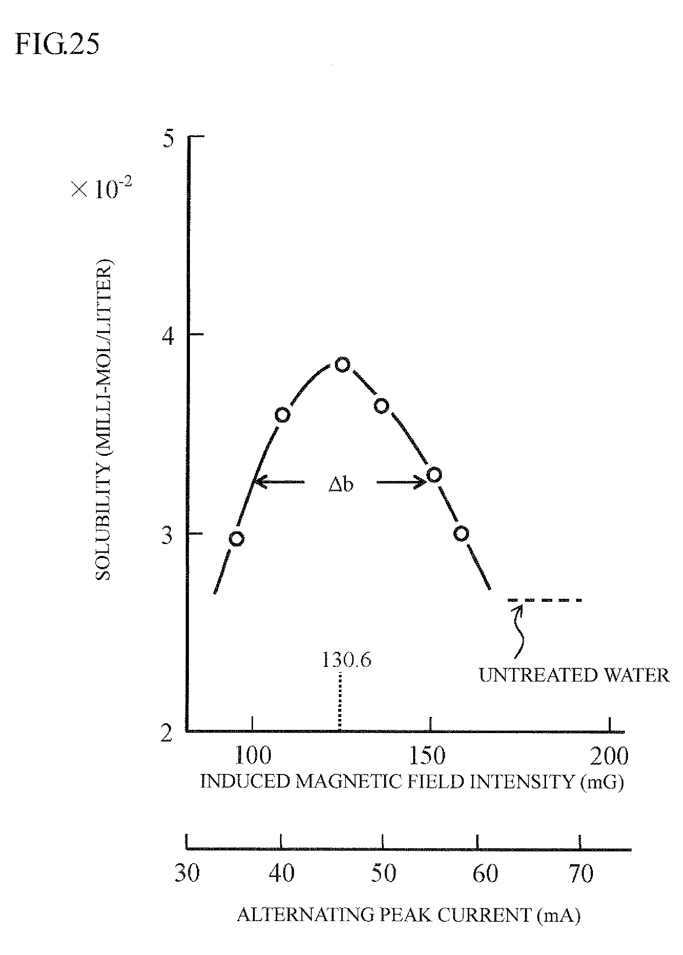

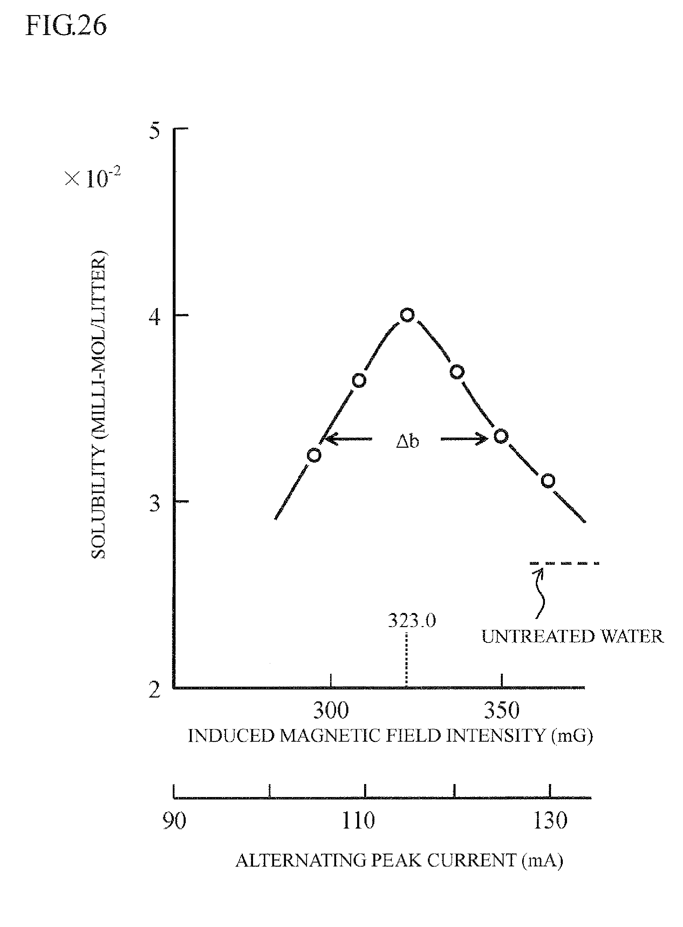

In the resonant magnetic fields at the first resonant frequency group collectively explained with reference to Figs. 43 and 44, from Fig. 24, at the resonant frequency $A_2$, in the case of the double mode, an alternating peak current is 22.7 mA and a resonant magnetic field at that point is 63.8 mG or in the vicinity thereof. A range of a half-value width ($\Delta$b) thereof is 60.5 to 66.4 mG. Induced magnetic field intensify of a resonant magnetic field in the base mode in this case is 31.9 mG or in the vicinity thereof.
Similarly, from Fig. 25, at the resonant frequency $A_3$, in the case of the base mode, an alternating peak current is 46.5 mA and a resonant magnetic field at that point is 130.6 mG or in the vicinity thereof. A range of a half-value width ($\Delta$b) thereof is 102.5 to 156.7 mG. From Fig. 26, at the resonant frequency $A_4$, in the case of the base mode, an alternating peak current is 115.0 mA and a resonant magnetic field at that point is 323.0 mG or in the vicinity thereof. A range of a half-value width ($\Delta$b) thereof is 298.1 to 351.8 mG.

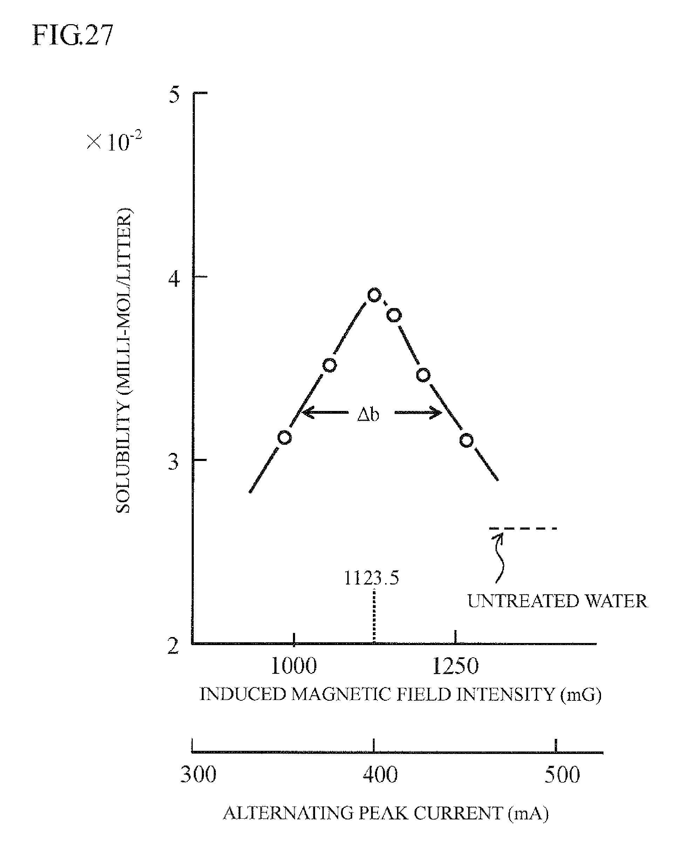

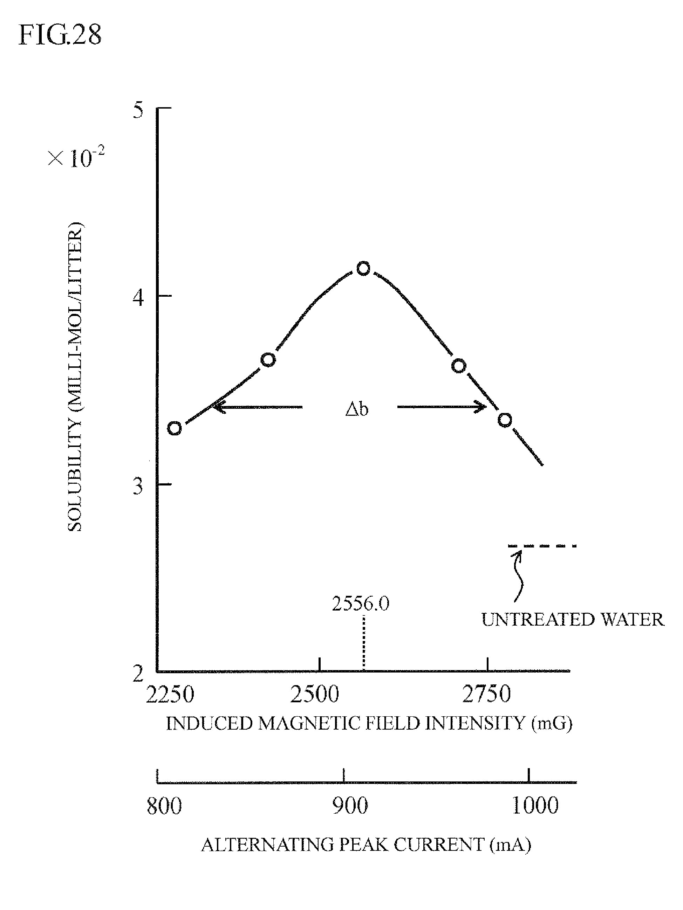

Similarly, from Fig. 27, at the resonant frequency $A_5$, in the case of the base mode, an alternating peak current is 400.0 mA and a resonant magnetic field at that point is 1123.5 mG or in the vicinity thereof. A range of a half-value width ($\Delta$b) thereof is 989.3 to 1234.4 mG. From Fig. 28, at the resonant frequency $A_6$, in the case of the base mode, an alternating peak current is 910.0 mA and a resonant magnetic field at that point is 2556.0 mG or in the vicinity thereof. A range of a half-value width ($\Delta$b) thereof is 2328.1 to 2752.7 mG.

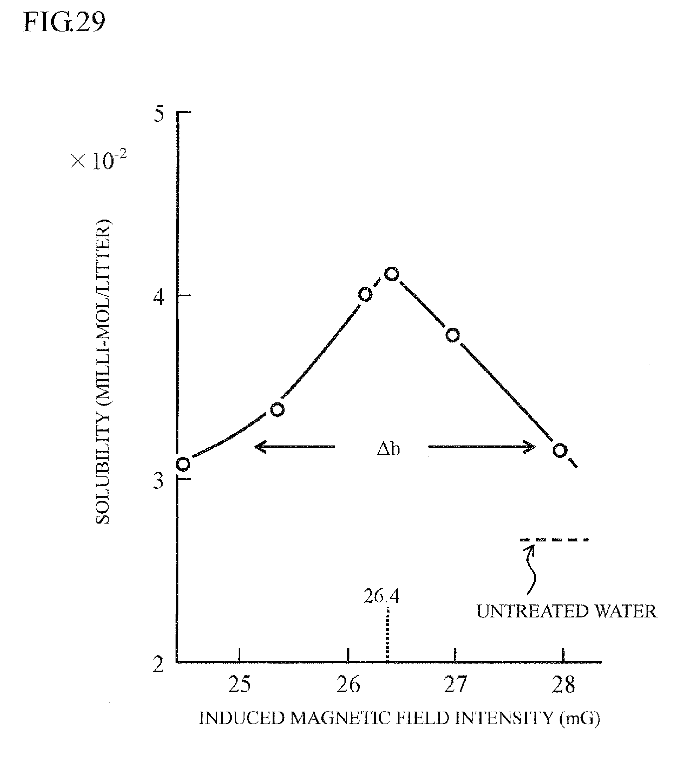

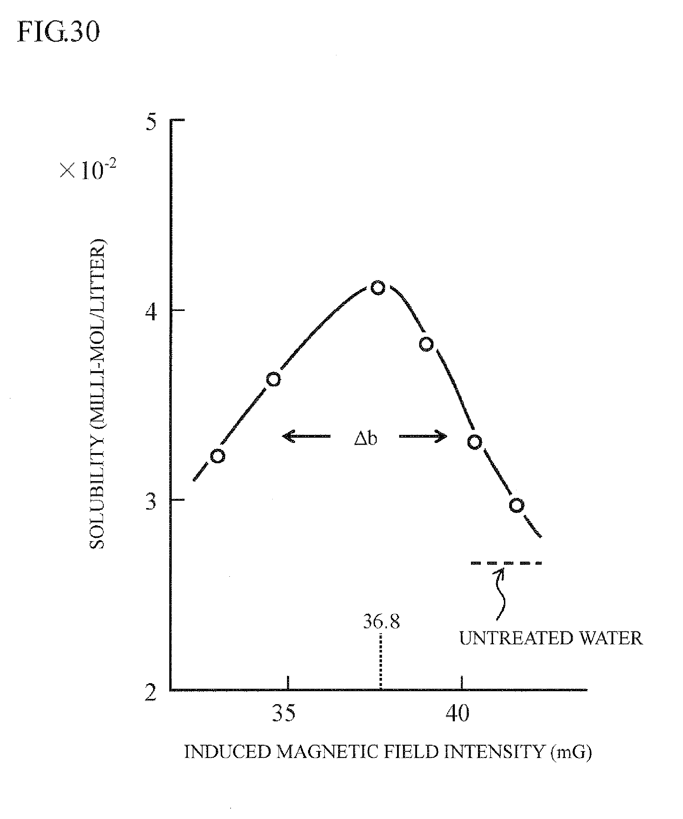

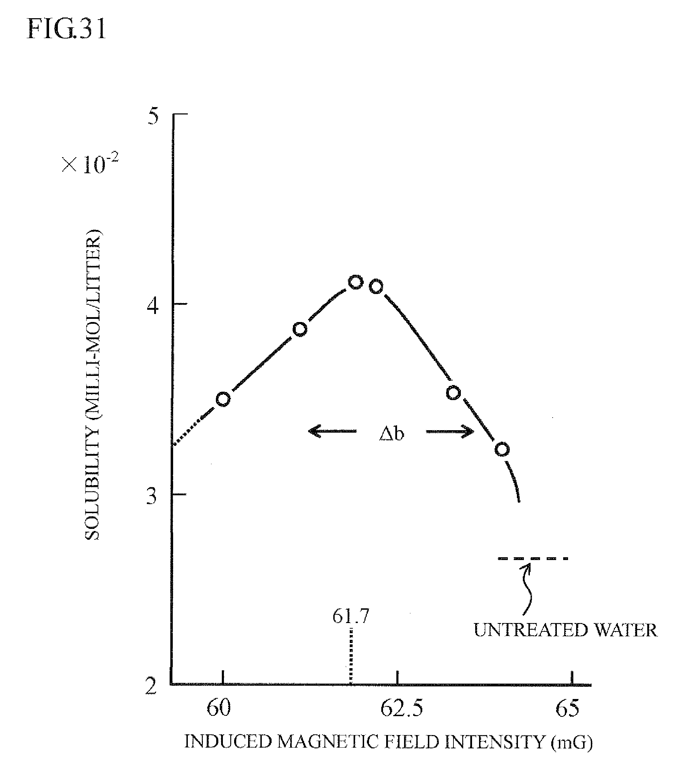

Moreover, from Fig. 29, in the quintuple mode of the resonant frequency $A_{-2}$, a resonant magnetic field is 26.4 mG or in the vicinity thereof. A range of a half-value width ($\Delta$b) thereof is 25.2 to 27.5 mG. Induced magnetic field intensity of a resonant magnetic field in the base mode in this case is 5.3 mG or in the vicinity thereof. Similarly, from Fig. 30, in the quintuple mode of the resonant frequency $A_{-1}$, a resonant magnetic field is 36.8 mg or in the vicinity thereof. A range of a half-value width ($\Delta$b) thereof is 29.5 to 40.4 mG. Induced magnetic field intensity of a resonant magnetic field in the base mode in this case is 7.4 mG or in the vicinity thereof. From Fig. 31, in the quintuple mode of the resonant frequency $A_0$, a resonant magnetic field is 61.7 mG or in the vicinity thereof. A range of a half-value width ($\Delta$b) thereof is 59.4 to 64.1 mG. Induced magnetic field intensity of a resonant magnetic field in the base mode in this case is 12.3 mG or in the vicinity thereof.

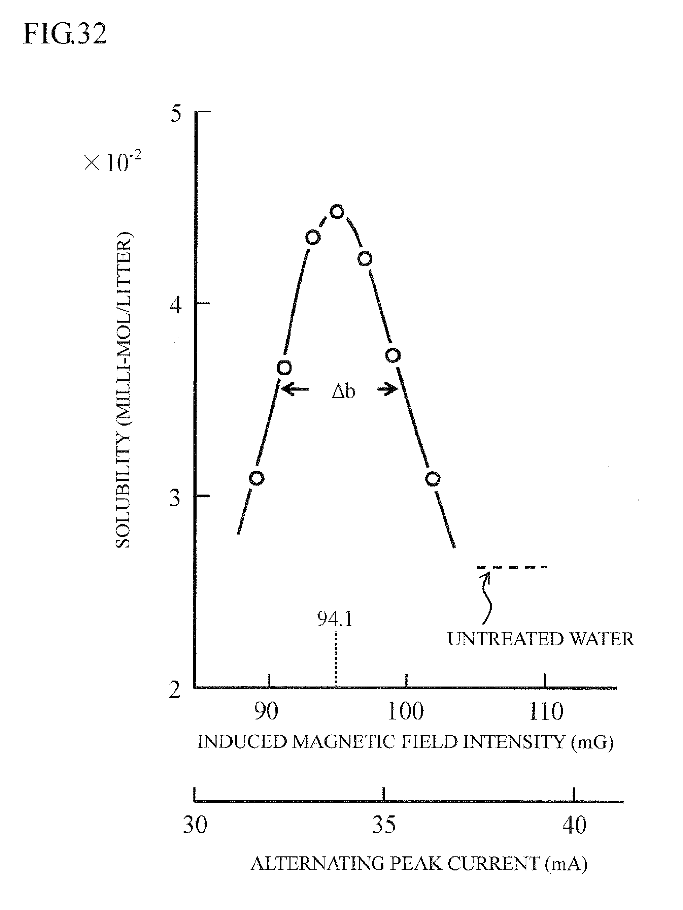

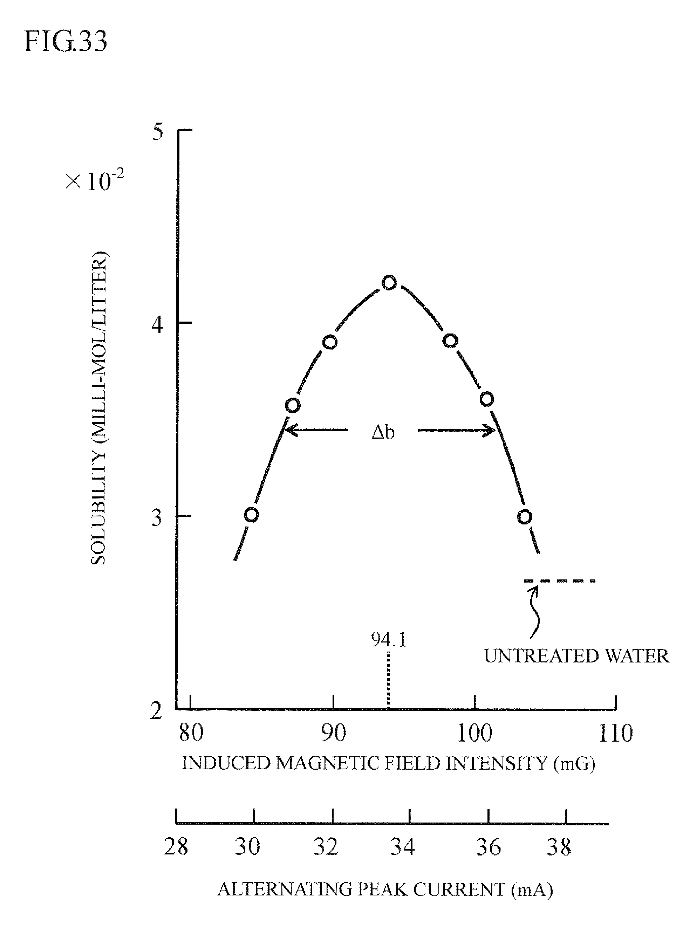

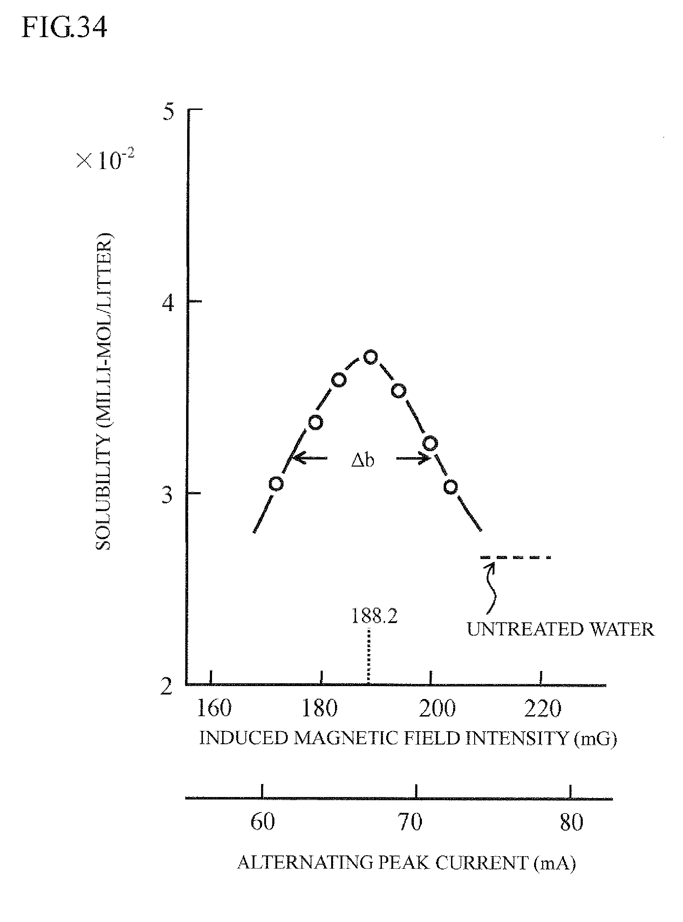

In a resonant magnetic field at the second resonant frequency group, from Fig. 32, at the resonant frequency $B_1$, in the case of the quadruple mode, an alternating peak current is 33.5 mA and a resonant magnetic field at that point is 94.1 mG or in the vicinity thereof. A range of a half-value width ($\Delta$b) thereof is 90.1 to 99.2 mG. Induced magnetic field intensity of a resonant magnetic field in the base mode in this case is 23.5 mG or in the vicinity thereof.
Similarly, from Fig. 33, at the resonant frequency $B_2$, in the case of the double mode, an alternating peak current is 33.5 mA and a resonant magnetic field at that point is 94.1 mG or in the vicinity thereof. A range of a half-value width ($\Delta$b) thereof is 85.7 to 102.1 mG. Induced magnetic field intensity of a resonant magnetic field in the base mode in this case is 47.1 mG or in the vicinity thereof. From Fig. 34, at the resonant frequency $B_3$, in the case of the base mode, an alternating peak current is 67.0 mA and a resonant magnetic field at that point is 188.2 mG or in the vicinity thereof. A range of a half-value width ($\Delta$b) thereof is 171.9 to 201.7 mG.

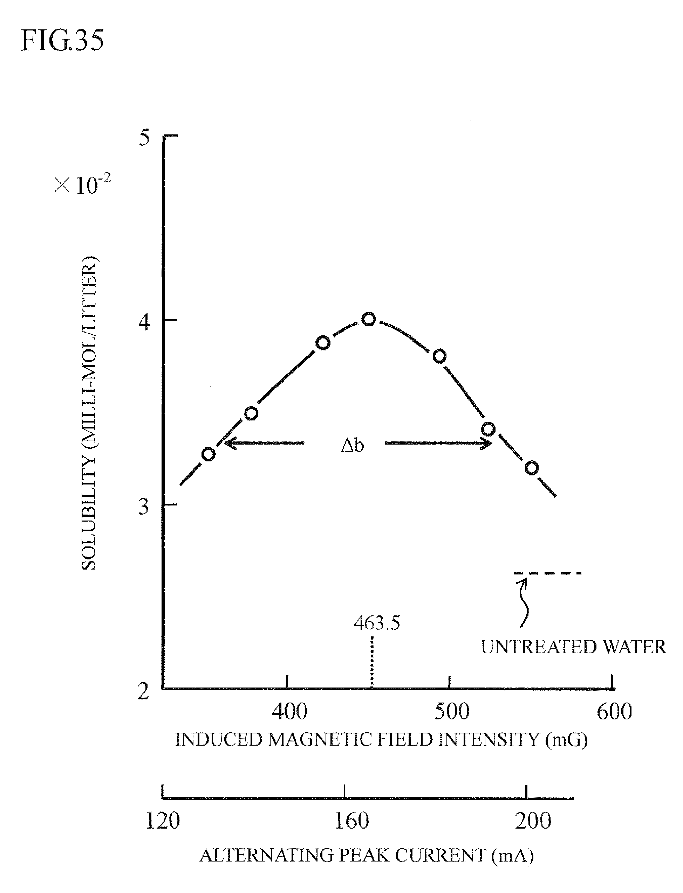

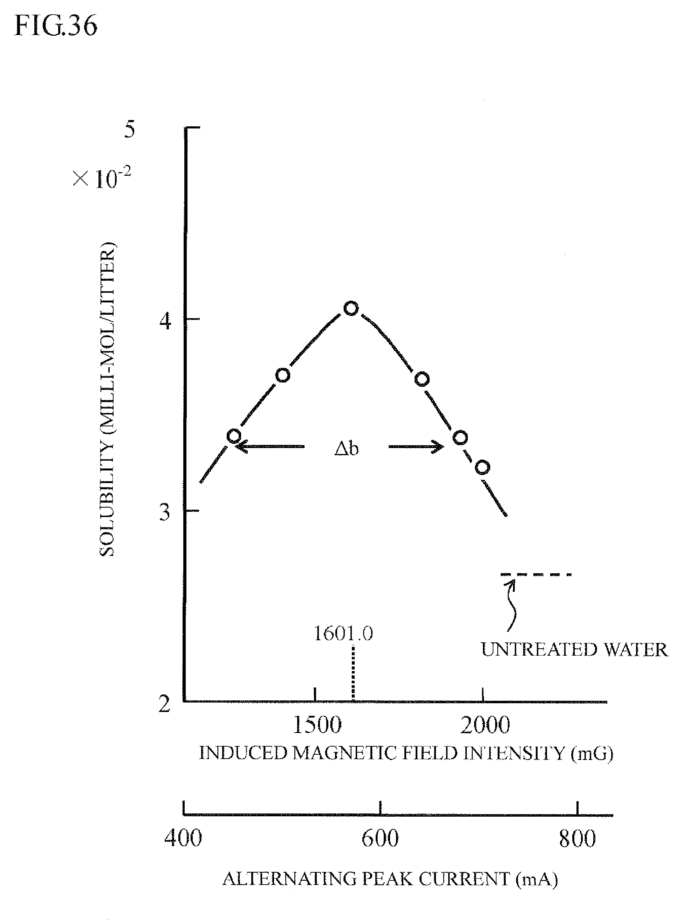

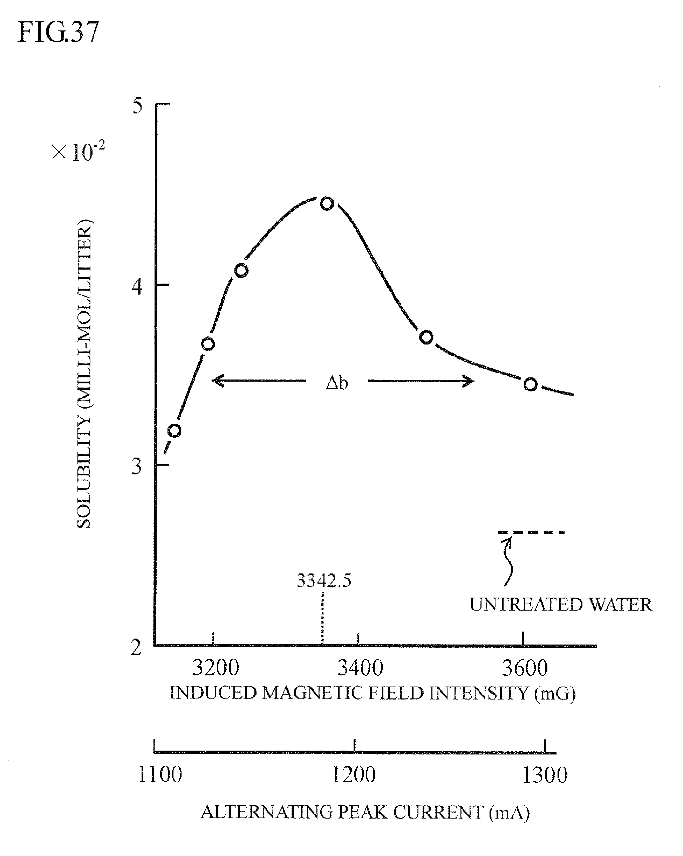

Similarly, from Fig. 35, at the resonant frequency $B_4$, in the case of the base mode, an alternating peak current is 165.0 mA and a resonant magnetic field at that point is 463.5 mG or in the vicinity thereof. A range of a half-value width (Δb) thereof is 368.0 to 547.7 mG. From Fig. 36, at the resonant frequency $B_5$, in the case of the base mode, an alternating peak current is 570.0 mA and a resonant magnetic field at that point is 1601.0 mG or in the vicinity thereof. A range of a half-value width (Δb) thereof is 1235.9 to 1938.1 mG. From Fig. 37, at the resonant frequency $B_6$, in the case of the base mode, an alternating peak current is 1.19 A and a resonant magnetic field at that point is 3342.5 mG or in the vicinity thereof. A range of a half-value width (Δb) thereof is 3145.9 to 3623.4 mG.

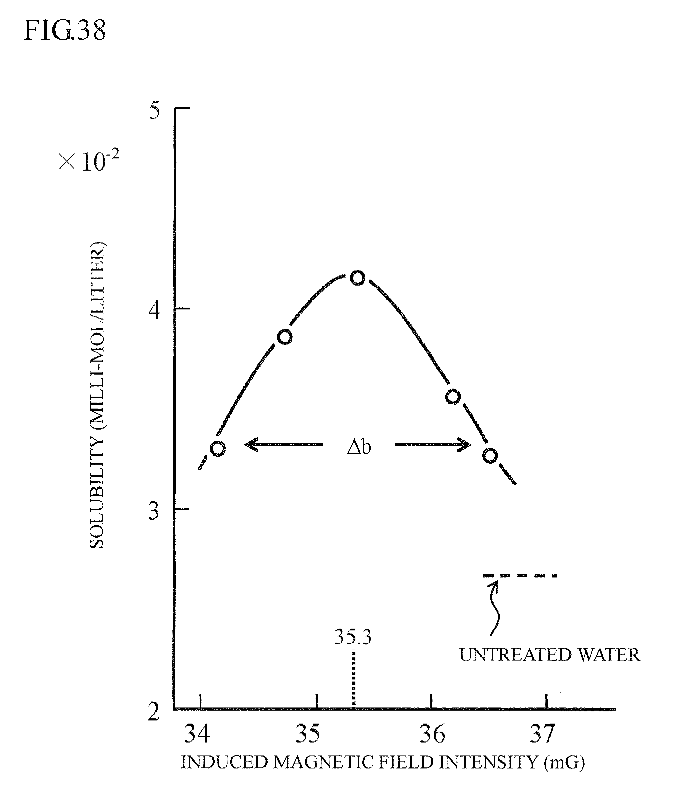

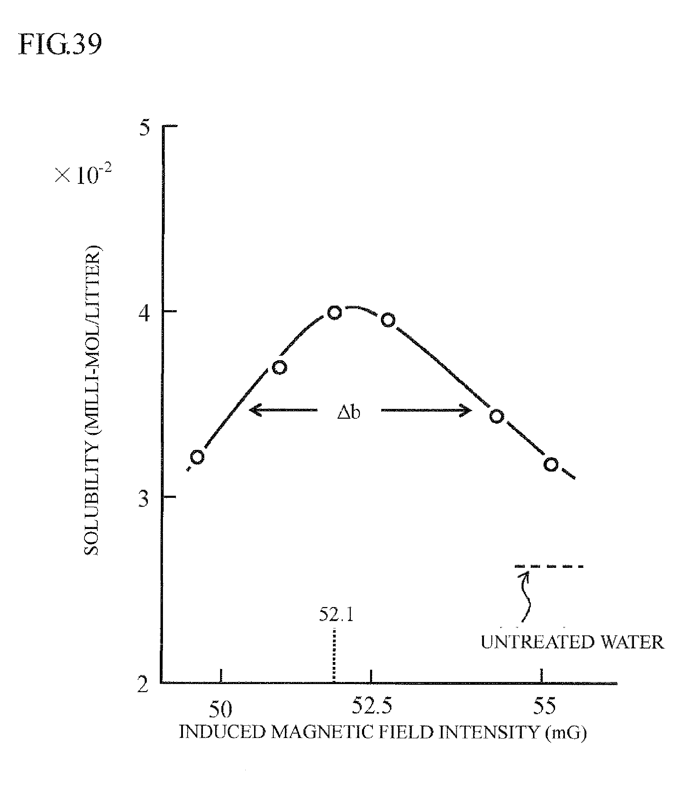

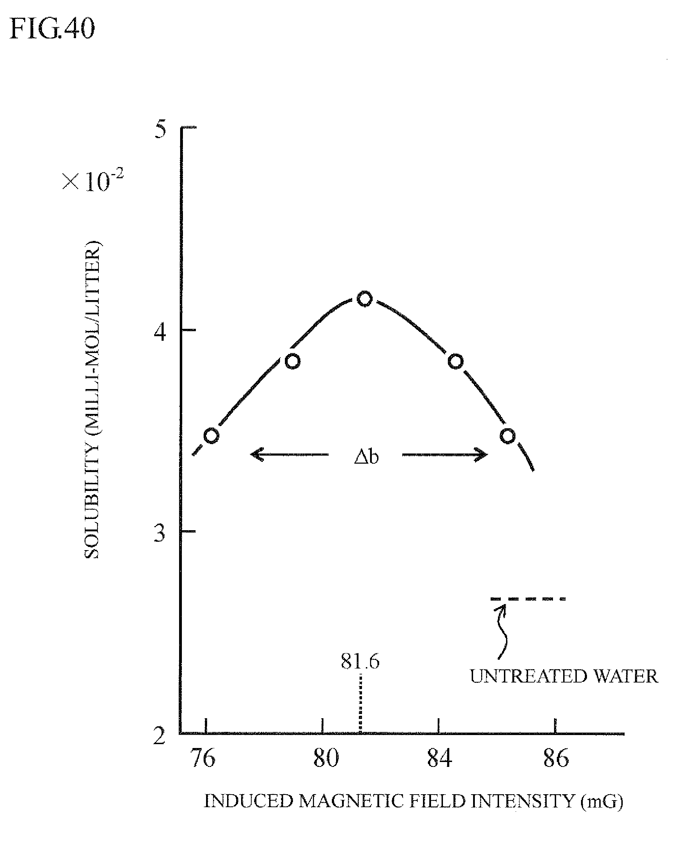

Moreover, from Fig. 38, in the quintuple mode of the resonant frequency $B_{-2}$, a resonant magnetic field is 35.3 mG or in the vicinity thereof. A range of a half-value width (Δb) thereof is 34.1 to 36.4 mG. Induced magnetic field intensity of a resonant magnetic field in the base mode in this case is 7.1 mG or in the vicinity thereof. Similarly, from Fig. 39, in the quintuple mode of the resonant frequency $B_{-1}$, a resonant magnetic field is 52.1 mG or in the vicinity thereof. A range of a half-value width (Δb) thereof is 49.9 to 54.4 mG. Induced magnetic field intensity of a resonant magnetic field in the base mode in this case is 10.4 mG or in the vicinity thereof. From Fig. 40, in the quintuple mode of the resonance frequency $B_0$, a resonant magnetic field is 81.6 mG or in the vicinity thereof. A half-value width (Δb) thereof is in a range of 75.2 to 87.6 mG. Induced magnetic field intensity of a resonant magnetic field in the base mode in this case is 16.3 mG or in the vicinity thereof.

As the vicinity of the resonant magnetic field in the base mode at the resonant frequency $A_i$ and the resonant frequency $B_i$ (i = integers -2 to 6), magnetic field areas about ±2% of the intensity numerical values of the resonant frequencies are preferable.

In the first embodiment, at any one frequency selected out of the first resonant frequency group or the second resonant frequency group, an alternating current for inducing resonant magnetic fields in the n-times mode of the respective resonant magnetic fields in the base mode described above is supplied from the AC power supply 4 to the coil 2 and an oscillating electromagnetic field is imparted to the water to be treated 3 in the water pipe 1. In this way, the water to be treated 3 is changed to the active treated water 5 simply and easily and efficiently activated to a high level.

In the electromagnetic field treatment employing a resonant frequency or a resonant magnetic field at the frequency explained in the first embodiment, the specific increase in the solubility of the calcium phosphate 16 indicates that hydrogen ions increase in the active treated water 5 obtained by subjecting the water to be treated 3 to the electromagnetic field treatment. When hydrogen ions ($H^+$; actually, aquo-ions thereof) increase in the tap water, reaction from the left to right in chemical formula (1) progresses and the calcium phosphate 16 dissolves in the active treated water as the mono calcium phosphate ions. A value of pH in pH measurement of the water to be treated 3 decreases and an increase in hydrogen ions is confirmed.

As the amount of hydrogen ions increases, an amount of hydroxyl ions (OH=; actually, aquo-ions thereof) also increases at the same degree as the hydrogen ions. When the solubility of the calcium phosphate, which specifically increases, shown in Figs. 5 to 40 is about, for example, $4\times10^{-5}$ mol/litter, the active treated water 5 is in a state same as a state in which a dissociation constant Kw of the tap water reaches $Kw=1.6\times10^{-13}$ and equivalent to a case in which the temperature of the tap water rises to the temperature equal to or higher than 70°C.

In this way, the alternating current of the specific frequency (the resonant frequency) or the specific current value (the oscillating magnetic field) is supplied to a coil and the oscillating electromagnetic field treatment is applied to the tap water, whereby hydrogen ions and hydroxyl ions four times or more as many as those in the case of the untreated tap water are generated in the tap water treated at the room temperature.

As pre-treatment of the electromagnetic field treatment method for water, carbon dioxide ($CO_2$) in water is suitably degassed. By this degassing, the hydrogen ions and the hydroxyl ions generated in a large amount can be stably present in the active treated water 5. For example, like underground water and well water, if a large amount of carbon dioxide is solved in water, the carbon dioxide and hydrogen ions and hydroxyl ions in the water react with each other as indicated by chemical formula (2) and reaction from the right to left or the left to right occurs. The amount of hydrogen ions falls or, conversely, the amount of hydrogen ions increases to be unstable. It is also confirmed that, when the solved carbon dioxide increases, a measurement value becomes unstable in measurement of a ph meter for the treated liquid.

[chemical formula 2] $CO_2+OH \rightleftarrows HCO$ (2)

In this way, in the case of the water such as underground water or well water having high solubility of carbon dioxide, removal of the carbon dioxide is extremely effective in order to stably subject the water to the electromagnetic field treatment.

Conversely, gas such as the carbon dioxide solved in water can be extremely efficiently degassed by applying the oscillating electromagnetic field treatment to the water. A mechanism for this degassing is not clarified yet. However, the gas is considered to be easily degassed by returning the gas solved in the water and dissociated as the ions to the carbon dioxide according to an agitating effect by clusters of the water and the progress of the reaction from the right to left in chemical formula (2).
Such an effect of the degassing of the water by the electromagnetic field treatment can be extremely effectively used for generation of function water in which effective gas is dissolved such as hydrogen dissolved water or ozone dissolved water obtained by dissolving, for example, hydrogen or ozone in, for example, pure water or ultra-pure water. This is because, in order to improve dissolution efficiency in dissolution of the effective gas into water, it is essential to degas the carbon dioxide and the like solved in the water.

By applying the oscillating electromagnetic field treatment to the tap water, the generated active treated water 5 is extremely easily mixed with oil such as gasoline at the room temperature. In the mixing of the gasoline and the active treated water 5, W/O emulsion in which water droplets are dispersed in the oil can be simply and easily generated by only injecting the active treated water 5 in the gasoline at the room temperature. O/W emulsion in which oil droplets are dispersed in the water can also be simply and easily generated. It is confirmed that the W/O emulsion can be used as a fuel for an automobile.

In the active treated water 5 generated in the embodiment, the increase in the hydrogen ions and the hydroxyl ions makes it possible to prevent the adhesion of scale or remove adhering scale on, for example, an inner wall of a pipe. Usually, a certain amount of ions of mineral components such as calcium, magnesium, or potassium are included in water supply and sewage. These ions easily form crystals in the water. However, according to the increase in the amount of hydrogen ions, for example, calcium oxalate ($Ca\ (COOH)_2$), which is a crystal hardly solved in the tap water, is not crystallized and easily solved in the tap water. Hardly soluble urea nitrate ($CO(NH)_2 \cdot HNO_3$) as a combination of urea in the tap water and nitrate ions is easily solved according to the increase in the amount of hydroxyl ions in the tap water. Similarly, uric acid ($R(OH)_2$; R is hydrocarbon) hardly solved in the tap water is easily solved according to the increase in the amount of hydroxyl ions. Fats and fatty oils such as fatty ester ($R_1$-COO-$R_2$; $R_1$ and $R_2$ are hydrocarbon) are subjected to hydrolysis by the hydrogen ions and the hydroxyl ions to be changed to fatty acid and easily solved in the water. In this way, the adhesion of scale on the inner wall of the pipe is substantially reduced.

The increase in the hydrogen ions and the hydroxyl ions easily changes iron (Fe) to black rust ($Fe_3O_4$) and makes it possible to prevent rust on an inner wall of an iron pipe.

The increase in the hydrogen ion and the hydroxyl ions in the treated liquid makes it easy to solve ammonium (NH3) in the tap water as ammonium ions. Therefore, it is possible to eliminate odor by using the treated liquid in a toilet.

Moreover, the active treated water 5 in this embodiment makes it possible to alter heavy oil, light oil, and the like using the increased hydrogen ions and hydroxyl ions. This is because carbon-carbon (C) bond of these oils is dissociated by the hydrogen ions and the hydroxyl ions and dissolved into alcohols or alkenes. Since these altered oils are easily solved in the tap water, the adhesion of oils in the pipe is substantially reduced.

In this embodiment, the various effects described above are realized by the electromagnetic field treatment employing the specific alternating current. Unlike the techniques in the past, it is unnecessary to test the effects of the modulated electric field treatment through a desk test in advance. This electromagnetic field treatment method is extremely simple and easy. Power consumption in the electromagnetic field treatment is extremely small. In this way, the electromagnetic field treatment according to this embodiment has high economy. Moreover, since the effects are realized regardless of a type of a liquid to be treated, universality of the electromagnetic field treatment is also high.

[Second Embodiment]

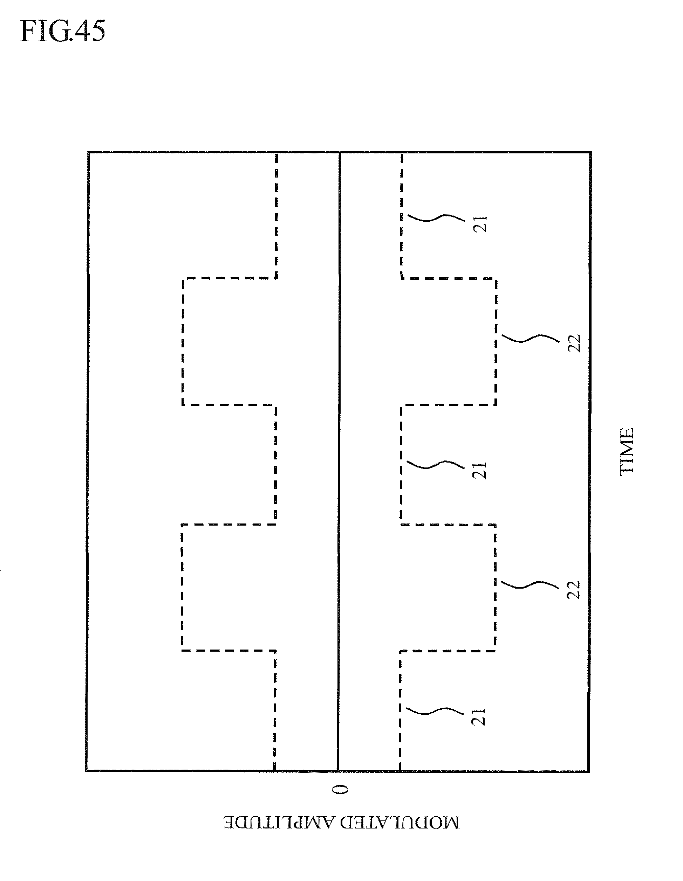

A preferred second embodiment of the present invention is explained. This embodiment is characterized by using one resonant frequency selected out of the first resonant frequency group and one resonant frequency selected out of the second resonant frequency of the alternating current explained in the first embodiment to activate water simultaneously using these two resonant frequencies. Consequently, the water is efficiently subjected to electromagnetic field treatment and the active treated water is extended in life as function water. Fig. 45 is a waveform chart showing an example of alternating currents for mixing such two resonant frequencies and inducing an oscillating electromagnetic field.

In this embodiment, as shown in Fig. 45, a first frequency current 21 and a second frequency current 22, which form alternating currents of two resonant frequencies, are amplitude-modulated to have, for example, alternating peak currents different from each other and supplied to the coil 2 shown in Fig. 1 or the electromagnetic-field imparting unit 7 shown in Fig. 3. A waveform in the first frequency current 21 is the square waveform shown in Fig. 2 and a frequency thereof is selected out of the first resonant frequency group explained in the first embodiment. Similarly, a waveform in the second frequency current 22 is also the square waveform and a frequency thereof is selected out of the second resonant frequency group.

The amplitude, i.e., the alternating peak current of the first frequency current 21 is suitably set such that the resonant magnetic field explained in the first embodiment is generated at the resonant frequency selected out of the first resonant frequency group. The amplitude, i.e., the alternating peak current of the second frequency current 22 is suitably set such that the resonant magnetic field explained in the first embodiment is generated at the resonant frequency selected out of the second resonant frequency group. The amplitude in the first frequency current 21 may be larger than the amplitude in the second frequency current 22 unlike those shown in Fig. 45. Alternatively, both the amplitudes may be the same.

Such an alternating current is formed by taking into account amplitude modulation in addition to so-called frequency modulation by two frequencies. The repetition of the first frequency current 21 and the second frequency current 22 is set to an alternating frequency of 50 to 150 times/second (Hz). Duty cycles of the first frequency current 21 and the second frequency current 22 are arbitrary adjusted. In a preferred mode, the alternating frequency is set to 100 Hz. Moreover, duty cycles of the first frequency current 21 and the second frequency current 22 at the alternating frequency are set to 50%.

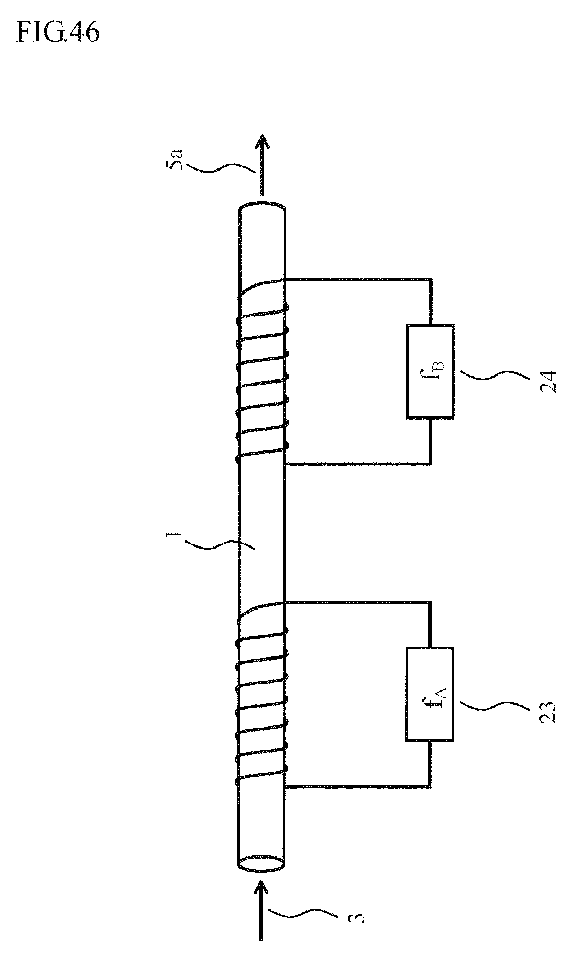

Besides, as a method of selecting one resonant frequency out of the first resonant frequency group and one resonant frequency out of the second resonant frequency group and activating water simultaneously using the selected two resonant frequencies, various methods are possible. For example, as shown in Fig. 46, as explained with reference to Fig. 1, an alternating current of a resonant frequency $f_A$ selected out of the first resonant frequency group is fed to a coil on the outer side of the water pipe 1 through the first AC power supply 23. At the same time, an alternating current of a resonant frequency $f_B$ selected out of the second resonant frequency group is fed to a coil on the outer side of the water pipe 1 through the second AC power supply 24. Winding directions of both the coils may be identical or may be opposite. In this way, when the water to be treated 3 of, for example, the tap water is fed to the water pipe 1, active treated water 5a is generated.

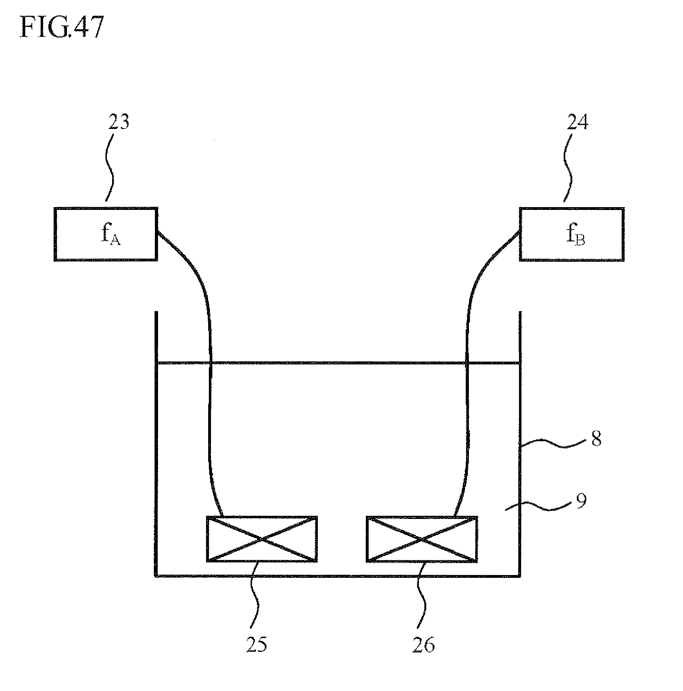

Alternatively, as shown in Fig. 47, a first magnetic-field imparting unit 25 including a coil connected a first AC power supply 23 and a second magnetic-field imparting unit 26 including a coil connected to a second AC power supply 24 are immersed in the pooled water 9 in a tank 8. In this state, the alternating current of the resonant frequency $f_A$ described above is supplied to the first electromagnetic-field imparting unit 25 through the first AC power supply 23. At the same time, the alternating current of the resonant frequency $f_B$ described above is supplier to the second electromagnetic-field imparting unit 26 through the second AC power supply 24. In this way, the alternating currents of the two resonant frequencies are imparted to the pooled water 9, whereby the pooled water 9 is activated by the oscillating electromagnetic field and changed to active treated water.

As a waveform of the two kinds of alternating currents, for example, the square waveform shown in Fig. 2 is suitable. It is advisable to set the amplitude of the alternating current of the resonant frequency $f_A$ such that the resonant magnetic field explained in the first embodiment is generated at the resonant frequency selected out of the first resonant frequency group. It is advisable to set the amplitude of the alternating current of the resonant frequency $f_B$ such that the resonant magnetic field explained in the first embodiment is generated at the resonant frequency selected out of the second resonant frequency group.

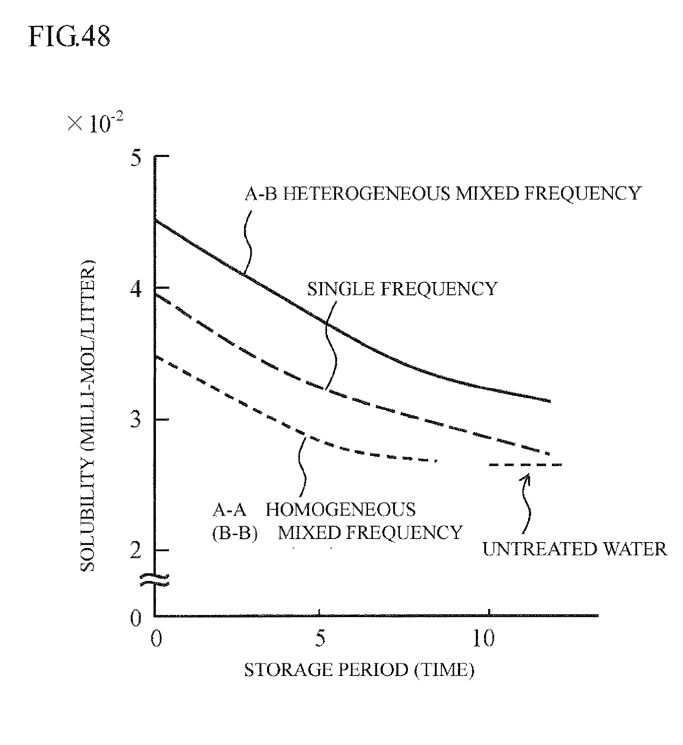

In this embodiment, as described above, duration of the water activation effect is extended and the life of the water is extended as function water. This is explained with reference to Fig. 48.

In Fig. 48, a storage period of the active treated water after being subjected to the electromagnetic field treatment is plotted on the abscissa and the solubility of the calcium phosphate 16 by the active treated water is plotted on the ordinate. The electromagnetic field treatment was performed for a fixed time (about 10 hours) by removing the powder of the calcium phosphate 16 in the reservoir chamber 12 in the experimental apparatus shown in Fig. 4. Thereafter, the active treated water was stored at the room temperature and an ability of the stored active treated water for dissolving calcium phosphate was checked after a predetermined storage period.

A solid line in the figure indicates a case in which the electromagnetic treatment is performed by the alternating currents employing the two resonant frequencies explained with reference to Fig. 45 and is a result of an example of an A-B heterogeneous mixed frequency. A frequency of the first frequency current 21 is one resonant frequency of the first resonant frequency group and a frequency of the second frequency current 22 is one resonant frequency of the second resonant frequency group. Both the amplitudes of these frequency currents are set such that a resonant magnetic field is generated. The alternating frequency is 100 Hz and duty cycles of the first frequency current 21 and the second frequency current 22 at the alternating frequency are 50%.

A broken line in the figure is the same as that in the first embodiment. The broken line indicates an example in a case of one resonant frequency of the first resonant frequency group or the second resonant frequency group and is a result of in a case in which the electromagnetic field treatment is performed by an alternating current employing a single frequency. The amplitude of the one frequency current is set such that a resonant magnetic field is generated.

A dotted line in the figure indicates a case in which the electromagnetic field treatment is performed by the alternating currents employing the two resonant frequencies explained with reference to Fig. 45 and is a result of an example of an A-A (or B-B) homogenous mixed frequency. Both the frequencies of the first frequency current 21 and the second frequency current 22 are resonant frequencies selected out of the same first resonant frequency group. Alternatively, both the frequencies are resonant frequencies selected out of the same second resonant frequency group. Both the amplitudes of these frequency currents are set such that a resonant magnetic field is generated. The alternating frequency is 100 Hz and duty cycles of the first frequency current 21 and the second frequency current 22 at the alternating frequency are 50%.
Specifically, as a result of an example shown in Fig. 48, a result obtained by using the resonant frequency $A_i$ (i=3, 4) and the resonant frequency $B_j$ (j=3, 4) are shown.

As shown in Fig. 48, in all the cases of the A-B heterogeneous mixed frequency of the solid line, the single frequency of the broken line, and the A-A (B-B) homogeneous mixed frequency of the dotted line, the ability of the active treated water for dissolving the calcium phosphate 16 lasts. The ability attenuates as the storage period passes. The attenuation on the solid line is far smaller than that on the broken line. Therefore, the duration of activation of water increase. For example, on the broken line, solubility of untreated water returns to $2.65\times10^{-5}$ mol/litter in the storage period of 12 to 13 hours. However, on the solid line, the solubility is about $3.13\times10^{-5}$ mol/litter even after the storage period of 12 to 13 hours and does not fall much after that. Moreover, in the case of the solid line, as indicated by the storage period of 0 hour, an initial degree of activation increases.
On the other hand, on the dotted line, the attenuation is larger than that in the case of the broken line and the duration of activation of water decreases. For example, the solubility returns to a degree same as that of the untreated water in the storage period of about 6 to 7 hours. Moreover, in the case of the dotted line, as indicated by the storage period of 0 hour, an initial degree of activation falls to be lower than that in the case of the single frequency of the broken line.

In this way, in this embodiment, by performing the electromagnetic field treatment by the alternating currents employing the two different kinds of resonant frequencies, the degree of activation increases and the duration of the effect of the active treated water is extended. In other words, a state in which an amount of hydrogen ion and an amount of hydroxyl ions during treatment are larger than those in the case of the untreated water lasts longer. Conversely, when the same kinds of resonant frequencies are used, the degree of activation decreases and the duration of the effect of the active treated water is reduced.

Such extension of the life of the active treated water indicates that the active treated water generated in this embodiment can also be effectively used as a cleaner and the like. The functions displayed by the water with a large amount of hydrogen ions or hydroxyl ions explained in the first embodiment, for example, dissolution of fatty acids, deodorization, and alteration of oils can be utilized in various detergents or function water.

A mechanism of the electromagnetic field treatment employing an alternating current of a specific frequency in the first embodiment and the second embodiment is explained. Electric power consumed by about 100 cc of water through the coil 2 by the alternating current of the specific frequency is 0.5 mW (milliwatt) to 10 mW at the most at, for example, the resonant frequency $A_i$. (i=3, 4) and the resonant frequency $B_j$ (j=3, 4). The active treated water having the effects described above is generated by such extremely small energy. Moreover, such a specific frequency of the alternating current belongs to a low-frequency band. For example, compared with the case in which gas is subjected to electrolytic dissociation and excited by plasma as in the case of plasma generation employing an alternating frequency of 100 kHz to several tens MHz, the frequency equal to or lower than 10 kHz is small and electric power energy thereof is also extremely small. Therefore, in the electric field treatment in this embodiment, free electrons cannot be generated through electrolytic dissociation water and electron energy cannot be imparted to the free electrons.

It is true that a substance such as salt (NaCl) is easily ionized (aquo-ions) and dissolved in water because strong ion bond there of is cut and dissociated. However, this is caused by extremely high dipole efficiency (relative dielectric constant of about 80) of the water and because energy generated in a hydrating (changing to aquo-ions) process cuts the bond. It is true that hydrogen ions ($H^+$) change to aquo-ions. However, hydroxyl ions ($OH^-$) hardly hydrated and dissociation of water molecules is small. Therefore, in the normal neutral water, a pH value is 7 and the hydroxyl ions are dissociated at about $1\times10^{-7}$ mol/l together with the hydrogen ions.

The electromagnetic field treatment employing an alternating current of a specific frequency in this embodiment gives energy to rotation of water clusters present in water. This rotation energy of the water clusters is considered to gradually increase, collides with water molecules ($H_2O$), and dissociates the water molecules into hydrogen ions and hydroxyl ions.

In other words, when the alternating current of the specific resonant frequency is supplied to the coil 2, a magnetic field is generated in, for example, the tap water in the water pipe 1. When magnetic flux density thereof is represented as a B vector, the B vector temporally changes at the same frequency following the electric current of the frequency. According to this temporal change, an E vector of an electric field that changes at the same frequency is generated according to formula (1). Electromagnetic field energy of the same frequency as the frequency of the alternating current resonates with a gap of peculiar energy of the rotation quantized by regarding the water clusters as rigid bodies of inertia moment I. The water clusters start to rotate. It is not certain whether excitation of the rotation of the water clusters by the resonance is caused by photons emitted from the oscillating electromagnetic field or caused by photons emitted by hydrogen ions or hydroxyl ions accelerated by this oscillating electromagnetic field according to formula (2).

[Formula 1]

$$rot\vec{E} = -\frac{\partial \vec{B}}{\partial t} \quad \cdots \quad (1)$$

[Formula 2]

$$\vec{F} = q\vec{V} \times \vec{B} + q\vec{E} \quad \cdots \quad (2)$$

Here, q is a charge amount, a V vector is thermal motion speed of hydrogen ions or hydroxyl ions, a B vector is magnetic flux density, and an E vector is the electric field.

In the embodiment, the resonant magnetic field is present in the induced magnetic field intensity imparted to the tap water through the coil 2. This induced magnetic field intensity is considered to be related to the start of the rotation of the water clusters. When Lorentz force by formula (2) acting on charges of hydrogen ions, hydroxyl ions, and the like adhering to the surfaces of the water clusters regarded as the rigid bodies matches thermal motion speed of these ions, the Lorentz force winds the charges around the magnetic flux and acts as a trigger for a rotational motion. A preferred range of the magnetic field is considered to be a condition for making it easy to start the rotation of the water clusters.

As described above, hydrogen ions or hydroxyl ions adhere to the surfaces of the water clusters regarded as the rigid bodies. A direction of the start of the rotation of the water clusters is completely opposite depending on positive charges or negative charges of the ions. When such water clusters start to rotate, the adhering charges are subjected to an extremely large electric field generated according to formula (1). Rotation energy of the water clusters is considered to increase to a degree enough for dissociating water molecules. The rotation of the water clusters is set to rotation speed in the order of GHz in order to dissociate the water molecules.

The model of dissociation of the hydrogen ions and the hydroxyl ions of the water by the rotation of the water clusters is a logical model and is not proved yet. In this way, when the rotation of the water clusters is related, the number of hydrogen-bonded water molecules included in the water clusters is about $1.2\times10^4$, for example, in the case of the resonant frequency $A_3$ and is about $1\times10^4$ in the case of the resonant frequency $B_3$. The number of the hydrogen-bonded water molecules included in this water clusters decreases as an oscillation frequency increased. Peculiar energy of the rotation quantized by regarding the water clusters as rigid bodies of the inertia moment I is calculated. The inertia moment I is calculated and the number of water molecules of the water clusters is calculated by considering that a gap of the peculiar energy of this rotation resonates with electromagnetic field energy that is generated in the water by the alternating current of the specific resonant frequency.

As described about the effects of the first embodiment, the rotation of the water clusters efficiently performs agitation of the water and effectively causes degassing of the water. The effect of the rotation is considered to increase as the resonant frequency increases.

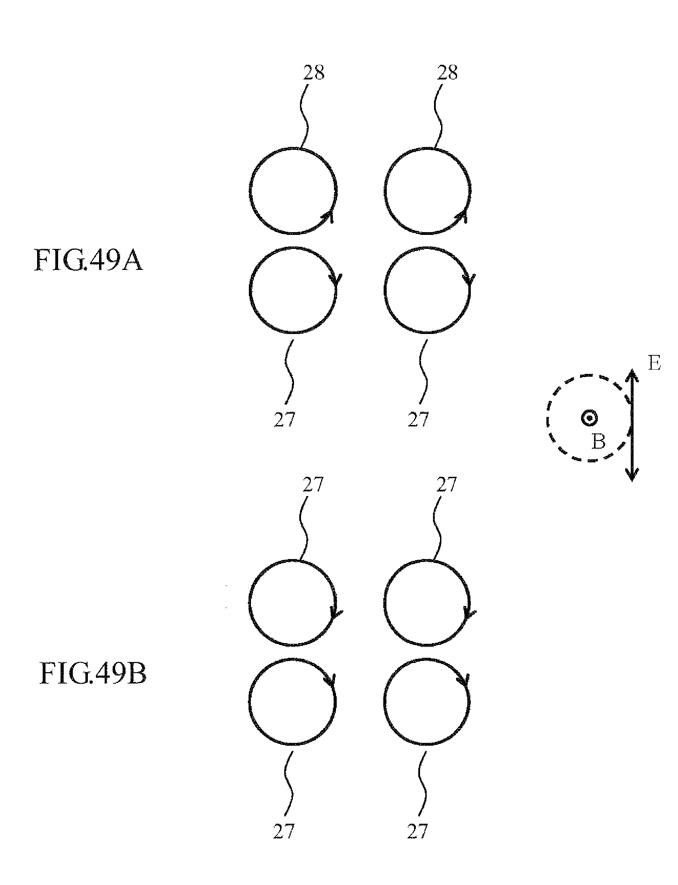

When the rotation of the water clusters is considered, in the second embodiment, it is extremely easy to understand high persistency of water to be treated subjected to the electromagnetic field treatment by the alternating currents employing the two kinds of resonant frequencies. In other words, the persistency is considered to be caused by a mechanism described below. This mechanism is explained on the basis of the model described above with reference to Fig. 49. Fig. 49 is a diagram schematically showing the rotation of the water clusters. Fig. 49A is a case in which rotation of water clusters to which hydrogen ions adhere (hereinafter referred to as hydrogen ion adhering clusters) and rotation of water clusters to which hydroxyl ions adhere (hydroxyl ion adhering cluster) are present. Fig. 49B is a case of only rotation of water clusters to which hydrogen ions or hydroxyl ions adhere. In Fig. 49, the electric field E and the magnetic field (magnetic flux density) B are written. These fields temporally oscillate.

As shown in Fig. 49A, when it is assumed that the hydrogen ion adhering clusters 27 rotate clockwise, the hydroxyl ion adhering clusters 28 rotate counterclockwise. Even if these clusters (27 and 28) come into contact with one another, an action of the clusters decelerating the rotation thereof one another does not occur. Therefore, the rotation of the water clusters is easily continued. Such a mechanism is considered to act in the case of the solid line shown in Fig. 48. The hydrogen ion adhering clusters 27 absorb the rotation energy in the alternating current of the first resonant frequency group. The hydroxyl ion adhering clusters 28 are absorbed by the rotation energy in the alternating current of the second resonant frequency group.

On the other hand, as shown in Fig. 49B, when only the hydrogen ion adhering clusters 27 are present, the clusters rotate clockwise together. When the hydrogen ion adhering clusters 27 come into contact with one another, since rotating directions are opposite in contact areas thereof, the clusters decelerate one another. Therefore, it is difficult to continue the rotation of the water clusters. Such a mechanism is considered to act in the case of the dotted line shown in Fig. 48. This occurs in the same manner in a case of only the hydroxyl ion adhering cluster 28.

In the second embodiment, besides the method explained with reference to Figs. 45 to 47, various methods are conceivable. For example, in the AC power supply 4 explained with reference to Fig. 1 or Fig. 3, a combined current obtained by combining an alternating current including one resonant frequency selected out of the first resonant frequency group and an alternating current including one resonant frequency selected out of the second resonant frequency group is formed. This combined current is supplied to the coil or the electromagnetic-field imparting unit 7. In this way, since the water is activated by these two resonant frequencies simultaneously, the same effects as described above are realized.

[Third Embodiment]

A third embodiment of the present invention is explained. This embodiment is characterized by effectively eliminating the influence of terrestrial magnetism explained in the first embodiment from the electromagnetic treatment. Consequently, stable electromagnetic treatment for water is easily performed without depending on a place where a coil for generating an oscillating electromagnetic field is disposed or a method of attaching the coil.

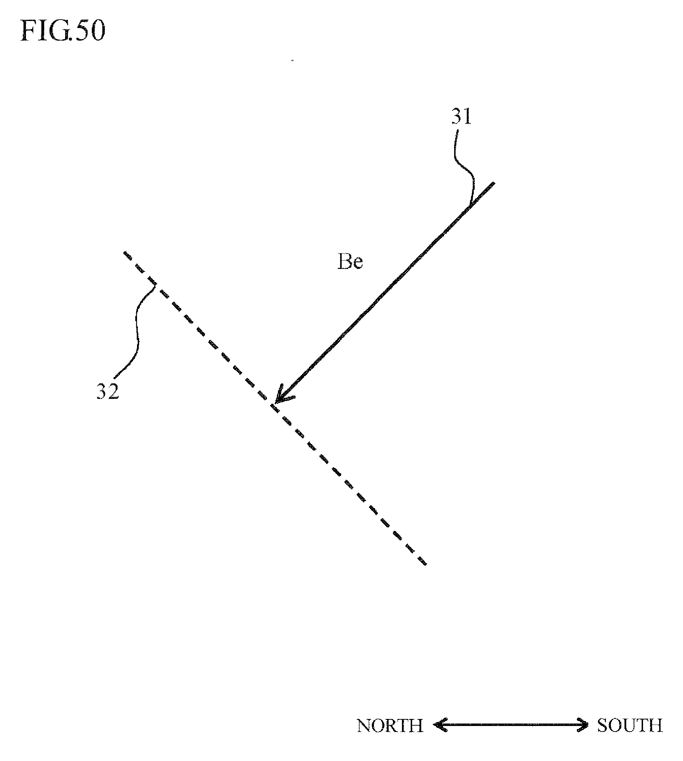

For example, near Tokyo, as schematically shown in Fig. 50, terrestrial magnetism Be including a horizontal component of about 310 mG and a vertical component of about 340 mG is present from the South side to the North side. Moreover, magnetic intensity of the terrestrial magnetism changes according to a season or time. In the experimental apparatus shown in Fig. 4 explained in the first embodiment, it is confirmed that, if a terrestrial magnetism component disappears in a direction of the axis of the coil 2, the influence of the terrestrial magnetism on the electromagnetic field treatment can be eliminated. In particular, when an alternating current of the resonant frequency Ai (i = integers -2 to 4) and the resonant frequency $B_j$ (j = integers -2 to 4) is used, since a resonant magnetic field in the base mode thereof is equal to or smaller than the terrestrial magnetism, the elimination of the influence of the terrestrial magnetism is important.

A preferred first method for the elimination of the influence is to, as shown in Fig. 50, arrange a coil to which the alternating current is supplied to be placed on a vertical plane 32 to which the axis of the coil is orthogonal in a terrestrial magnetism (Be) direction 31. The object coil is, for example, the coil 2 attached to the outer side of the water pipe 1 explained in the first and second embodiments and the coils incorporated in the electromagnetic-field imparting units (7, 25, and 26).

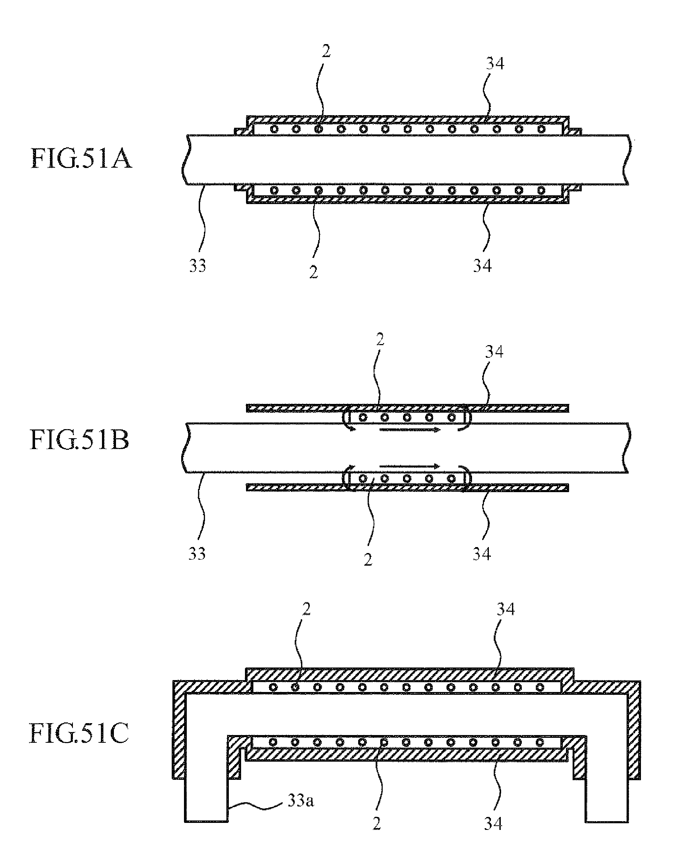

A preferred second method for the elimination of the influence is to, as shown in Fig. 51, cover the outside of the coil with a magnetic shield. In Figs. 51A and 51B, the coil 2 is wound around the outer side of a water pipe 33 made of a material having relative permeability of about 1 like a polymeric material or a resin material and formed in a line shape and a magnetic shield 34 is disposed to cover the outer side of the coil 2. In Fig. 51B, the magnetic shield 34 covers on the outer side of the coil 2 and the outer side of the water pipe 33 extending to both sides of the coil 2 and extending over length equal to or larger than the length of the coil 2. The magnetic shield 34 is made of a magnetic body having large relative permeability. For example, a sheet-like cobalt amorphous sheet or the like is suitably used as the magnetic shield 34.
In this way, the terrestrial magnetism Be is shielded by the magnetic shield 34 and the intrusion of the terrestrial magnetism Be into the water pipe 33 is substantially reduced. In the structure shown in Fig. 51B, the terrestrial magnetism Be intruding from an inlet side or an outlet side of the water pipe 33 is shielded.

Similarly, as shown in Fig. 51C, in a water pipe 33a made of a material having relative permeability of about 1 and formed in, for example, a U shape, the coil 2 is wound around the outer side in a center area thereof and the magnetic shield 34 is put to cover the coil 2 and extend beyond an area bent in a U shape of the water pipe 33a. In this way, for example, although the terrestrial magnetism Be intruding from an inlet side or an outlet side of the water pipe 33 cannot be sufficiently shielded in Fig. 51A, such intrusion of the terrestrial magnetism Be can be substantially completely prevented in Fig. 51C.

A method of covering the outside of the coil with the magnetic shield explained with reference to Fig. 51 may be applied to the coil of the water pipe 1 shown, in Fig. 1 or Fig. 46 or may be applied to the coils provided in the electromagnetic field imparting units (7, 25, and 26) shown in Fig. 3 or fig. 47.

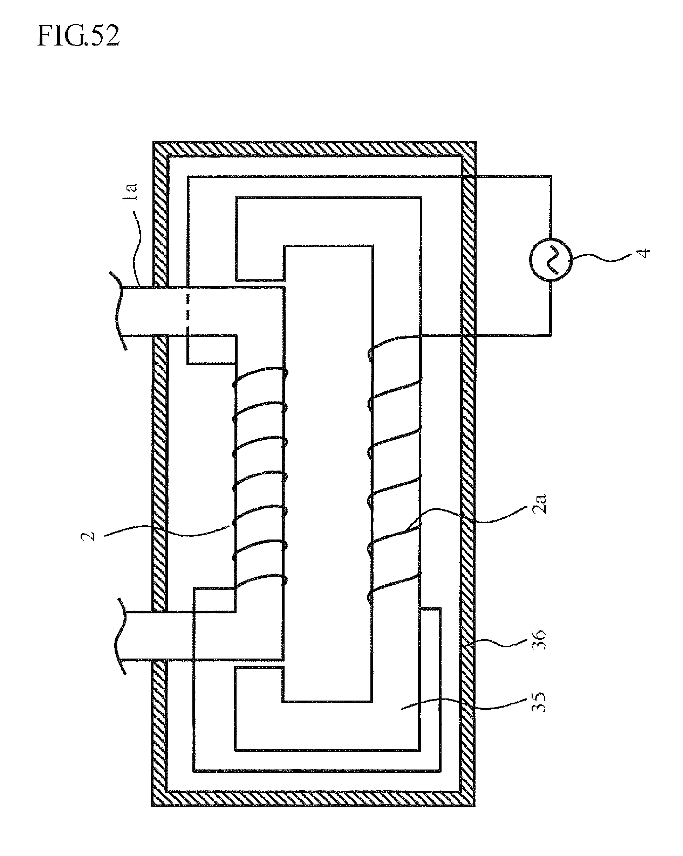

In a preferred third method for the elimination of the influence, as shown in Fig. 52, the coil 2 is wound around the outer side in a center area of a U-shaped water pipe 1a and a coil 2a is wound around a magnetic core 35 and disposed such that both ends thereof are generally in contact with areas bent in a U shape. The U-shaped water pipe 1a and the magnetic core 35 are stored in a magnetism shielding container 36. The coil 2 and the coil 2a are connected to the AC power supply 4 in series in the same winding direction such that a magnetic field direction formed at an end of the magnetic core 35 and a magnetic field direction formed in the area bent in a U shape are the same.
Consequently, induced magnetic field intensity in the center area of the U-shaped water pipe 1a is made uniform in the axis of the coil 2. The terrestrial magnetism Be is shielded by the magnetism shielding container 36. Therefore, magnetic flux density in the water pipe 1a is made uniform in the axial direction of the coil and water to be treated flowing through the water pipe 1 can be highly efficiently activated.

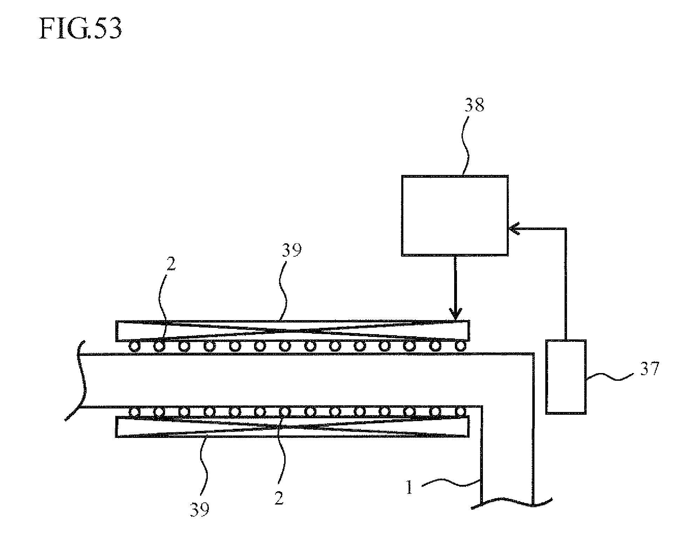

A preferred fourth method for the elimination of the influence is a method of compensating for, as shown in Fig. 53, terrestrial magnetism as a static magnetic field and demagnetizing the terrestrial magnetism. As shown in Fig. 53, a part of the water pipe 1 is bent in an L shape and the coil 2 is wound around the outer side of a line-like area of the water pipe 1. A magnetic sensor 37 is arranged in a bent section of an L shape to detect static magnetic field in the axial direction of the coil 2. A constant current source 38 is controlled on the basis of a value of the detected static magnetic field to cause the constant current source 38 to generate an inverse static magnetic field by a coil for demagnetization 39 in the water pipe 1 to compensate for the static magnetic field of the terrestrial magnetism. In this way, a static magnetic field in the axial direction of the magnetic sensor 37 is controlled to be always zero. In Fig. 53, the AC power supply 4 connected to the coil 2 is omitted to simplify the figure.
Consequently, the influence of the terrestrial magnetism in the water pipe 1 is totally eliminated and highly efficient activation can be applied to stable water to be treated without being affected by an environmental change at all.

[Fourth Embodiment]

A fourth embodiment of the present invention is explained. In this embodiment, an electromagnetic field treatment apparatus suitably used in the electromagnetic field treatment explained in the first, second, or third embodiment is explained.

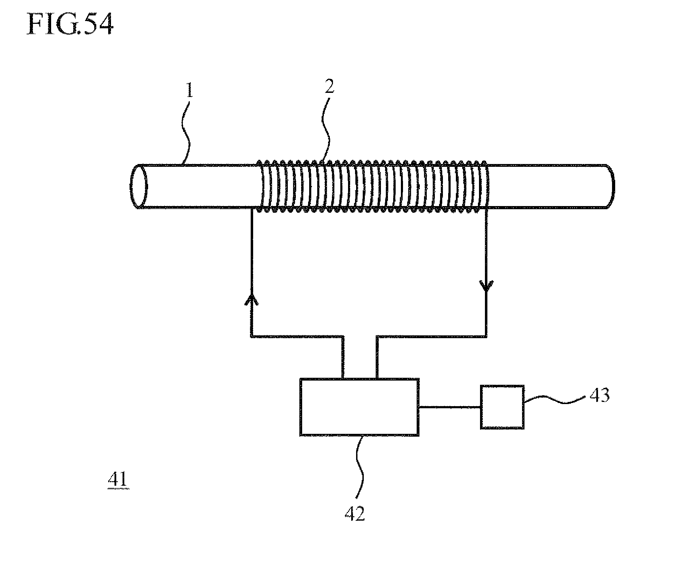

As shown in Fig. 54, an electromagnetic field treatment apparatus 41 includes the coil 2 attached to the outer side of the water pipe 1 serving as a channel for water to be treated, an alternating-current supplying unit 42 that supplies alternating currents of two different kinds of resonant frequencies to the coil 2, and a driving power supply unit 43 that drives the alternating-current supplying unit 42.

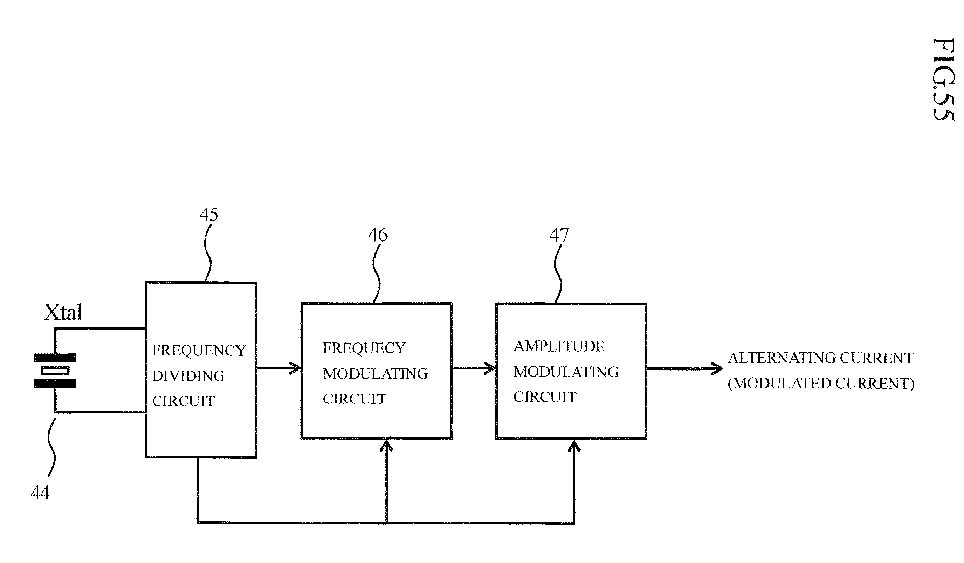

As shown in Fig. 55, the alternating-current supplying unit 42 includes, as main components thereof, a quartz oscillator 44, a frequency dividing circuit 45 that generates, for example, three frequency signals, and a frequency modulating circuit 46 and an amplitude modulating circuit 47 that subjects two frequencies among the three frequency signals to frequency modulation. These circuits are digital circuits. A semiconductor integrated circuit is suitably used as the circuits. This semiconductor integrated circuit is configured by a semiconductor element such as a MOSFET or a BiP transistor. A driving voltage therefor is plural voltages equal to or lower than 20 V and given by the driving power supply 43. in this way, the alternating-current supplying unit 42 can be made extremely compact and light.

The inductance of the coil 2 only has to be set to about $10^{-5}$ H. This reactance is equal to or smaller than 5 Ω when a resonant frequency of an alternating current is, for example, 1 kHz to 50 kHz. A resistor of about 100 Ω connected to the coil 2 in series is provided to make a peak current flowing to the coil 2 substantially constant.

In the frequency dividing circuit 45, a first frequency signal in the first resonant frequency group, a second frequency signal in the second resonant frequency group, and a signal of an alternating frequency in a range of 50 to 150 Hz are generated. In the frequency modulating circuit 46, a signal of a modulated frequency modulated at the alternating frequency is generated by the first frequency signal and the second frequency signal. In the amplitude modulating circuit 47, the modulated frequency signal is modulated into amplitude of a voltage at the alternating frequency. An alternating current amplitude-modulated through the resistor of about 100 Ω is supplied to the coil 2.

In this way, the alternating-current supplying unit 42 supplies the alternating currents shown in Fig. 45. In other words, the alternating-current supplying unit 42 amplitude-modulates electric currents having the two frequencies of the first frequency current 21 and the second frequency current 22 such that peak currents thereof are different from each other and supplies the electric currents. The first frequency current 21 is suitably set to be in a frequency band in the first resonant frequency group such that a peak current thereof has a current value for inducing a resonant magnetic field thereof. The second frequency current is suitably set to be in a frequency band in the second resonant frequency group such that a peak current thereof has a current value for inducing a resonant magnetic field thereof.

The frequency of the first frequency current 21 may be set to a resonant frequency in the first resonant frequency group or a frequency within a half-value width (Δf) thereof and a peak current thereof may be set within a half-value width (Δb) of a resonant magnetic field thereof. Similarly, the frequency of the second frequency current 22 may be set to a resonant frequency of the second resonant frequency group or a frequency within a half-value width (Δy) thereof and a peak current thereof may be set within a half-value width (Δb) of a resonant magnetic field thereof. Duty cycles of the first frequency current 21 and the second frequency current 22 in the alternating frequency are arbitrarily variable.

The effects explained in the second embodiment are realized by subjecting a liquid to be treated to the electromagnetic field treatment using such an electromagnetic field treatment apparatus. This apparatus is extremely compact and light, can be set in various places, and is excellent in convenience.

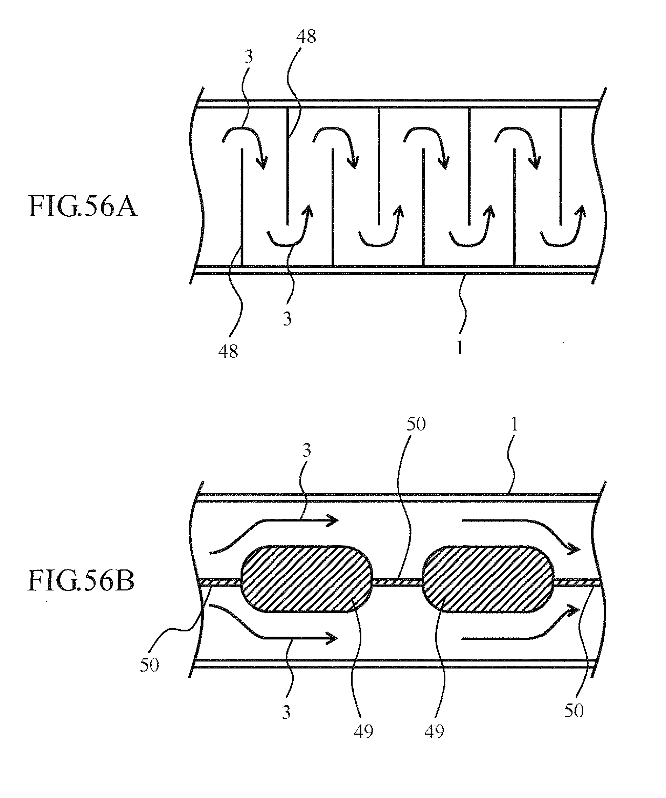

A preferred mode of this embodiment is explained with reference to Fig. 56. Fig. 56 is a schematic enlarged view of the inside of the water pipe 1 for explaining this implementation mode. In this implementation mode, a channel changing mechanism for changing a channel for a liquid to be treated in the water pipe 1 is provided.

As shown in Fig. 56A, a large number of baffle boards 48 are arranged in the water pipe 1 in which the coil 2 is set. A channel of the water to be treated 3 flows in the water pipe 1 while meandering because of the baffle plates 48. The baffle plates 48 are preferably insulators and is obtained by molding a polymeric material or a resin material such as vinyl chloride or polystyrene.

In the case of Fig. 56B, for example, plural columnar bars 49 are arranged to be coupled to one another by a thin coupling material 50 in the water pipe 1 in which the coil 2 is set. The channel of the water to be treated 3 shifts to sidewall sides of the water pipe 1 because of the columnar bars 49. In this case, as in the above case, the columnar bars 49 and the coupling material 50 are preferably insulators and are made of a polymeric material or a resin material in the same manner as the baffle plates 48.

Like water, relative permeability of the polymeric material or the resin material is about 1 and relative dielectric constant thereof is equal to or smaller than 10. By providing such a channel changing mechanism in the water pipe 1, the intensity of the electric field E received by the water to be treated 3 according to formula (1) increases in average and the effects of the electromagnetic field treatment increase. This is because the electric field is the largest in the vicinity of the inner wall of the water pipe 1 and the vicinity of the baffle plates 48 or the columnar bars 49 and time for receiving a strong electric field is extended by using such vicinities provided in a large number as a channel for the water to be treated 3.

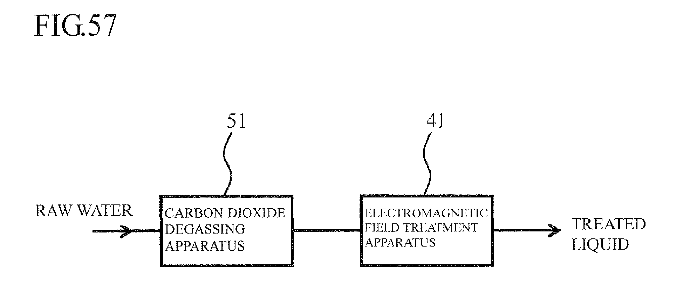

Moreover, another preferred mode of this embodiment is explained with reference to Fig. 57. Fig. 57 is a diagram showing this implementation mode. This implementation mode is suitable when the liquid to be treated explained in the first embodiment is underground water or well water containing a relatively large amount of carbon dioxide.

As shown in Fig. 57, a carbon-dioxide degassing apparatus 51 is arranged at a pre-stage of the electromagnetic field treatment apparatus 41. The carbon-dioxide degassing apparatus 51 discharges carbon dioxide from raw water containing a relatively large amount of the carbon dioxide. As a method for the discharge, there are various methods such a method of imparting ultrasound to the raw water to degas carbon dioxide, a method of exposing the raw water to the air, and a method of heating and cooling the raw water.

Stable electromagnetic field treatment for water to be treated according to the first embodiment, the second embodiment, or the third embodiment can be performed by using an electromagnetic field treatment system including the carbon-dioxide degassing apparatus 51.

Moreover, in still another preferred mode of this embodiment, various terrestrial magnetism eliminating means for eliminating the influence of the terrestrial magnetism explained in the third embodiment are incorporated in the electromagnetic field treatment apparatus. Among the terrestrial magnetism eliminating means, in particular, means employing the method of demagnetizing terrestrial magnetism explained with reference to Fig. 53 is extremely suitable because the means totally eliminates the influence of the terrestrial magnetism in the water pipe 1, can freely cope with an environmental change, and makes it easy to perform highly efficient activation of water stably.

Several modifications of this embodiment are explained. The electromagnetic field treatment apparatus 41 supplies alternating currents of two different kinds of resonant frequencies to one coil. However, as explained in the second embodiment, the alternating currents of the two different kinds of resonant frequencies may be supplied to different coils, respectively. These coils may be incorporated in the electromagnetic-field supplying units (7, 25, and 26).

As a modification of the electromagnetic field treatment apparatus according to this embodiment, the electromagnetic field treatment apparatus may be an electromagnetic field treatment apparatus that supplies an alternating current of a single frequency among resonant frequencies to a coil as explained in the first embodiment.

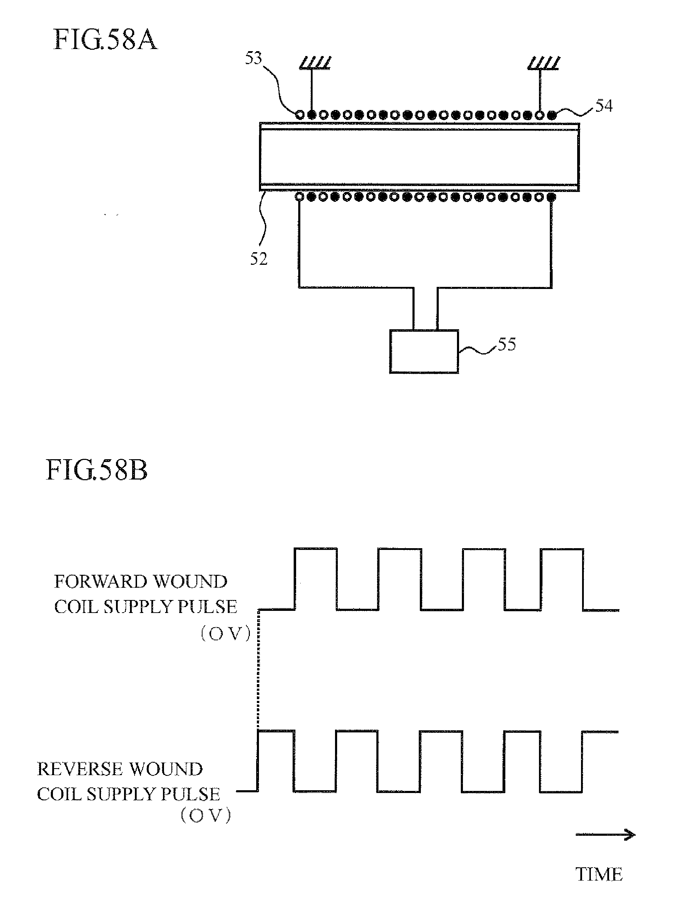

Moreover, as a modification of the electromagnetic field treatment apparatus according to this embodiment, an electric current of a positive or negative unipolar pulse waveform such as a signal clock may be used. Such an electric current of the unipolar waveform is also an electromagnetic field inducing current. This is explained with reference to Fig. 58. Fig. 58A is a schematic diagram of an electromagnetic field treatment apparatus that supplies an electric current of a unipolar pulse waveform. Fig. 58B is a waveform chart of the electric current in this case showing a positive square pulse waveform.

As shown in Fig. 58A, the electromagnetic field treatment apparatus in this case includes a forward wound coil 53 attached to the outer side of a water pipe 52 and indicated by white marks, a reverse wound coil 54 wound in the opposite direction of the forward wound coil 53, and a unipolar-current supplying unit 55 that alternately supplies an electric current of a unipolar pulse waveform to the forward wound coil 53 and the reverse wound coil 54.

As shown in Fig. 58B, an electric current of an identical square pulse with a phase shifted by a half cycle is alternately supplied to the forward wound coil 53 and the reverse wound coil 54. As shown in Fig. 58A, both terminal ends of the forward wound coil 53 and the reverse wound coil 54 are fixed to a ground potential. A circuit of the unipolar-current supplying unit 55 that generates the square pulse current is a digital circuit. The semiconductor integrated circuit described above is suitably used as the circuit.

In this way, an oscillating electromagnetic field same as that in the case in which the alternating currents of the waveform shown in Fig. 2 is supplied to one coil is generated in the water pipe 52 and activation of water can be performed in the same manner as the case of the first embodiment. In this modification, since an electric current of a pulse waveform can be generated by a single power supply, an electromagnetic field treatment apparatus having high stability is realized at low cost.

Moreover, as a modification of this embodiment, in the electromagnetic field treatment apparatus shown in Fig. 58, even when an electromagnetic field treatment method for using, for example, only the forward wound coil 53 or the reverse wound coil 54 and supplying an electric current of a unipolar pulse waveform to one of the coils is adopted, solubility of calcium phosphate described above increases compared with untreated water and it is possible to perform activation of water.

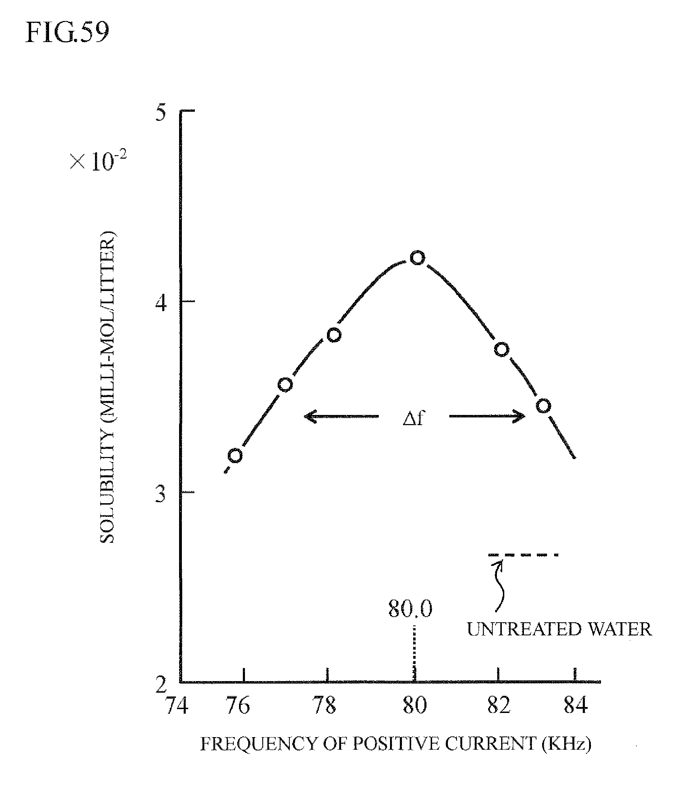

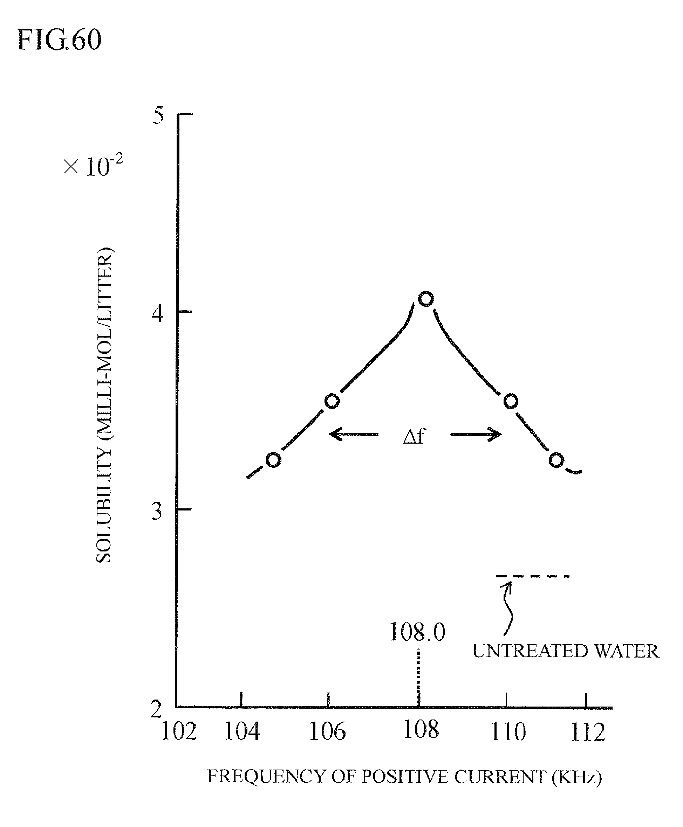

As described above, when the electric current of the unipolar pulse wave is used instead of the alternating current of the square waveform shown in Fig. 2, as shown in Figs. 59 and 60, 80.0 kHz of the resonant frequency $A_7$ belonging to the first resonant frequency group and 108.0 kHz of the resonant frequency $B_7$ belonging to the second resonant frequency group are measured. Figs. 59 and 60 are diagrams showing a resonance characteristic of a resonant frequency in electromagnetic field treatment for supplying an electric current of a positive square pulse to, for example, the forward wound coil 53 and oscillating the forward wound coil 53. In a frequency band in which solubility of the calcium phosphate 16 shows specificity, a frequency of a positive current fed to the forward wound coil 53 is plotted on the abscissa and the solubility of the calcium phosphate 16 is plotted on the ordinate.

From Fig. 59, the resonant frequency $A_7$ is 80.0 kHz or in the vicinity thereof and a range of a half-value width ($\Delta f$) thereof is 76.5 to 83.1 kHz. The half-value width ($\Delta f$) is a frequency band in which solubility of the calcium phosphate 16 is equal to or larger than a half of a difference between a maximum value of the solubility and solubility in the case of untreated water in this resonant frequency band having specificity. From Fig. 60, the resonant frequency $B_7$ is 108.0 Hz or in the vicinity thereof and a range of a half-value width ($\Delta f$) thereof is 104.8 to 111.1 kHz.

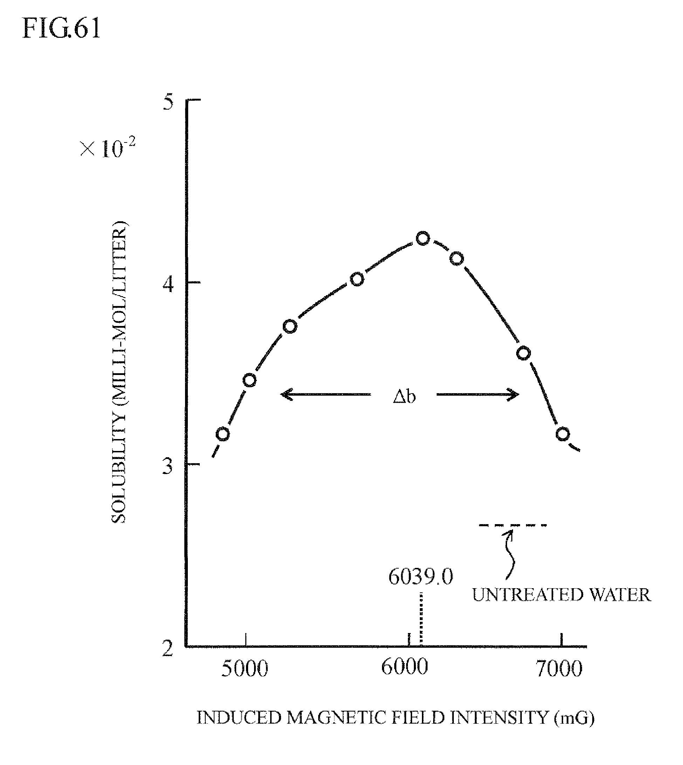

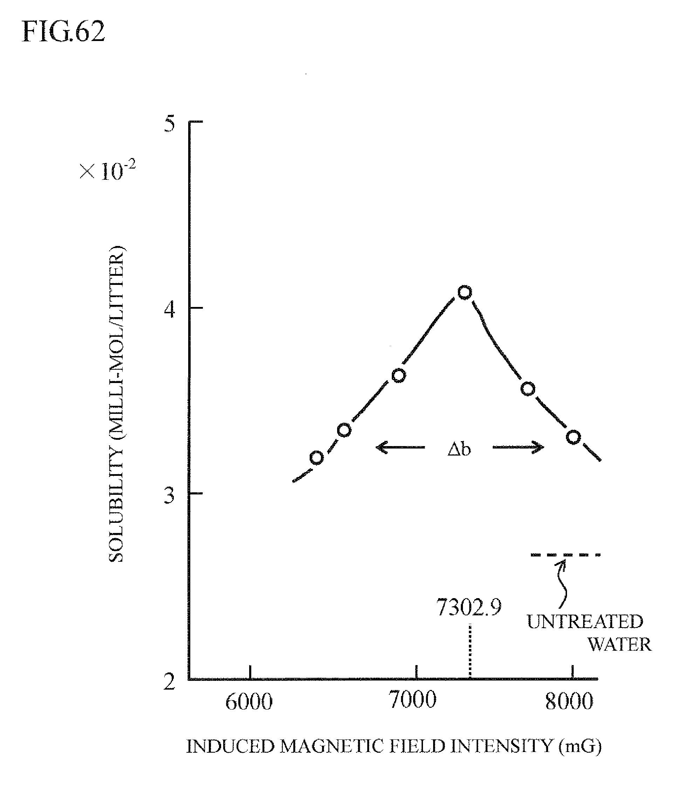

In these cases, as in the cases described above, the resonant magnetic field described above is measured as shown in Figs. 61 and 62. Figs. 61 and 62 are diagrams showing a resonant characteristic of a resonant magnetic field at a resonant frequency. Induced magnetic field intensity at the time of a peak current of a positive current fed to the forward wound coil 53 is plotted on the abscissa and solubility of the calcium phosphate 16 is plotted on the ordinate.

From Fig. 61, at the resonant frequency $A_7$, in the case of the base mode, a resonant magnetic field has induced magnetic field intensity of 6039.0 mG or in the vicinity thereof. A range of a half-value width ($\Delta b$) thereof is 5027.8 to 6797.4 mG. From Fig. 62, at the resonant frequency $B_7$, in the case of the base mode, a resonant magnetic field has induced magnetic field intensity of 7302.9 mG or in the vicinity thereof. A range of a half-value width ($\Delta b$) thereof is 6628.8 to 8033.2 mG.

[Fifth Embodiment]

A fifth embodiment of the present invention is explained. This embodiment is characterized by subjecting water to electromagnetic field treatment using an electromagnetic field formed by an oscillating electric field generated by an AC voltage of a specific frequency and a static magnetic field generated by feeding a direct current to a coil.

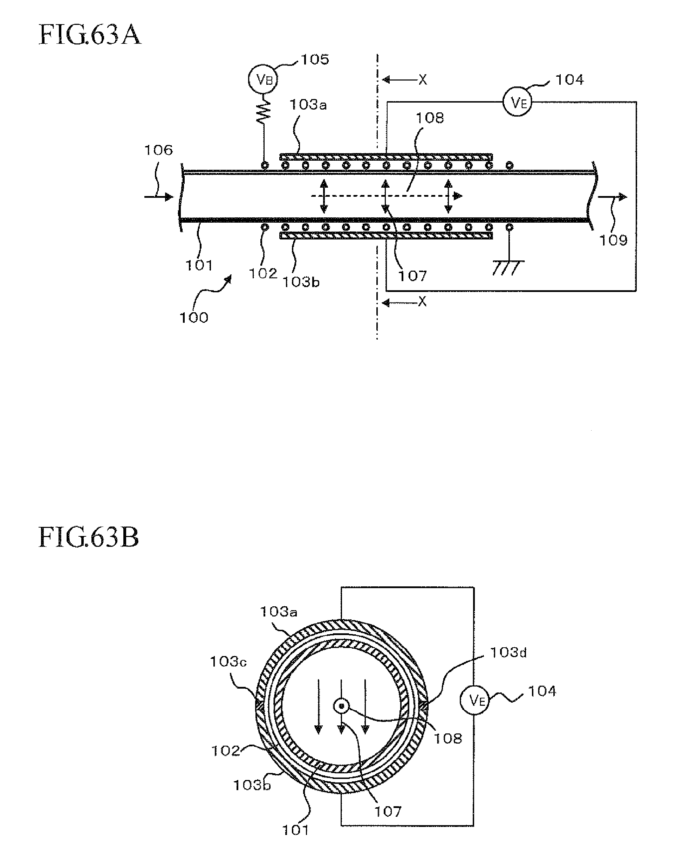

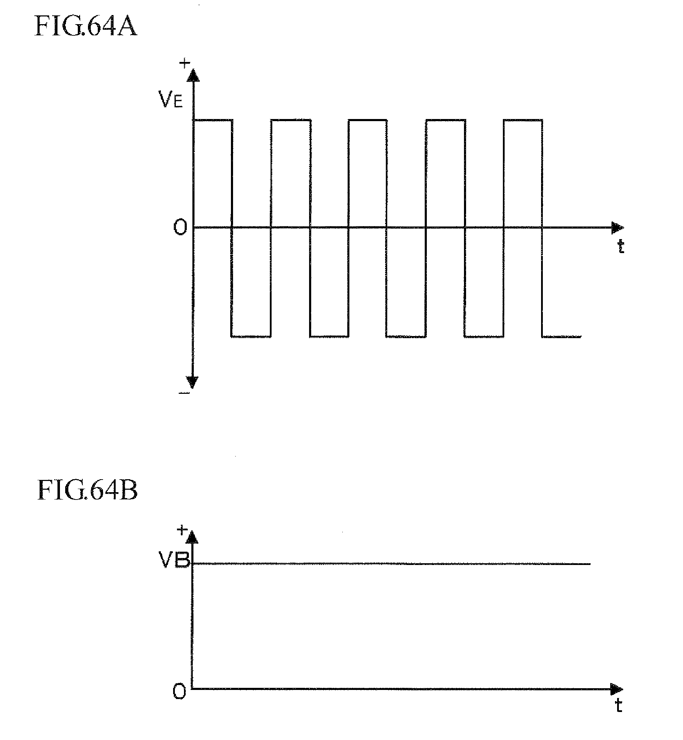

Fig. 63 is an explanatory diagram showing an example of a method of subjecting water to electromagnetic field treatment and an electromagnetic field treatment apparatus in this embodiment. Fig. 63A is a longitudinal sectional view in a water pipe axis direction of an electromagnetic-field generating unit configuring the electromagnetic field treatment apparatus. Fig. 63B is an enlarged sectional view of the electromagnetic-field generating unit taken along arrow X-X in Fig. 63A. Fig. 64 is a voltage waveform chart showing an example of a power supply voltage for generating an electromagnetic field.

As shown in Fig. 63, a coil 102 wound around an outer wall of a water pipe 101 of, for example, cylindrical vinyl chloride is provided in an electromagnetic-field generating unit 100. A counter electrode 103 including a first electrode 103a and a second electrode 103b opposed to each other across the water pipe 101 is attached to the outer side of the coil 102. This counter electrode 103 is insulated and separated from the coil 102 and arranged to cover the coil 102. The first electrode 103a and the second electrode 103b are separated and connected by insulating spacers 103c and 103d. A power supply for electric field 104 is connected to the counter electrode 103. A power supply for magnetic field 105 is connected to the coil 102. The electromagnetic-field generating unit 100, the power supply for electric field 104, and the power supply for magnetic field 105 configure a main part of the electromagnetic field treatment apparatus.

The coil 102 and the counter electrode 103 are made of a conductive material such as a copper material. The power supply for electric field 104 applies an AC voltage $V_E$ of a specific frequency to the counter electrode 103. The power supply for magnetic field 105 supplies a DC voltage $V_B$ to the coil 102.

For example, in electromagnetic field treatment for water employing this electromagnetic field treatment apparatus, water to be treated 106 such as tap water or drainage is fed into the water pipe 101 and the AC voltage $V_E$ of the specific frequency, i.e., a resonant frequency described later is applied to the counter electrode 103 through the power supply for electric field 104. A voltage value of the AC voltage $V_E$ is, for example, about ±10 V and changes at a fixed period. An oscillating electric field 107 of a resonant frequency is imparted to the water to be treated 106. The DC voltage $V_B$ is supplied to the coil 102 through the power supply for magnetic field 105 and a static magnetic field 108 is imparted to the water to be treated 106. The AC voltage $V_E$ suitably has, for example, a square waveform shown in Fig. 64A. The DC voltage $V_B$ shown in Fig. 64B preferably feeds a direct current for generating a specific resonant magnetic field described later in the water pipe 101 to the coil 102 via an appropriate resistor.

In this way, the oscillating electric field 107 generated by the AC voltage $V_E$ of the specific frequency and oscillating at the resonant frequency and the Static magnetic field 108 generated by the direct current are imparted to the water to be treated 106, whereby highly-efficiently activated active treated water 109 is obtained. When a magnetic field of the static magnetic field 108 is present in a resonant magnetic field described later, the activation is more effective.

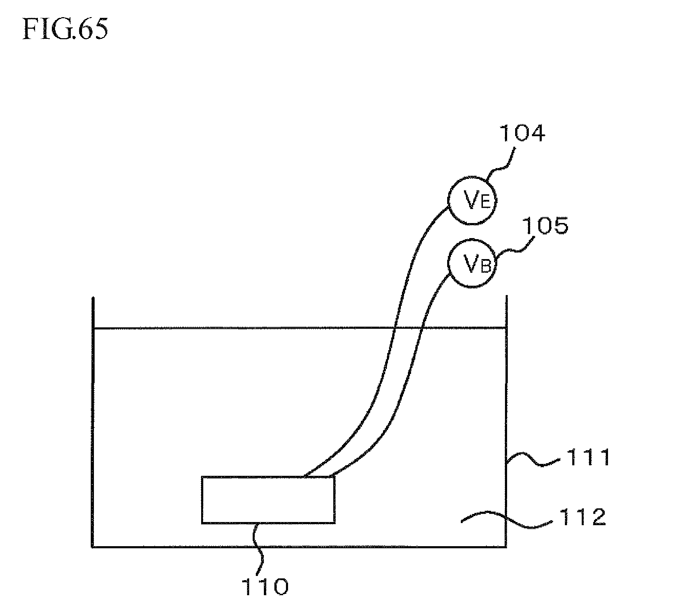

Alternatively, as shown in Fig. 65, an electromagnetic-field imparting unit 110 including the counter electrode 103 connected to the power supply for electric field 104 and the coil 102 connected to the power supply for magnetic field 105 is immersed in pooled water 112 in a tank 111. In this state, the AC voltage $V_E$ of the specific frequency and the DC voltage $V_B$ described above are supplied to the electromagnetic-field imparting unit 110 through the power supply for electric field 104 and the power supply for magnetic field 105. Alternatively, the static magnetic field 108 is changed to a resonant magnetic field under the oscillating electric field 107 of the resonant frequency described above. In this way, the oscillating electric field 107 generated by the AC voltage $V_E$ of the specific frequency and the static magnetic field 108 are imparted to the pooled water 112, whereby the pooled water 112 is activated and changed to active treated water.

The electromagnetic-field imparting unit 110 has the electromagnetic-fieid generating unit 100 as the basic structure, although detailed explanation thereof is omitted. The coil 102 and the counter electrode 103 as components thereof are covered with an impermeable member and the pooled water 112 flows into the coil 102.

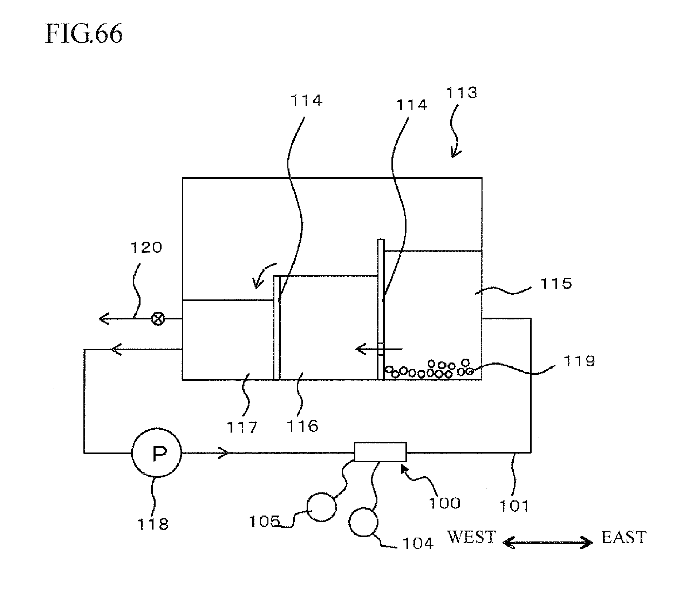

The resonant frequency and the resonant magnetic field described above are explained below. The inventor performed a detailed experiment concerning a dissolution characteristic of calcium phosphate ($Ca_3 (PO_4)_2$) of active treated water generated by supplying the AC voltage $V_E$ of various frequencies to the counter electrode 103, supplying a direct current to the coil 102 having a known electromagnetic characteristic at the DC voltage $V_B$, and applying electromagnetic field treatment to the tap water. In this experiment, specifically, an experimental apparatus for electromagnetic field treatment schematically shown in Fig. 66 is used.

In this experimental apparatus, in the same manner as explained with reference to Fig. 4, the inside of an experiment tank 113 is divided into three reservoir chambers 115, 116, and 117 by partition plates 114. As water to be treated, room-temperature (about 20°C) tap water having a pH value of about 7 passed through ion exchange resin is used. This ion exchange water is circulated through the reservoir chambers 115, 116, and 117 in this order by a pump 118 provided along the water pipe 101. The electromagnetic-field generating unit 100 is attached to the water pipe 101 on a downstream side of the pump 118. The coil 102 of this electromagnetic-field generating unit 100 is formed by uniformly winding a copper wire coil thirty-four times over the length of 14.4 cm of a pipe in a cylindrical shape at a winding diameter of 3.5 cmϕ. At the bottom of the reservoir chamber 115, calcium phosphate ($Ca_3(PO_4)_2$) 119 hardly soluble in normal water is placed in a power state. A water sampling pipe 120 communicates with the reservoir chamber 117.

In the experiment, since the influence of terrestrial magnetism appears in an experiment result as described above, the axis of the coil 102 is set in an East to West direction. Since the influence of ions of calcium, magnesium, and the like in the tap water also appears in the result, the water to be treated is the tap water passed through the ion exchange resin.

In such an experimental apparatus, a frequency and a voltage value of the AC voltage $V_E$ of the square waveform are variable in the power supply for electric field 104. The DC voltage $V_B$ is variable in the power supply for magnetic field 105. Therefore, under conditions of various frequencies and voltage values of AC voltages and voltage values of DC voltages, electromagnetic field treatment was applied to the tap water to change the tap water into active treated water and the density of mono calcium phosphate ion $(Ca (HPO_4))^{2-}$ in the active treated water in the reservoir chamber 117 was measured. The calcium phosphate 119 is dissolved by the active treated water according to chemical formula (1).

[chemical formula 1] $$Ca(PO_4)_2+2H^+ \rightleftarrows 3Ca^{2+}+2(HPO_4)^{-2} \qquad (1)$$

In this way, solubility of the calcium phosphate 119 by the active treated water, i.e., dissolving ability of the active treated water was checked in detail. A pH value of the active treated water was measured. A frequency of the AC voltage $V_E$ was checked in a range of 250 Hz to 250 kHz.

The measurement of the density of the mono calcium phosphate ion was performed by, as in the case of the first embodiment, after performing the electromagnetic field treatment for a fixed time (about 10 hours), opening a valve of the sampling pipe 120 to sample the active treated water in the reservoir chamber 117 and according to a publicly-known precipitation titration method using silver nitrate ($AgNO_3$) as a reference solution and using potassium chromate ($K_2CrO_4$) as an indicator.

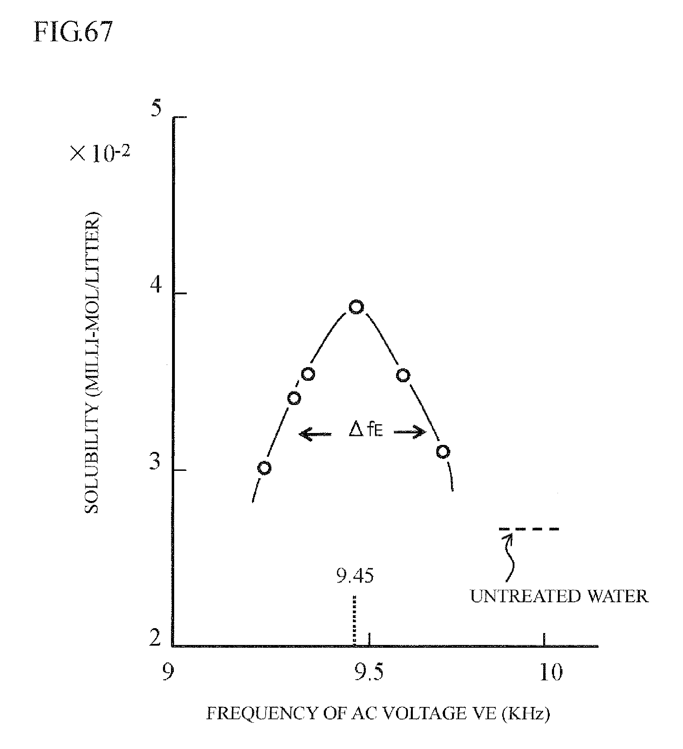

As a result, it was fond that the solubility of the calcium phosphate 119 specifically increased in a specific frequency band of the AC voltage $V_E$ as described above. An example of the increase in the solubility is shown in Fig. 67. Fig. 67 is a diagram showing a resonance characteristic of a resonant frequency at the AC voltage $V_E$. In a frequency band in which solubility of the calcium phosphate 119 shows specificity, a frequency of the AC voltage $V_E$ applied to the counter electrode 103 of the electromagnetic-field generating unit 100 is plotted on the abscissa and the solubility of the calcium phosphate 119 is plotted on the ordinate. A direct current is supplied to the coil 102 by the DC voltage $V_B$ to generate a static magnetic field.

It is seen from Fig. 67 that, when the frequency of the AC voltage $V_E$ is a resonant frequency of 9.45 kHz (a resonant frequency $F_3$ described later), the solubility specifically increases and has a peak value. A range of a half-value width ($\Delta f_E$) thereof is 9.3 to 9.6 Hz. A half-value width ($\Delta f_E$) is a frequency band in which solubility of the calcium phosphate 119 is equal to or larger than a half of a difference between a maximum value of the solubility and solubility in the case of untreated water in this resonant frequency band having specificity.

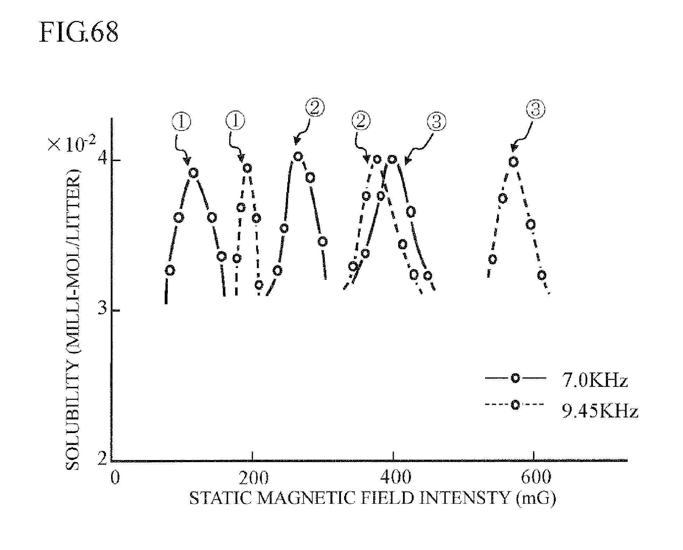

It was also found that the solubility of the calcium phosphate 119 specifically increased at static magnetic field intensity of the static magnetic field 108 generated in the coil 102 by a specific direct current value flowing through the coil 102, i.e., the DC voltage $V_B$. An example of the increase in the solubility is shown in Fig. 68. Fig. 68 is a diagram showing a resonance characteristic of a resonant magnetic field at a resonant frequency of the AC voltage $V_E$. Static magnetic field intensity generated by the coil 102 is plotted on the abscissa and solubility of the calcium phosphate 119 is plotted on the ordinate.

From Fig. 68, at a resonant frequency 7.0 kHz (a resonant frequency $E_3$ described later) of the AC voltage $V_E$, as indicated by a. solid line (1), the solubility specifically increases when static magnetic field intensity is 130.6 mG (milli-gauss) or in the vicinity thereof. As indicated by a solid line (2) and a solid line (3), it is seen that the solubility specifically increases at static magnetic field intensities twice and three times as large as the static magnetic field intensity 130. 6 mG (the base mode) or in the vicinity thereof. Similarly, at a resonant frequency 9.45 kHz (a resonant frequency $F_3$) of the AC voltage $V_E$, as indicated by a broken line (1), the solubility specifically increases at static magnetic field intensity of 188.5 mG (the base mode) or in the vicinity thereof. As indicated by a broken line (2) and a broken line (3), the solubility also specifically increases at static magnetic field intensities twice and three times as large as the static magnetic field intensity 188.5 mG or in the vicinity thereof. In this case, an area of static magnetic field intensity equal to or larger than a half of a difference between a peak value of the solubility and solubility in the case of untreated water is set as a half-value width ($\Delta b$) thereof.

In this way, at the resonant frequency of the AC voltage $V_E$, a resonant magnetic field in which the solubility specifically increases is present. Moreover, a large number of resonant magnetic fields in an n-times mode of the base mode at the resonant frequency of the AC voltage $V_E$ are discontinuously present. Here, n is a positive integer.

Such a specific frequency and specific static magnetic field intensity at the AC voltage $V_E$ are collectively described below as a resonant frequency and a resonant magnetic field, respectively.

{Resonant frequency}

In the specific frequency, a plurality of two kinds of resonant frequencies having different characteristics are present. Therefore, these resonant frequencies are classified into a first resonant frequency group and a second resonant frequency group.

(First resonant frequency group)

in this first resonant frequency group, at least plural resonant frequencies $E_i$ (i = integers 1 to 7) are present. A resonant frequency $E_1$ is 968 Hz or in the vicinity thereof and a range of a half-value width ($\Delta f_E$) thereof is 924 to 1008 Hz. A resonant frequency $E_2$ is 1908 Hz or in the vicinity thereof and a range of a half-value width ($\Delta f_E$) thereof is 1830 to 1990 Hz. A resonant frequency $E_3$ is 7.0 kHz or in the vicinity thereof and a range of a half-value width ($\Delta f_E$) thereof is 6.5 to 7.44 kHz. A resonant frequency $E_4$ is 14.0 kHz or in the vicinity thereof and a range of a half-value width ($\Delta f_E$) thereof is 12.92 to 15.08 kHz. A resonant frequency $E_5$ is 40.0 kHz or in the vicinity thereof and a range of a half-value width ($\Delta f_E$) thereof is 34.6 to 44.8 kHz. A resonant frequency $E_6$ is 74.6 kHz or in the vicinity thereof and a range of a half-value width ($\Delta f_E$) thereof is 69.8 to 80.6 kHz. A resonant frequency $E_7$ is 160.0 kHz or in the vicinity thereof and a range of a half-value width ($\Delta f_E$) thereof is 153.0 to 166.2 kHz.

Moreover, in this first resonant frequency group, resonant frequencies $E_i$ (i = integers -2 to 0) are present. A resonant frequency $E_{-2}$ is 303.0 Hz or in the vicinity thereof and a range of a half-value width ($\Delta f_E$) thereof is 295.0 to 309.4 Hz. A resonant frequency $E_{-1}$ is 445.0 Hz or in the vicinity thereof and a range of a half-value width ($\Delta f_E$) thereof is 434.4 to 456.2 Hz. A resonant frequency $E_0$ is 690.0 Hz or in the vicinity thereof and a range of a half-value width ($\Delta f_E$) thereof is 677.0 to 702.0 Hz.

(Second resonant frequency group)

In the second frequency group, at least plural resonant frequencies $F_i$ (i = integers 1 to 7) are present. A resonant frequency $F_1$ is 1310 Hz or in the vicinity thereof and a range of a half-value width ($\Delta f_E$) thereof is 1212 to 1444 Hz. A resonant frequency $F_2$ is 2.58 kHz or in the vicinity thereof and a range of a half-value width ($\Delta f_E$) thereof is 2.38 to 2.76 kHz. A resonant frequency $F_3$ is 9.45 kHz or in the vicinity thereof and a range of a half-value width ($\Delta f_E$) thereof is 9.3 to 9.6 kHz. A resonant frequency $F_4$ is 18.94 kHz or in the vicinity thereof and a range of a half-value width ($\Delta f_E$) thereof is 18.12 to 19.96 kHz. A resonant frequency $F_5$ is 54.0 kHz or in the vicinity thereof and a range of a half-value width ($\Delta f_E$) thereof is 50.0 to 57.8 kHz. A resonant frequency $F_6$ is 100.8 kHz or in the vicinity thereof and a range of a half-value width ($\Delta f_E$) thereof is 98.2 to 103.6 kHz. A resonant frequency $F_7$ is 216.0 kHz or in the vicinity thereof and a range of a half-value width ($\Delta f_E$) thereof is 209.6 to 222.2 kHz.

Moreover, in this second resonant frequency group, resonant frequencies $F_i$ (i = integers -2 to 0) are present. A resonant frequency $F_{-2}$ is 410.0 Hz or in the vicinity thereof and a range of a half-value width ($\Delta f_E$) thereof is 403.0 to 417.0 Hz. A resonant frequency $F_{-1}$ is 602.0 Hz or in the vicinity thereof and a range of a half-value width ($\Delta f_E$) thereof is 586.0 to 621.0 Hz. A resonant frequency $F_0$ is 932.0 Hz or in the vicinity thereof and a range of a half-value width ($\Delta f_E$) thereof is 914.4 to 949.2 Hz.

As the vicinity of the resonant frequency $E_i$ and the resonant frequency $F_i$ (i = integers -2 to 7), about $\pm$1.2% of the numerical values of the resonant frequencies are preferable. When the resonant frequencies are in this range, solubility equal to or higher than 80% of the solubility at the resonant frequencies is obtained. There is no problem in practical use for generation of function water.

In the fifth embodiment, the AC voltage $V_E$ of any one frequency selected out of the first resonant frequency group or the second resonant frequency group is supplied from the power supply for electric field 104 to the counter electrode 103 and the DC voltage $V_B$ is supplied from the power supply for magnetic field 105 to the coil 102 to impart an electromagnetic field to the water to be treated 106 in the water pipe 101. Consequently, the water to be treated 106 is simply and easily and efficiently and stably activated.

{Resonant magnetic field}

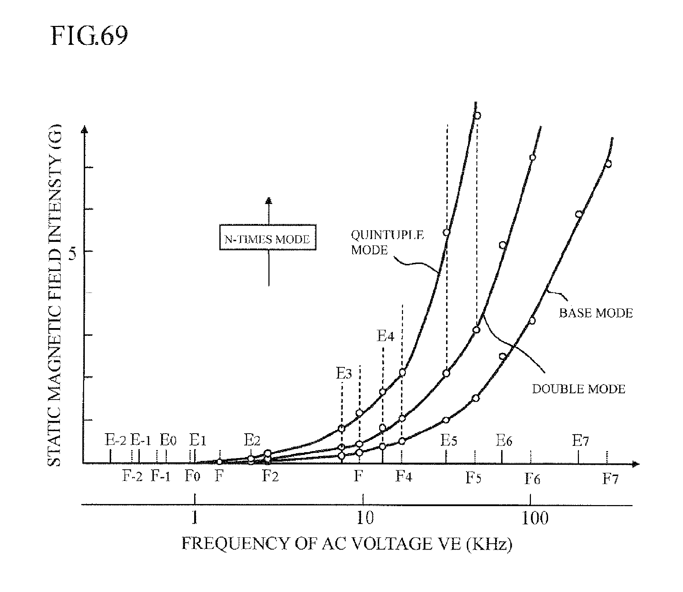

Resonant magnetic fields present with respect to the respective resonant frequencies of the AC voltage $V_E$ described above are collated in Fig. 69. Fig. 69 is a correlation diagram of a resonant frequency and a resonant magnetic field. A logarithm of a frequency of the AC voltage $V_E$ is plotted on the abscissa and static magnetic field intensity in a resonant magnetic field is plotted on the ordinate. In the figure, modes up to the quintuple mode are shown and further modes are not shown. However, at the resonant frequencies $E_3$ and $F_3$ that are easily measured by this experimental apparatus, resonant magnetic fields in the n-times mode five or more times as large as the base mode are confirmed.

In a resonant magnetic field in the first resonant frequency group, at the resonant frequency $E_1$, in the case of the quadruple mode, a resonant magnetic field at that point is 69.1 mG or in the vicinity thereof. A range of a half-value width ($\Delta$b) thereof is 64.1 to 72.8 mG. Static magnetic field intensity of a resonant magnetic field in the base mode in this case is 17.3 mG or in the vicinity thereof. At the resonant frequency $E_2$, a resonant magnetic field in the case of the double mode is 63.8 mG or in the vicinity thereof. A range of a half-value width ($\Delta$b) thereof is 60.5 to 66.4 mG. Static magnetic field intensity of a resonant magnetic field in the base mode is 31.9 mG or in the vicinity thereof.
Similarly, at the resonant frequency $E_3$, a resonant magnetic field in the case of the base mode is 130.6 mG or in the vicinity thereof. A range of a half-value width ($\Delta$b) thereof is 102.5 to 156.7 mG. At the resonant frequency $E_4$, a resonant magnetic field in the case of the base mode is 323.0 mG or in the vicinity thereof. A range of a half-value width ($\Delta$b) thereof is 298.1 to 351.8 mG.

Similarly, at the resonant frequency $E_5$, a resonant magnetic field in the case of the base mode is 1123.5 mG or in the vicinity thereof. A range of a half-value width ($\Delta$b) thereof is 989.3 to 1234.4 mG. At the resonant frequency $E_6$, a resonant magnetic field in the case of the base mode is 2556.0 mG or in the vicinity thereof. A range of a half-value width ($\Delta$b) thereof is 2328.1 to 2752.7 mG. At the resonant frequency $E_{-7}$, a resonant magnetic field in the case of the base mode is 6039.0 mG or in the vicinity thereof. A range of a half-value width ($\Delta$b) thereof is 5027.8 to 6797.4 mG.

Moreover, in the quintuple mode of the resonant frequency $E_{-2}$, a resonant magnetic field is 26.4 mG or in the vicinity thereof. A range of a half-value width ($\Delta$b) thereof is 25.2 to 27.5 mG. Static field intensity of a resonant magnetic field in the base mode in this case is 5.3 mG or in the vicinity thereof. Similarly, in the quintuple mode of the resonant

frequency $E_{-1}$, a resonant magnetic field is 36.8 mG or in the vicinity thereof. A range of a half-value width (Δb) thereof is 29.5 to 40.4 mG. Static magnetic field intensity of a resonant magnetic field in the base mode in this case is 7.4 mG or in the vicinity thereof. In the quintuple mode of the resonant frequency $E_0$, a resonant magnetic field is 61.7 mG or in the vicinity thereof. A range of a half-value width (Δb) thereof is 59.4 to 64.1 mG. Static magnetic field intensity of a resonant magnetic field in the base mode in this case is 12.3 mG or in the vicinity thereof.

In a resonant magnetic field in the second resonant frequency group, at the resonant frequency $F_1$, a resonant magnetic field in the case of the quadruple mode is 94.1 mG or in the vicinity thereof. A range of a half-value width (Δb) thereof is 90.1 to 99.2 mG. Static magnetic intensity of a resonant magnetic field in the base mode in this case is 23.5 mG or in the vicinity thereof.

Similarly, at the resonant frequency $F_2$, a resonant magnetic field in the case of the double mode is 94.1 mG or in the vicinity thereof. A range of a half-value width (Δb) thereof is 85.7 to 102.1 mG. Static magnetic field intensity of a resonant magnetic field in the base mode in this case is 47.1 mG or in the vicinity thereof. At the resonant frequency $F_3$, a resonant magnetic field in the case of the base mode is 188.5 mG or in the vicinity thereof. A range of a half-value width (Δb) thereof is 171.9 to 201.7 mG.

Similarly, at the resonant frequency $F_4$, a resonant magnetic field in the case of the base mode is 463.5 mG or in the vicinity thereof. A range of a half-value width (Δb) thereof is 368.0 to 547.7 mG. At the resonant frequency $F_5$, a resonant magnetic field in the case of the base mode is 1601.0 mG or in the vicinity thereof. A range of a half-value width (Δb) thereof is 1235.9 to 1938.1 mG. At the resonant frequency $F_6$, a resonant magnetic field in the case of the base mode is 3342.5 mG or in the vicinity thereof. A range of a half-value width (Δb) thereof is 3145.9 to 3623.4 mG. At the resonant frequency $F_7$, a resonant magnetic field in the case of the base mode is static magnetic intensity 7302.9 mG or in the vicinity thereof. A range of a half-value width (Δb) thereof is 6628.8 to 8033.2 mG.

Moreover, in the quintuple mode of the resonant frequency $F_{-2}$, a resonant magnetic field is 35.3 mG or in the vicinity thereof. A range of a half-value width (Δb) thereof is 34.1 to 36.4 mG. Static magnetic field intensity of a resonant magnetic field in the base mode in this case is 7.1 mG or in the vicinity thereof. Similarly, in the quintuple mode of the resonant frequency $F_{-1}$, a resonant magnetic field is 52.1 mG or in the vicinity thereof. A range of a half-value width (Δb) thereof is 49.9 to 54.4 mG. Static magnetic intensity of a resonant magnetic field in the base mode in this case is 10.4 mG or in the vicinity thereof. In the quintuple mode of the resonant frequency $F_0$, a resonant magnetic field is 81.6 mG or in the vicinity thereof. A range of a half-value width (Δb) thereof is 75.2 to 87.6 mG. Static magnetic field intensity of a resonant magnetic field in the base mode in this case is 16.3 mG or in the vicinity thereof.

As the vicinity of the resonant frequency $E_i$ and the resonant frequency $F_i$ (i = integers -2 to 7), magnetic field areas about ±2% of the numerical values of intensities of the respective resonant magnetic fields are preferable.

In the fifth embodiment, at any one frequency selected out of the first resonant frequency group or the second resonant frequency group, a direct current for inducing resonant magnetic fields in the n-times mode of the respective resonant magnetic fields in the base mode is supplied from the power supply for magnetic field 105 to the coil 102 to impart an electromagnetic field to the water to be treated 106 in the water pipe 101. In this way, the water to be treated 106 is stably and highly efficiently activated and changed to the active treated water 109.

In the electromagnetic field treatment employing a resonant frequency or a resonant magnetic field at the frequency explained in the fifth embodiment, the specific increase in the solubility of the calcium phosphate 119 indicates that, as explained in the first embodiment, an amount of hydrogen ions ($H^+$; actually, aquo-ions thereof) increases in the active treated water 109 obtained by subjecting the water to be treated 106 to the electromagnetic field treatment. As the amount of hydrogen ions increases, an amount of hydroxyl ions ($OH^-$; actually, aquo-ions thereof) also increases in the same degree as the amount of hydrogen ions. For example, the AC voltage $V_E$ of the specific frequency (the resonant frequency) described above is supplied to the counter electrode 103 and a specific direct current for generating a resonant magnetic field is supplied to the coil 102 to apply the electromagnetic field treatment to the tap water, whereby hydrogen ions and hydroxyl ions four or more time as large as those in the case of untreated tap water are generated in the tap water treated at the room temperature.

As pre-treatment of the electromagnetic field treatment method for water, carbon dioxide in water is degassed in the same manner as explained in the first embodiment, whereby the hydrogen ions and the hydroxyl ions generated in a large amount can be stably present in the active treated water 109. In the case of water such as underground water or well water having high solubility of carbon dioxide, extremely stable electromagnetic treatment of water to be treated can be performed by using, for example, an electromagnetic field treatment system including a carbon dioxide degassing apparatus.

In the fifth embodiment, the various effects explained in the first embodiment are realized in completely the same manner. In the electromagnetic field treatment method according to the fifth embodiment, power consumption in the electromagnetic field treatment is extremely small as in the case of the first embodiment. Therefore, the electromagnetic field treatment according to this embodiment has high economy. Moreover, since stable effects are realized regardless of conditions such as a type of a liquid to be treated and a place, universality thereof is high.

The coil 102 may be formed of a material having conductivity and magnetism like stainless steel.

[Sixth Embodiment]

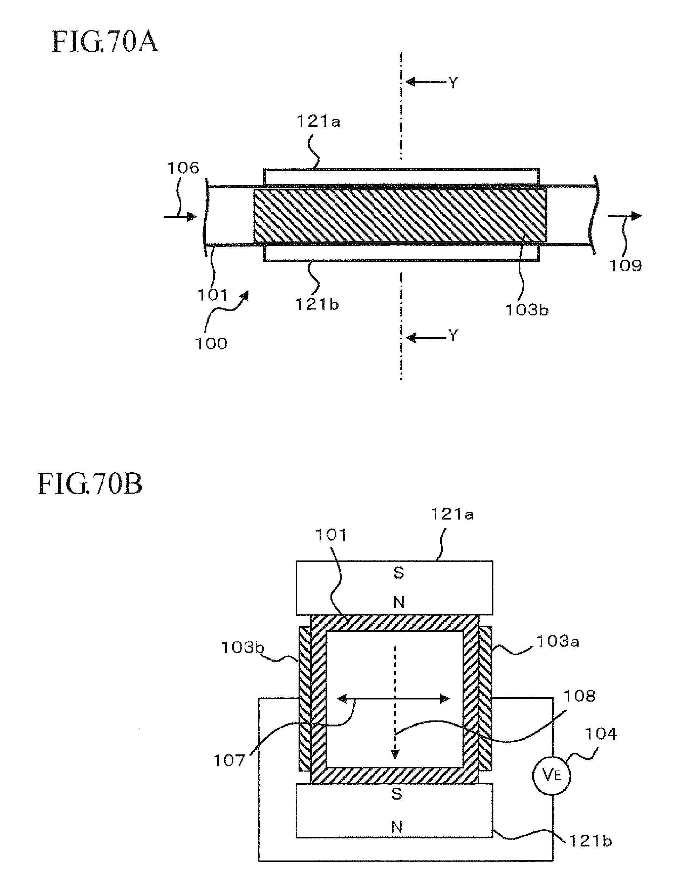

A preferred sixth embodiment of the present invention is explained. This embodiment is characterized by generating the static magnetic field explained in the fifth embodiment using a permanent magnet. Magnetic field intensity of the static magnetic field in this case is about $10^3$ to $10^4$ times as large as that in the fifth embodiment and, for example, about 3000 G. Fig. 70 is an explanatory diagram showing an example of a method of subjecting water to electromagnetic field treatment and an electromagnetic field treatment apparatus in this embodiment. Fig. 70A is a side view of an electromagnetic-field generating unit configuring the electromagnetic field treatment apparatus. Fig. 70B is an enlarged sectional view of the electromagnetic-field generating unit taken along arrow Y-Y in Fig. 70A.
As shown in Fig. 70, a counter magnet 121 including a first permanent magnet 121a and a second permanent magnet 121b opposed to each other across the water pipe 101 of, for example, vinyl chloride of a rectangular shape in section is attached to the electromagnetic-field generating unit 100. The first permanent magnet 121a and the second permanent magnet 121b are arranged such that heteropolar magnetic poles face each other to generate magnetic fluxes in one direction in the water pipe 101. For example, the first permanent magnet 121a and the second permanent magnet 121b are arranged such that, for example, a lower end shown in the figure is an N pole and an upper end is an S pole. The counter electrode 103 including the first electrode 103a and the second electrode 103b opposed to each other across the water pipe 101 is attached to the outer side of the water pipe 101 where the counter magnet 121 is not attached. The counter electrode 103 is arranged to be insulated and separated from the counter magnet 121. The power supply for electric field 104 is connected to the counter electrode 103. The electromagnetic field generating unit 100 and the power supply for electric field 104 configure a main part of the electromagnetic field treatment apparatus. The counter electrode 103 is formed of a conductive material such as a copper material as in the fifth embodiment.
In electromagnetic field treatment for water employing such an electromagnetic field treatment apparatus, the water to be treated 106 such as tap water or drainage is fed into the water pipe 101 and the AC voltage $V_E$ of the resonant frequency explained in the fifth embodiment is applied to the counter electrode 103 through the power supply for electric field 104 to impart the oscillating electric field 107 of the resonant frequency to the water to be treated 106. At the same time, the static magnetic field 108 is imparted to the water to be treated 106 by the counter magnet 121. The AC voltage $V_E$ suitably has the square waveform or the like explained with reference to Fig. 64A.
In this way, the oscillating electric field 107 that is generated by the AC voltage $V_E$ of the resonant frequency and oscillates and the static magnetic field 108 generated by the permanent magnet are imparted to the water to be treated 106, whereby the highly-efficiently activated active treated water 109 is obtained in the same manner as explained in the fifth embodiment.
Alternatively, as shown in Fig. 65, the electromagnetic-field imparting unit 110 including the counter electrode 103 connected to the power supply for electric field 104 and the counter magnet 121 is immersed in the pooled water 112 in the tank 111. In this state, the electromagnetic field including the oscillating electric field 107 of the resonant frequency and the static magnetic field 108 is supplied to the electromagnetic-field imparting unit 110 through the power supply for electric field 104. In this way, the pooled water 112 is activated and changed to active treated water.
The electromagnetic-field imparting unit 110 in this case has the electromagnetic-field generating unit 100 as the basic structure. The counter electrode 103 and the counter magnet 121 as components thereof are covered with an impermeable member and the pooled water 112 flows into a space surrounded by the counter electrode 103 and the counter magnet 121.
In the sixth embodiment, the static magnetic field 108 is generated by using the counter magnet 121 including the permanent magnet in the electromagnetic field generating unit 100. Moreover, static magnetic field intensity of the permanent magnet is far higher compared with that in the case of the static magnetic field generated by the coil 102 explained with reference to Fig. 69 in the fifth embodiment. Therefore, the discontinuity of integer times of the base mode in the resonant magnetic fields that occurs when the static magnetic field intensity is as small as about several gausses or less as shown in Fig. 69 can be nearly neglected in the case of the permanent magnet that generates a high static magnetic field. Even in the electromagnetic-field generating unit 100 configured by using an inexpensive permanent magnet available in the market, highly efficient activation of water to be treated is possible. This is because the discontinuity of the resonant magnetic fields is absorbed in spatial or temporal fluctuation of the static magnetic field intensity generated by the permanent magnet and, even in the electromagnetic-field generating unit 100 that is simple and easy and inexpensive in this way, magnetic field resonance in activation of water always easily occurs.
On the other hand, in the fifth embodiment, it is necessary to highly accurately control an electric current fed to the coil 102 in order to cause the magnetic field resonance. A circuit configuration for that purpose is expensive. As a result, the electromagnetic-field generating unit 100 is more expensive than that in the case of the sixth embodiment.
In this way, in the sixth embodiment, effects same as those explained in the fifth embodiment are realized and the electromagnetic field treatment is made higher in economy by the inexpensive electromagnetic field treatment apparatus. Moreover, stable effects are realized regardless of conditions such as a type of a liquid to be treated and a place.
In this embodiment, the electromagnetic-field generating unit 100 may be attached to the outer side of the cylindrical water pipe 106.

[Seventh Embodiment]

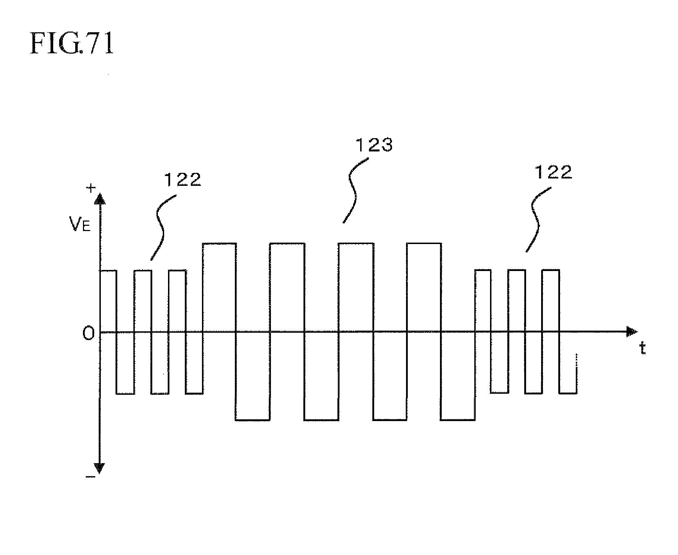

A preferred seventh embodiment of the present invention is explained. This embodiment is characterized to use one resonant frequency selected out of the first resonant frequency group and one resonant frequency selected out of the second resonant frequency group of the AC voltage $V_E$ explained in the fifth embodiment and simultaneously activating water using these two resonant frequencies. Consequently, the water is efficiently subjected to electromagnetic field treatment and active treated water thereof is extended in life as function water. Fig. 71 is a waveform chart showing an example of the AC voltage $V_E$ for mixing such two resonant frequencies to generate an electromagnetic field.

In this embodiment, as shown in Fig. 71, an alternating current voltage includes two resonant frequencies. The first frequency voltage 122 and the second frequency voltage 123 are amplitude-modulated to have, for example, different peak voltages, respectively, and supplied to the counter electrode 103 of the electromagnetic-field generating unit 100 shown in Fig. 63 or Fig. 70. A waveform of the first frequency voltage 122 is a square waveform shown in Fig. 64A. A frequency thereof is selected out of the first resonant frequency group explained in the fifth embodiment. Similarly, a waveform in the second frequency voltage 123 is also a square waveform. A frequency thereof is selected out of the second resonant frequency group.

The amplitudes, i.e., peak voltages of the first frequency current 122 and the second frequency current 123 are set in a range of several tens mV to several tens V in the same manner as the AC voltage $V_E$ explained in the fifth embodiment and the sixth embodiment. The amplitudes in the first frequency voltage 122 and the second frequency voltage 123 are different from those shown in Fig. 71. The amplitude of the first frequency voltage 122 may be larger than that of the second frequency voltage 123. Alternatively, both the amplitudes may be the same.

Such an alternating voltage is formed by taking into account amplitude modulation in addition to so-called frequency modulation by two frequencies. The repetition of the first frequency voltage 121 and the second frequency voltage 122 is set to an alternating frequency of 50 to 150 times/second (Hz). Duty cycles of the first frequency voltage 121 and the second frequency voltage 122 are arbitrary adjusted. In a preferred mode, the alternating frequency is set to 100 Hz. Moreover, duty cycles of the first frequency voltage 121 and the second frequency voltage 122 at the alternating frequency are set to 50%.

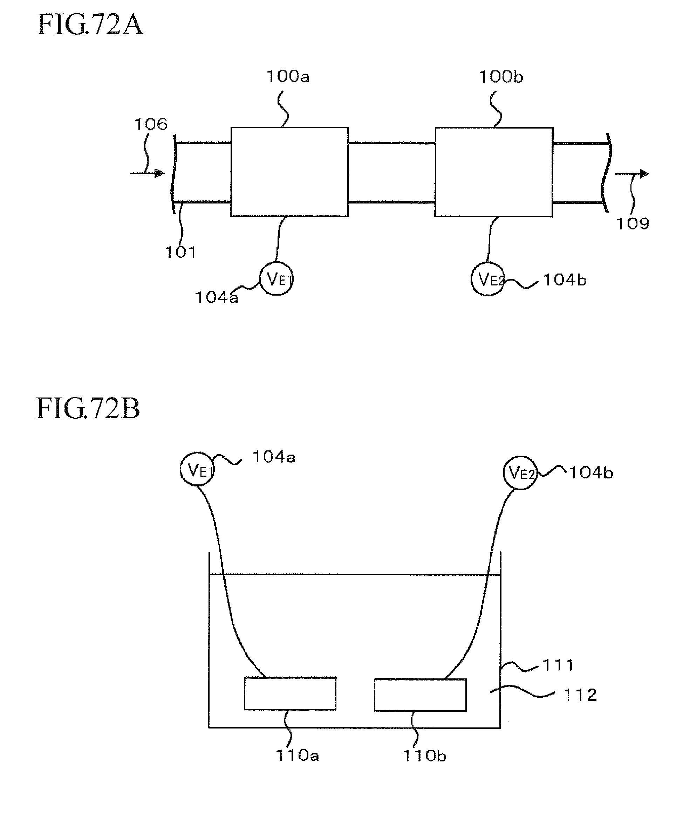

Besides, as a method of selecting one resonant frequency out of the first resonant frequency group and one resonant frequency out of the second resonant frequency group and activating water simultaneously using the selected two resonant frequencies, various methods are possible. For example, as shown in Fig. 72A, in the same manner as explained with reference to Fig. 63 or Fig. 70, a first electromagnetic-field generating unit 100a and a second electromagnetic-field generating unit 100b are attached to the water pipe 101 and an AC voltage $V_{E1}$ of the resonant frequency $E_i$ (i = integers -2 to 7) selected out of the first resonant frequency group is supplied to the counter electrode 103 of the first electromagnetic-field generating unit 100a through a power supply for the first electric field 104a thereof. At the same time, an alternating voltage $V_{E2}$ of the resonant frequency $F_j$ (j = integers -2 to 7) selected out of the second resonant frequency group is supplied to the counter electrode 103 of the second electromagnetic-field generating unit 100b through the second power supply for electric field 104b. Static magnetic fields in the first electromagnetic-field generating unit 100a and the second electromagnetic-field generating unit 100b are generated by the DC electromagnet or the permanent magnet explained with reference to Fig. 63 or Fig. 70. In this way, when the water to be treated 106 of, for example, the tap water is fed to the water pipe 101, the active treated water 109 is generated.

Alternatively, as shown in Fig. 72B, a first electromagnetic-field imparting unit 110a connected to a first power supply for electric field 104a and a second electromagnetic-field imparting unit 110b connected to a second power supply for electric field 104b are immersed in the pooled water 112 in the tank 111. In this state, the AC voltage $V_{E1}$ of the resonant frequency Ei (i = integers -2 to 7) described above is supplied to the first electromagnetic-field imparting unit 110a through the first power supply for electric field 104a. At the same time, the AC voltage $V_{E2}$ of the resonant frequency $F_j$ (j = integers -2 to 7) described above is supplied to the second electromagnetic-field imparting unit 110b through the second power supply for electric field 104b. In this way, the alternating voltages of the two resonant frequencies are imparted to the pooled water 112, whereby the pooled water 112 is activated by an electromagnetic field and changed to active treated water.

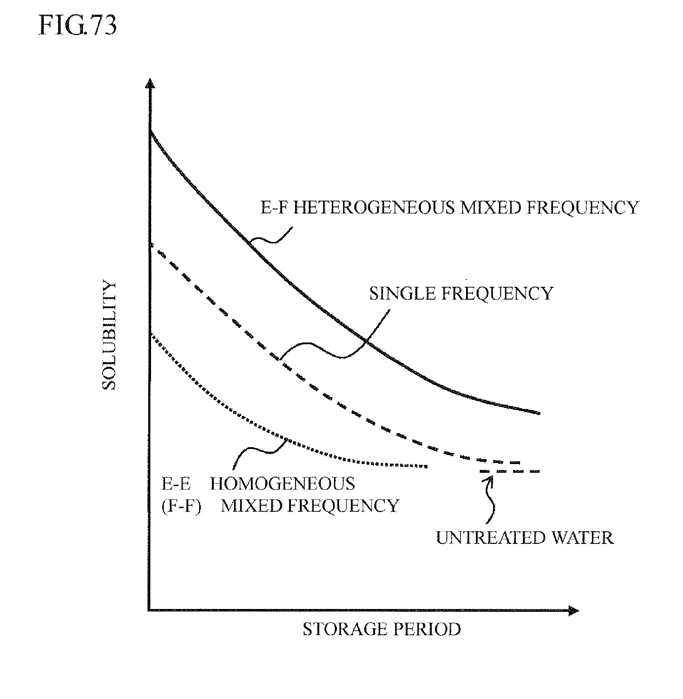

In this embodiment, as described above, duration of the water activation effect is extended and the life of the water is extended as function water. This is explained with reference to Fig. 73. Fig. 73 is a graph schematically showing persistency of an effect of active treated water subjected to the electromagnetic field treatment according to the seventh embodiment.

In Fig. 73, a storage period of the active treated water after being subjected to the electromagnetic field treatment is plotted on the abscissa and the solubility of the calcium phosphate 119 by the active treated water is plotted on the ordinate. The electromagnetic field treatment was performed for a fixed time (about 10 hours) by removing the powder of the calcium phosphate 119 in the reservoir chamber 115 in the experimental apparatus shown in Fig. 66 to which the electromagnetic-field imparting unit 100 explained in Fig. 63 was attached. Thereafter, the active treated water was stored at the room temperature and an ability of the stored active treated water for dissolving calcium phosphate was checked after a predetermined storage period.

A solid line in the figure indicates a case in which the electromagnetic treatment is performed by the alternating voltages employing the two resonant frequencies explained with reference to Fig. 71 and is a result of an example of an E-F heterogeneous mixed frequency. A frequency of the first frequency voltage 122 is one resonant frequency of the first resonant frequency group and a frequency of the second frequency voltage 123 is one resonant frequency of the second resonant frequency group. A value of the DC voltage $V_B$ of the power supply for magnetic field 105 is set such that a resonant magnetic field is generated in the water pipe 101. The alternating frequency is 100 Hz and duty cycles of the first frequency voltage 122 and the second frequency voltage 123 at the alternating frequency are 50%.

A broken line in the figure is the same as that in the fifth embodiment. The broken line indicates a case of one resonant frequency of the first resonant frequency group or the second resonant frequency group and a result of an example in a case in which the electromagnetic field treatment is performed by the alternating voltage $V_E$ employing a single frequency. A dotted line in the figure indicates a case in which the electromagnetic field treatment is performed by the alternating voltage employing the two resonant frequencies explained with reference to Fig. 71 and is a result of an example of an E-E (or F-F) homogenous mixed frequency. Both the frequencies of the first frequency voltage 122 and the second frequency voltage 123 are resonant frequencies selected out of the same first resonant frequency group. Alternatively, both the frequencies are resonant frequencies selected out of the same second resonant frequency group. Both the amplitudes of these frequency currents are set such that a resonant magnetic field is generated. The alternating frequency is 100 Hz and duty cycles of the first frequency voltage 122 and the second frequency voltage 123 at the alternating frequency are 50%.

As shown in Fig. 73, in all the cases of the E-F heterogeneous mixed frequency of the solid line, the single frequency of the broken line, and the E-E (F-F) homogeneous mixed frequency of the dotted line, the ability of the active treated water for dissolving the calcium phosphate 119 lasts. The ability attenuates as the storage period passes. The attenuation on the solid line is far smaller than that on the broken line. Therefore, the duration of activation of water increase. Moreover, in the case of the solid line, as indicated by the storage period of 0 hour, an initial degree of activation increases.

On the other hand, on the dotted line, the attenuation is larger than that in the case of the broken line and the duration of activation of water decreases. Moreover, in the case of the dotted line, an initial degree of activation, which is the storage period of 0 hour, falls to be lower than that in the case of the single frequency of the broken line.

In this way, in this embodiment, by performing the electromagnetic field treatment by the alternating voltage employing the two different kinds of resonant frequencies, the degree of activation increases and the duration of the effect of the active treated water is extended in the same manner as explained in the second embodiment. In other words, a state in which an amount of hydrogen ion and an amount of hydroxyl ions during treatment are larger than those in the case of the untreated water lasts longer. Conversely, when the same kinds of resonant frequencies are used, the degree of activation decreases and the duration of the effect of the active treated water is reduced.

Such extension of the life of the active treated water indicates that the active treated water generated in this embodiment can also be effectively used as a cleaner and the like. The functions displayed by the water with a large amount of hydrogen ions or hydroxyl ions explained in the fifth embodiment, for example, dissolution of fatty acids, deodorization, and alteration of oils can be utilized in various detergents or function water.

In the seventh embodiment, besides the method explained with reference to Figs. 71 and 72, various methods are conceivable. For example, in the power supply for electric field 104 explained with reference to Fig. 63 or Fig. 70, a combined voltage obtained by combining an alternating voltage including one resonant frequency selected out of the first resonant frequency group and an alternating voltage including one resonant frequency selected out of the second resonant frequency group is formed. This combined voltage is supplied to the counter electrode 103 of the electromagnetic-field generating unit 100. In this way, water is activated simultaneously by these two resonant frequencies and the effects same as those described above are realized.

[Eighth Embodiment]

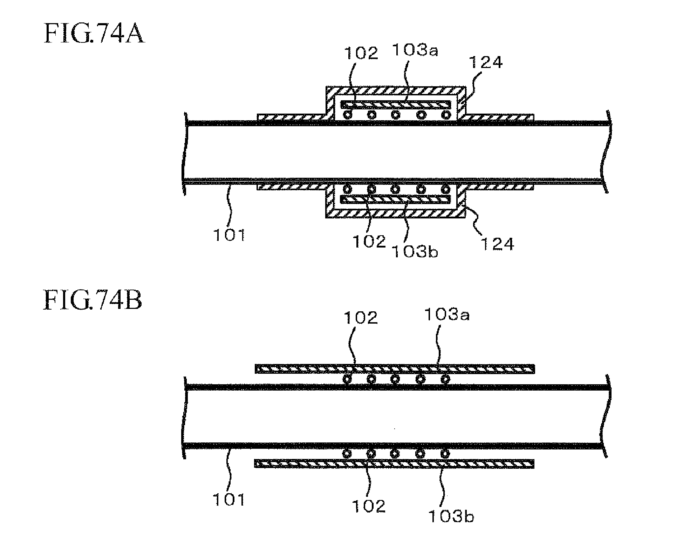

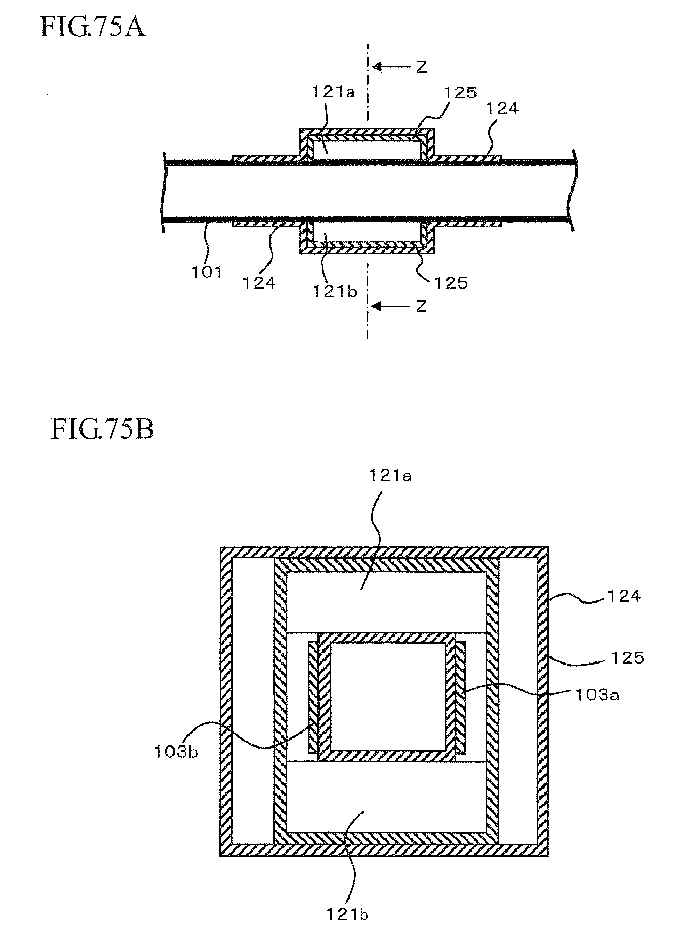

A preferred eighth embodiment of the present invention is explained. This embodiment is characterized by removing electromagnetic field noise from the outside to the electromagnetic-field generating unit 100, the first electromagnetic-field generating unit 100b, or the first electromagnetic-field generating unit 100b explained in the embodiments. Figs. 74 and 75 are explanatory diagrams showing a method of shielding an electromagnetic field from the outside in this embodiment. Fig. 74 is a longitudinal sectional view in a water pipe axis direction in which the electromagnetic-field generating unit 100 explained with reference to Fig. 63 is covered with a magnetic field shield member. Fig. 75A is a longitudinal sectional view in the water pipe axis direction in which the electromagnetic-field generating unit 100 explained with reference to Fig. 70 is covered with the electromagnetic-field shield member. Fig. 75(b) is an enlarged sectional view in taken along arrow Z-Z in Fig. 75A.

As shown in Fig. 74A, the coil 102 wound around the outer wall of the water pipe 101 made of a material having relative permeability of about 1 like a polymeric material or a resin material is provided. The counter electrode 103 including the first electrode 103a and the second electrode 103b opposed to each other across the water pipe 101 is provided on the outer side of the coil 102. Moreover, an electromagnetic-field shield member 124 is disposed to cover the electromagnetic-field generating unit 100 including the coil 102 and the counter electrode 103. The electromagnetic-field shield member 124 mainly blocks electromagnetic noise from the outside of the electromagnetic-field generating unit 100. Therefore, this electromagnetic-field shield member 124 is made of a conductive material and insulated and separated from the coil 102 and the counter electrode 103. The electromagnetic-field shield member 124 may have magnetism.

Consequently, for example, a feeble electromagnetic wave generated by commercial AC power having a frequency of 50 Hz or 60 Hz from the periphery of a place where the electromagnetic-field generating unit 100 is arranged or electromagnetic noise including harmonics of the electromagnetic wave is prevented from intruding in the water pipe 101 covered with the coil 102. Disturbance of activation of the water to be treated 106 by an oscillating electric field and a resonant magnetic field of a resonant frequency generated by this electromagnetic noise is eliminated. For example, the mixing of resonant frequencies of the same kind explained with reference to Fig. 73 in the seventh embodiment, which is caused by the electromagnetic noise, is eliminated. Stable water activation treatment can be performed regardless of, for example, a place where the electromagnetic-field generating unit 100 is set.

Lead wires of the coil 102 and the counter electrode 103 of the electromagnetic-field generating unit 100 are drawn out from, for example, an opening provided in a part of the electromagnetic-field shield member 124, although not shown in the figure. The coil 102 and the counter electrode 103 are connected to the power supply for magnetic field 105 and the power supply for electric field 104, respectively.

The structure shown in Fig. 74A is simplified as shown in Fig. 74B. In this case, the first electrode 103a and the second electrode 103b configuring the counter electrode 103 cover the outside of the insulated and separated coil 102 and the outside of the water pipe 101 extending from both the sides of the coil 102. The counter electrode 103 is formed of a material as a conductor and a magnetic body such as an iron material or a stainless steel material.

Consequently, the electromagnetic noise from the outside of the electromagnetic-field generating unit 100 is blocked by the simple structure in substantially the same manner as described above. Static magnetic field generated by the coil 102 is prevented from extending and dispersing in the pipe axis direction of the water pipe 101 from the electromagnetic-field generating unit 100.

Alternatively, as shown in Fig. 75, the counter magnet 121 including the first permanent magnet 121a and the second permanent magnet 121b opposed to each other across the water pipe 101 is attached. Moreover, the counter electrode 103 including the first electrode 103a and the second electrode 103b opposed to each other across the water pipe 101 is attached to the outer side of the water pipe 101 where this counter magnet 121 is not attached. The electromagnetic-field shield member 124 is disposed to cover the electromagnetic-field generating unit 100 including the counter electrode 103 and the counter magnet 121. As shown in Fig. 75, a magnetic shield member 125 may be attached to cover the electromagnetic-field generating unit 100. The entire electromagnetic-field generating unit 100 including the magnetic shield member 125 may be covered with the electromagnetic shield member 124 from the outer side of the magnetic shield member 125.

The electromagnetic-field shield member 124 blocks the electromagnetic noise from the outside of the electromagnetic-field generating unit 100 in the same manner as described above. The electromagnetic-field shield member 124 prevent strong static magnetic field generated by the permanent magnet from extending and dispersing in the pipe axis direction of the water pipe 101 from the electromagnetic-field generating unit 100. Therefore, this electromagnetic-field shield member 124 is preferably configured by a material as a conductor and a magnetic body. The electromagnetic-fieid shield member 124 suitably covers the outer side of the electromagnetic-field generating unit 100 and the outer side of the water pipe 33 extending to both sides of the electromagnetic-field generating unit 100 and extending over length 1.5 times or more as large as the length of the counter magnet 121. As the electromagnetic-field shielding member 124, a metal material made of a magnetic body with large relative permeability and having conductivity is suitably used. As the magnetic shield member 125, aluminum, copper, plastic, and the like can be suitably used. When this magnetic shield member 125 is interposed, the prevention of dispersion of the static magnetic field is more effectively performed.

In the electromagnetic-field generating unit 100 shown in Fig. 75, since static magnetic field intensity is high compared with that in the case of Fig. 74, a resonant magnetic field tends to be generated by the dispersion of the static magnetic field from the counter magnet 121 and resonant frequencies of the same kind tend to be mixed because of the electromagnetic noise. Therefore, the water activation treatment tends to be affected by, for example, a place where the electromagnetic-field generating unit 100 generally employing the permanent magnet is set. However, by using the electromagnetic-field shield member 124 or the magnetic shield member 125 is used as well, extremely stable water activation treatment is guaranteed.

In this way, in the eighth embodiment, effects same as those explained in the fifth to seventh embodiments are realized. Moreover, because the electromagnetic field noise is eliminated, the effect of the electromagnetic field treatment is extremely stable regardless of conditions such as a place where the electromagnetic field treatment apparatus including the electromagnetic-field generating unit 100 is set.

In the fifth to eighth embodiments, as explained in detail in the first embodiment or the fourth embodiment, carbon dioxide in water is suitably degassed as pre-treatment of the electromagnetic field treatment method for water. In the case of underground water or well water with high solubility of carbon dioxide, the water to be treated can be stably subjected to electromagnetic field treatment by this degassing. Therefore, by using an electromagnetic field treatment system including a carbon dioxide degassing apparatus, extremely stable electromagnetic field treatment can be performed regardless of a type of water to be treated.

In the fifth to eighth embodiments, as explained in detail in the third embodiment, when static magnetic field is generated by the DC electromagnet or the permanent magnet, it is suitable that the terrestrial magnetism Be is shielded by a magnetic shield and the intrusion of the terrestrial magnetism into the water pipe 101 is substantially reduced. In this way, the influence of the terrestrial magnetism in the water pipe 101 is reduced and highly efficient activation of stable water to be treated can be performed without being affected by an environmental change at all.

As the magnetic shield, for example, a sheet-like cobalt amorphous sheet or the like made of a magnetic body with large relative permeability is suitably used. It is suitable that the electromagnetic-field shield member 124 explained with reference to Fig. 74 can be also used as the magnetic shield. In this case, the material having conductivity and magnetism is suitably used as explained with reference to Fig. 75.

Consequently, more stable electromagnetic field treatment for water is easily performed regardless of a type of a place where the electromagnetic field treatment apparatus is set, a method of attaching the same, and a type of water to be treated.

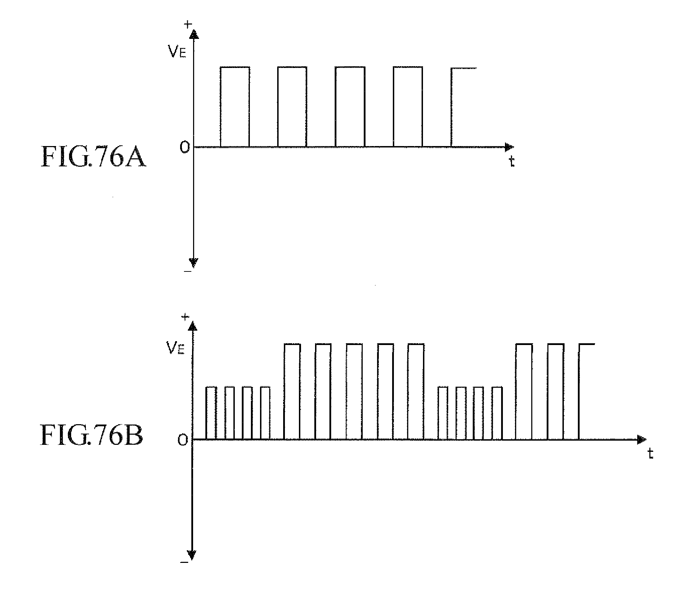

Several modifications of the fifth to eighth embodiments are explained. A voltage of a positive or negative unipolar pulse waveform such as a signal clock may be used instead of the AC voltage $V_E$ that changes at a fixed period explained with reference to Fig. 63 and 70. As a voltage that changes at a fixed period may be such a voltage of a unipolar waveform. In other words, as shown in Fig. 76A, when a positive square pulse waveform is used as a waveform of the voltage of the unipolar pulse waveform, activation of water same as that explained in the fifth to eighth embodiments is possible.

Two kinds of positive square pulse waveforms may be alternately supplied to the counter electrode 103 of the electromagnetic-field generating unit 100 as shown in Fig. 76B instead of the alternating voltage explained with reference to Fig. 71. In such a case, effects substantially the same as those explained in the seventh embodiment are realized.

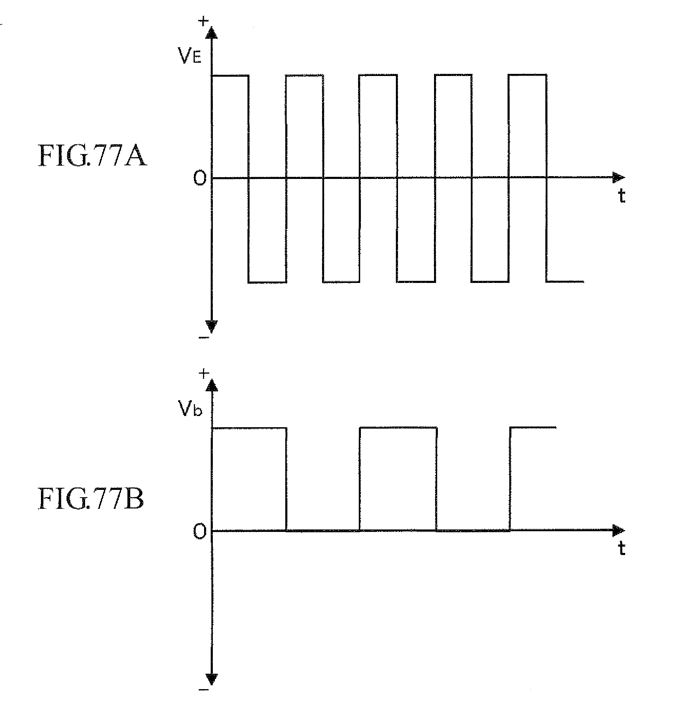

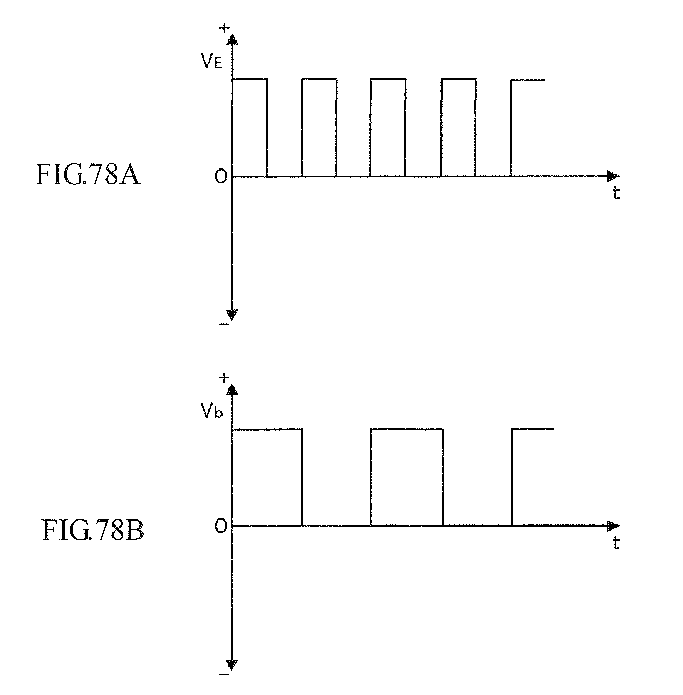

Moreover, as the voltage supplied to the coil 102 in the embodiments described above, a voltage changing at a period twice as large as that of the voltage changing at a fixed period supplied to the counter electrode 103 may be used. For example, as shown in Fig. 77B, a voltage Vb of a unipolar pulse waveform changing at a period twice as large as that of the AC voltage $V_E$ of the square waveform shown in fig. 77A is used. Alternatively, as shown in Fig. 78B, a voltage Vb of a unipolar pulse waveform changing at a period twice as large as that of the voltage $V_E$ of the positive square pulse waveform shown in Fig. 78A is used. In this case, electromagnetic field treatment for water employing both the oscillating electric field generated by the AC voltage $V_E$ having the resonant frequency explained in the fifth to eighth embodiments and the oscillating electromagnetic field induced by feeding the electromagnetic field inducing current to the coil explained in the first to fourth embodiment is performed.

The preferred embodiments of the present invention have been explained. However, the embodiments described above do not limit the present invention. Those skilled in the art can apply various modifications and alterations to the embodiments without departing from the technical idea and the technical scope of the present invention in specific embodiments.

For example, waveforms of the AC current, the alternating current, or the current of the unipolar waveform are suitably waveforms in which a current value suddenly changes temporally such as a pulse waveform and a saw-tooth waveform other than the square waveform. Besides, a sine waveform can also be used, although the effects are reduced.

The coil to which the AC current, the alternating current, or the current of the unipolar waveform is supplied may be attached to the outside of the water to be treated. An oscillating electromagnetic field generated in the coil may be irradiated on the water to be treated from the outside.

A shape of the coil wound around the water pipe may be any shape as long as a magnetic field that changes temporally can be generated. Besides the spiral shape described above, various winding methods are conceivable.

In the fifth to eighth embodiments, a waveform of the AC voltage or a waveform of the voltage of the unipolar waveform may be a pulse waveform, a saw-tooth waveform, and the like other than the square waveform. Besides, a sine waveform can be used, although the effects are reduced.

A shape of the coil 102 wound around the water pipe 101 may be any shape as long as a static magnetic field can be generated. Besides the spiral shape, various winding methods are conceivable.

Besides the above, the active treated water generated by the electromagnetic field treatment according to this embodiment can be applied to various applications as function water in which abundant hydrogen ions and hydroxyl ions are solved.

## Claims

1. An electromagnetic field treatment method for water for feeding an electromagnetic field inducing current to a coil, imparting an oscillating electromagnetic field induced in the coil to water, and activating the water, the electromagnetic field treatment method for water **characterized by** comprising:

   selecting one resonant frequency out of a first resonant frequency group of the electromagnetic field inducing current for activating the water or a second resonant frequency group of the electromagnetic field inducing current for activating the water; and
   inducing an oscillating electromagnetic field in the coil with an electromagnetic field inducing current of the selected one resonant frequency.

2. An electromagnetic field treatment method for water for feeding an electromagnetic field inducing current to a coil, imparting an oscillating electromagnetic field induced in the coil to water, and activating the water, the electromagnetic field treatment method for water **characterized by** comprising:

   selecting one resonant frequency out of a first resonant frequency group of the electromagnetic field inducing current for activating the water or a second resonant frequency group of the electromagnetic field inducing current for activating the water; and
   inducing an oscillating electromagnetic field in the coil with an electromagnetic field inducing current of a frequency in a half-value width in a resonance characteristic of the selected resonant frequency.

3. An electromagnetic field treatment method for water for feeding an electromagnetic field inducing current to a coil, imparting an oscillating electromagnetic field induced in the coil to water, and activating the water, the electromagnetic field treatment method for water method **characterized by** comprising:

   selecting one resonant frequency out of a first resonant frequency group of the electromagnetic field inducing current for activating the water and one resonant frequency out of a second resonant frequency group of the electromagnetic field inducing current for activating the water; and
   inducing an oscillating electromagnetic field in the coil with an electromagnetic field inducing current of the one resonant frequency selected from the first resonant frequency group and an electromagnetic field inducing current of the one resonant frequency selected from the second resonant frequency group.

4. An electromagnetic field treatment method for water for feeding an electromagnetic field inducing current to a coil, imparting an oscillating electromagnetic field induced in the coil to water, and activating the water, the electromagnetic field treatment method for water method **characterized by** comprising:

   selecting one resonant frequency out of a first resonant frequency group of the electromagnetic field inducing current for activating the water and one resonant frequency out of a second resonant frequency group of the electromagnetic field inducing current for activating the water; and
   inducing an oscillating electromagnetic field in the coil with an electromagnetic field inducing current of a frequency in a half-value width in a resonance characteristic of the resonant frequency selected from the first resonant frequency group and an electromagnetic field inducing current of a frequency in a half-value width in a resonance characteristic of the resonant frequency selected from the second resonant frequency group.

5. An electromagnetic field treatment method for water according to any one of claims 1 to 4, **characterized in that** the first resonant frequency group includes a resonant frequency $A_{-2}$ at 151.5 Hz or in the vicinity thereof, a resonant frequency $A_{-1}$ at 222.5 Hz or in the vicinity thereof, a resonant frequency $A_0$ at 345.0 Hz or in the vicinity thereof, a resonant frequency $A_1$ at 484 Hz or in the vicinity thereof, a resonant frequency $A_2$ at 954 Hz or in the vicinity thereof, a resonant frequency $A_3$ at 3.5 kHz or in the vicinity thereof, a resonant frequency $A_4$ at 7.0 kHz or in the vicinity thereof, a resonant frequency $A_5$ at 20.0 kHz or in the vicinity thereof, a resonant frequency $A_6$ at 37.3 kHz or in the vicinity thereof, and a resonant frequency $A_7$ at 80.0 kHz or in the vicinity thereof, and
   the second resonant frequency group includes a resonant frequency $B_{-2}$ at 205.0 Hz or in the vicinity thereof, a resonant frequency $B_{-1}$ at 301.0 Hz or in the vicinity thereof, a resonant frequency $B_0$ at 466.0 Hz or in the vicinity thereof, a resonant frequency $B_1$ at 655 Hz or in the vicinity thereof, a resonant frequency $B_2$ at 1.29 kHz or in the vicinity thereof, a resonant frequency $B_3$ at 4.73 kHz or in the vicinity thereof, a resonant frequency $B_4$ at 9.47 kHz or in the vicinity thereof, a resonant frequency $B_5$ at 27.0 kHz or in the vicinity thereof, a resonant frequency $B_6$ 50.4 kHz at or in the vicinity thereof, and a resonant frequency $B_7$ at 108.0 kHz or in the vicinity thereof.

**6.** An electromagnetic field treatment method for water according to any one of claims 1 to 5, **characterized in that** peak intensity of an oscillating magnetic field induced in the coil by the electromagnetic field inducing current of the resonant frequency is set to the intensity of a resonant magnetic field having specific magnetic intensity or magnetic field intensity in a half-value width in a resonance characteristic of the resonant magnetic field by setting a peak current of the electromagnetic field inducing current of the resonant frequency to a specific current value.

**7.** An electromagnetic field treatment method for water according to claim 6, **characterized in that** the intensity of the resonant magnetic field is a positive integer times as large as magnetic field intensity in a base mode.

**8.** An electromagnetic field treatment method for water according to claim 7, **characterized in that**
magnetic field intensities in the base mode of the resonant magnetic field in the electromagnetic field inducing current of the resonant frequencies $A_i$ (i = integers -2 to 7) are, in order of the numbers of i, 5.3 mG or in the vicinity thereof, 7.4 mG or in the vicinity thereof, 12.3 mG or in the vicinity thereof, 17.3 mG or in the vicinity thereof, 31.9 mG or in the vicinity thereof, 130.6 mG or in the vicinity thereof, 323.0 mG or in the vicinity thereof, 1123.5 mG or in the vicinity thereof, 2556.0 mG or in the vicinity thereof, and 6039.0 mG or in the vicinity thereof, and
magnetic field intensities in the base mode of the resonant magnetic field in the magnetic field inducing current of the resonant frequencies $B_j$ (j = integers -2 to 7) are, in order of the numbers of j , 7.1 mG or in the vicinity thereof, 10.4 mG or in the vicinity thereof, 16.3 mG or in the vicinity thereof, 23.5 mG or in the vicinity thereof, 47.1 mG or in the vicinity thereof, 188.2 mG or in the vicinity thereof, 463.5 mG or in the vicinity thereof, 1601.0 mG or in the vicinity thereof, 3342.5 mG or in the vicinity thereof, and 7302.9 mG or in the vicinity thereof.

**9.** An electromagnetic field treatment method for water according to any one of claims 1 to 8, **characterized in that** an insulator is arranged in a waterway of an area, around which the coil is wound, to change a flow of the water and subject the water to electromagnetic field treatment.

**10.** An electromagnetic field treatment method for water for imparting an electromagnetic field including an oscillating electric field generated by application of a voltage changing at a fixed period and a static magnetic field generated by a permanent magnet or an electromagnet and activating the water,
the electromagnetic field treatment method for water method **characterized by** comprising:

selecting one resonant frequency out of a first resonant frequency group of the voltage for activating the water or a second resonant frequency group of the voltage for activating the water; and
generating the oscillating electric field with application of a voltage of the selected one resonant frequency.

**11.** An electromagnetic field treatment method for water for imparting an electromagnetic field including an oscillating electric field generated by application of a voltage changing at a fixed period and a static magnetic field generated by a permanent magnet or an electromagnet and activating the water,
the electromagnetic field treatment method for water method **characterized by** comprising:

selecting one resonant frequency out of a first resonant frequency group of the voltage for activating the water or a second resonant frequency group of the voltage for activating the water; and
generating the oscillating electric field with application of a voltage of a frequency in a half-value width in a resonance characteristic of the selected resonant frequency.

**12.** An electromagnetic field treatment method for water for imparting an electromagnetic field including an oscillating electric field generated by application of a voltage changing at a fixed period and a static magnetic field generated by a permanent magnet or an electromagnet and activating the water,
the electromagnetic field treatment method for water method **characterized by** comprising:

selecting one resonant frequency out of a first resonant frequency group of the voltage for activating the water and one resonant frequency out of a second resonant frequency group of the voltage for activating the water; and
generating the oscillating electric field with application of a voltage of the one resonant frequency selected out of the first resonant frequency group and application of a voltage of the one resonant frequency selected out of the second resonant frequency group.

**13.** An electromagnetic field treatment method for water for imparting an electromagnetic field including an oscillating electric field generated by application of a voltage changing at a fixed period and a static magnetic field generated by a permanent magnet or an electromagnet and activating the water,
the electromagnetic field treatment method for water method **characterized by** comprising:

selecting one resonant frequency out of a first resonant frequency group of the voltage for activating the water and one resonant frequency out of a second resonant frequency group of the voltage for activating the water; and generating the oscillating electric field with application of a voltage of a frequency in a half-value width in a resonance characteristic of the resonant frequency selected out of the first resonant frequency group and application of a voltage of a frequency in a half-value width in a resonance characteristic of the resonant frequency selected out of the second resonant frequency group.

**14.** An electromagnetic field treatment method for water according to any one of claims 10 to 13, **characterized in that** the first resonant frequency group includes a resonant frequency $E_{-2}$ at 303 Hz or in the vicinity thereof, a resonant frequency $E_{-1}$ at 445 Hz or in the vicinity thereof, a resonant frequency $E_0$ at 690 Hz or in the vicinity thereof, a resonant frequency $E_1$ at 968 Hz or in the vicinity thereof, a resonant frequency $E_2$ at 1.91 kHz or in the vicinity thereof, a resonant frequency $E_3$ at 7.0 kHz or in the vicinity thereof, a resonant frequency $E_4$ at 14.0 kHz or in the vicinity thereof, a resonant frequency $E_5$ at 40.0 kHz or in the vicinity thereof, a resonant frequency $E_6$ at 74.6 kHz or in the vicinity thereof, and a resonant frequency $E_7$ at 160.0 kHz or in the vicinity thereof, and
the second resonant frequency group includes a resonant frequency $F_{-2}$ at 410 Hz or in the vicinity thereof, a resonant frequency $F_{-1}$ at 602 Hz or in the vicinity thereof, a resonant frequency $F_0$ at 932 Hz or in the vicinity thereof, a resonant frequency $F_1$ at 1.31 kHz or in the vicinity thereof, a resonant frequency $F_2$ at 2.58 kHz or in the vicinity thereof, a resonant frequency $F_3$ at 9.45 kHz or in the vicinity thereof, a resonant frequency $F_4$ at 18.94 kHz or in the vicinity thereof, a resonant frequency $F_5$ at 54.0 kHz or in the vicinity thereof, a resonant frequency $F_6$ at 100.8 kHz or in the vicinity thereof, and a resonant frequency $F_7$ at 216.0 kHz or in the vicinity thereof.

**15.** An electromagnetic field treatment method for water according to any one of claims 10 to 14, **characterized in that** magnetic field intensity of the static magnetic field is the intensity of a specific resonant magnetic field or magnetic field intensity in a half-value width in a resonance characteristic of the resonant magnetic field.

**16.** An electromagnetic field treatment method for water according to claim 15, **characterized in that** the intensity of the resonant magnetic field is a positive integer times as large as magnetic field intensity in a base mode.

**17.** An electromagnetic field treatment method for water according to claim 16, **characterized in that**
magnetic field intensities in the base mode of the resonant magnetic field at the resonant frequencies $E_i$ (i = integers -2 to 7) are, in order of the numbers of i, 5.3 mG or in the vicinity thereof, 7.4 mG or in the vicinity thereof, 12.3 mG or in the vicinity thereof, 17.3 mG or in the vicinity thereof, 31.9 mG or in the vicinity thereof, 130.6 mG or in the vicinity thereof, 323.0 mG or in the vicinity thereof, 1123.5 mG or in the vicinity thereof, 2556.0 mG or in the vicinity thereof, and 6039.0 mG or in the vicinity thereof, and
magnetic field intensities in the base mode of the resonant magnetic field at the resonant frequencies $F_j$ (j = integers -2 to 7) are, in order of the numbers of j, 7.1 mG or in the vicinity thereof, 10.4 mG or in the vicinity thereof, 16.3 mG or in the vicinity thereof, 23.5 mG or in the vicinity thereof, 47.1 mG or in the vicinity thereof, 188.5 mG or in the vicinity thereof, 463.5 mG or in the vicinity thereof, 1601.0 mG or in the vicinity thereof, 3342.5 mG or in the vicinity thereof, and 7302.9 mG or in the vicinity thereof.

**18.** An electromagnetic field treatment method for water according to any one of claims 10 to 17, **characterized in that** the influence of electromagnetic noise on the electromagnetic field imparted to the water is eliminated.

**19.** An electromagnetic field treatment method for water according to any one of claims 1 to 18, **characterized in that** the influence of terrestrial magnetism on the oscillating electromagnetic field or the electromagnetic field imparted to the water is eliminated.

**20.** An electromagnetic field treatment method for water according to any one of claims 1 to 19, **characterized in that**, after degassing of carbon dioxide is applied to the water, the water is subjected to electromagnetic field treatment.

**21.** An electromagnetic field treatment apparatus for water that feeds an electromagnetic field inducing current to a coil, imparts an oscillating electromagnetic field induced in the coil to water, and activates the water,
the electromagnetic field treatment apparatus for water **characterized by** comprising:

a coil; and

a power supply that supplies, to the coil, an electromagnetic field inducing current of one resonant frequency selected out of a first resonant frequency group of the electromagnetic field inducing current for activating the water or a second resonant frequency group of the electromagnetic field inducing current for activating the water.

**22.** An electromagnetic field treatment apparatus for water that feeds an electromagnetic field inducing current to a coil, imparts an oscillating electromagnetic field induced in the coil to water, and activates the water,
the electromagnetic field treatment apparatus for water **characterized by** comprising:

a coil; and

a power supply that supplies, to the coil, an electromagnetic field inducing current of a frequency in a half-value width in a resonance characteristic of one resonant frequency selected out of a first resonant frequency group of the electromagnetic field inducing current for activating the water or a second resonant frequency group of the electromagnetic field inducing current for activating the water.

**23.** An electromagnetic field treatment apparatus for water that feeds an electromagnetic field inducing current to a coil, imparts an oscillating electromagnetic field induced in the coil to water, and activates the water,
the electromagnetic field treatment apparatus for water **characterized by** comprising:

a coil;

an alternating-current supplying unit that supplies an alternating current obtained by amplitude-modulating one resonant frequency in a first resonant frequency group of the electromagnetic field inducing current for activating the water and one resonant frequency in a second resonant frequency group of the electromagnetic field inducing current for activating the water; and

a driving power supply unit that drives the alternating-current supplying unit.

**24.** An electromagnetic field treatment apparatus for water that feeds an electromagnetic field inducing current to a coil, imparts an oscillating electromagnetic field induced in the coil to water, and activates the water,
the electromagnetic field treatment apparatus for water **characterized by** comprising:

a coil;

an alternating-current supplying unit that supplies an alternating current obtained by amplitude-modulating a frequency in a half-value width in a resonance characteristic of one resonant frequency in a first resonant frequency group of the electromagnetic field inducing current for activating the water and a frequency in a half-value width in a resonance frequency of one resonant frequency in a second resonant frequency group of the electromagnetic field inducing current for activating the water; and

a driving power supply unit that drives the alternating-current supplying unit.

**25.** An electromagnetic field treatment apparatus for water according to any one of claims 21 to 24, **characterized in that** the first resonant frequency group includes a resonant frequency $A_{-2}$ at 151.5 Hz or in the vicinity thereof, a resonant frequency $A_{-1}$ at 222.5 Hz or in the vicinity thereof, a resonant frequency $A_0$ at 345.0 Hz or in the vicinity thereof, a resonant frequency $A_1$ at 484 Hz or in the vicinity thereof, a resonant frequency $A_2$ at 954 Hz or in the vicinity thereof, a resonant frequency $A_3$ at 3.5 kHz or in the vicinity thereof, a resonant frequency $A_4$ at 7.0 kHz or in the vicinity thereof, a resonant frequency $A_5$ at 20.0 kHz or in the vicinity thereof, a resonant frequency $A_6$ at 37.3 kHz or in the vicinity thereof, and a resonant frequency $A_7$ at 80.0 kHz or in the vicinity thereof, and
the second resonant frequency group includes a resonant frequency $B_{-2}$ at 205.0 Hz or in the vicinity thereof, a resonant frequency $B_{-1}$ at 301.0 Hz or in the vicinity thereof, a resonant frequency $B_0$ at 466.0 Hz or in the vicinity thereof, a resonant frequency $B_1$ at 655 Hz or in the vicinity thereof, a resonant frequency $B_2$ at 1.29 Hz or in the vicinity thereof, a resonant frequency $B_3$ at 4.73 kHz or in the vicinity thereof, a resonant frequency $B_4$ at 9.47 kHz or in the vicinity thereof, a resonant frequency $B_5$ at 27.0 kHz or in the vicinity thereof, a resonant frequency $B_6$ at 50.4 kHz or in the vicinity thereof, and a resonant frequency $B_7$ at 108.0 kHz or in the vicinity thereof.

**26.** An electromagnetic field treatment apparatus for water according to any one of claims 21 to 25, **characterized in that** the power supply or the alternating-current supplying unit sets peak intensity of an oscillating magnetic field induced in the coil by the electromagnetic field inducing current of the resonant frequency to the intensity of a resonant magnetic field having specific magnetic intensity or magnetic field intensity in a half-value width in a resonance characteristic of the resonant magnetic field by setting a peak current of the electromagnetic field inducing current of the resonant frequency to a specific current value.

**27.** An electromagnetic field treatment apparatus for water according to claim 26, **characterized in that** the intensity of the resonant magnetic field is a positive integer times as large as magnetic field intensity in a base mode.

**28.** An electromagnetic field treatment apparatus for water according to claim 27, **characterized in that** magnetic field intensities in the base mode of the resonant magnetic field in the electromagnetic field inducing current of the resonant frequencies $A_i$ (i = integers -2 to 7) are, in order of the numbers of i, 5.3 mG or in the vicinity thereof, 7.4 mG or in the vicinity thereof, 12.3 mG or in the vicinity thereof, 17.3 mG or in the vicinity thereof, 31.9 mG or in the vicinity thereof, 130.6 mG or in the vicinity thereof, 323.0 mG or in the vicinity thereof, 1123.5 mG or in the vicinity thereof, 2556.0 mG or in the vicinity thereof, and 6039.0 mG or in the vicinity thereof, and
magnetic field intensities in the base mode of the resonant magnetic field in the magnetic field inducing current of the resonant frequencies $B_j$ (j j = integers -2 to 7) are, in order of the number of j, 7.1 mG or in the vicinity thereof, 10.4 mG or in the vicinity thereof, 16.3 mG or in the vicinity thereof, 23.5 mG or in the vicinity thereof, 47.1 mG or in the vicinity thereof, 188.2 mG or in the vicinity thereof, 463.5 mG or in the vicinity thereof, 1601.0 mG or in the vicinity thereof, 3342.5 mG or in the vicinity thereof, and 7302.9 mG or in the vicinity thereof.

**29.** An electromagnetic field treatment apparatus for water that imparts an electromagnetic field including an oscillating electric field generated by application of a voltage changing at a fixed period and a static magnetic field generated by a permanent magnet or an electromagnet and activates the water,
the electromagnetic field treatment apparatus for water **characterized by** comprising:

a permanent magnet or an electromagnet; and
a power supply that supplies a voltage of one resonant frequency selected out of a first resonant frequency group of the voltage for activating the water or a second resonant frequency group of the voltage for activating the water.

**30.** An electromagnetic field treatment apparatus for water that imparts an electromagnetic field including an oscillating electric field generated by application of a voltage changing at a fixed period and a static magnetic field generated by a permanent magnet or an electromagnet and activates the water,
the electromagnetic field treatment apparatus for water **characterized by** comprising:

a permanent magnet or an electromagnet; and
a power supply that supplies a voltage of a frequency in a half-value width in a resonance characteristic of one resonant frequency selected out of a first resonant frequency group of the voltage for activating the water or a second resonant frequency group of the voltage for activating the water.

**31.** An electromagnetic field treatment apparatus for water that imparts an electromagnetic field including an oscillating electric field generated by application of a voltage changing at a fixed period and a static magnetic field generated by a permanent magnet or an electromagnet and activates the water,
the electromagnetic field treatment apparatus for water **characterized by** comprising:

a permanent magnet or an electromagnet; and
a power supply that supplies a voltage of one resonant frequency selected out of a first resonant frequency group of the voltage for activating the water and a voltage of one resonant frequency selected out of a second resonant frequency group of the voltage four activating the water.

**32.** An electromagnetic field treatment apparatus for water that imparts an electromagnetic field including an oscillating electric field generated by application of a voltage changing at a fixed period and a static magnetic field generated by a permanent magnet or an electromagnet and activates the water,
the electromagnetic field treatment apparatus for water **characterized by** comprising:

a permanent magnet or an electromagnet; and
a power supply that supplies a voltage of a frequency in a half-value width in a resonance characteristic of one resonant frequency selected out of a first resonant frequency group of the voltage for activating the water and a voltage of a frequency in a half-value width in a resonance characteristic of one resonant frequency selected out of a second resonant frequency group of the voltage for activating the water.

**33.** An electromagnetic field treatment apparatus for water according to any one of claims 29 to 32, **characterized in that** the first resonant frequency group includes a resonant frequency $E_{-2}$ at 303 Hz or in the vicinity thereof, a resonant

frequency $E_{-1}$ at 445 Hz or in the vicinity thereof, a resonant frequency $E_0$ at 690 Hz or in the vicinity thereof, a resonant frequency $H_1$ at 968 Hz or in the vicinity thereof, a resonant frequency $E_2$ at 1.91 kHz or in the vicinity thereof, a resonant frequency $E_3$ at 7.0 kHz or in the vicinity thereof, a resonant frequency $E_4$ at 14.0 kHz or in the vicinity thereof, a resonant frequency $E_5$ at 40.0 kHz or in the vicinity thereof, a resonant frequency $E_6$ at 74.6 kHz or in the vicinity thereof, and a resonant frequency $E_7$ at 160.0 kHz or in the vicinity thereof, and
the second resonant frequency group includes a resonant frequency $F_{-2}$ at 410 Hz or in the vicinity thereof, a resonant frequency $F_{-1}$ at 602 Hz or in the vicinity thereof, a resonant frequency $F_0$ at 932 Hz or in the vicinity thereof, a resonant frequency $F_1$ at 1.31 kHz or in the vicinity thereof, a resonant frequency $F_2$ at 2.58 kHz or in the vicinity thereof, a resonant frequency $F_3$ at 9.45 kHz or in the vicinity thereof, a resonant frequency $F_4$ at 18.94 kHz or in the vicinity thereof, a resonant frequency $F_5$ at 54.0 kHz or in the vicinity thereof, a resonant frequency $F_6$ at 100.8 kHz or in the vicinity thereof, and a resonant frequency $F_7$ at 216.0 kHz or in the vicinity thereof.

**34.** An electromagnetic field treatment apparatus for water according to any one of claims 29 to 33, **characterized in that** magnetic field intensity of the static magnetic field is the intensity of a specific resonant magnetic field or magnetic field intensity in a half-value width in a resonance characteristic of the resonant magnetic field.

**35.** An electromagnetic field treatment apparatus for water according to claim 34, **characterized in that** the intensity of the resonant magnetic field is a positive integer times as large as magnetic field intensity in a base mode.

**36.** An electromagnetic field treatment apparatus for water according to claim 18, **characterized in that**
magnetic field intensities in the base mode of the resonant magnetic field at the resonant frequencies $E_i$ (i = integers -2 to 7) are, in order of the numbers of i, 5.3 mG or in the vicinity thereof, 7.4 mG or in the vicinity thereof, 12.3 mG or in the vicinity thereof, 17.3 mG or in the vicinity thereof, 31.9 mG or in the vicinity thereof, 130.6 mG or in the vicinity thereof, 323.0 mG or in the vicinity thereof, 1123.5 mG or in the vicinity thereof, 2556.0 mG or in the vicinity thereof, and 6039.0 mG or in the vicinity thereof, and
magnetic field intensities in the base mode of the resonant magnetic field at the resonant frequencies $F_j$ (j = integers -2 to 7) are, in order of the numbers of j, 7.1 mG or in the vicinity thereof, 10.4 mG or in the vicinity thereof, 16.3 mG or in the vicinity thereof, 23.5 mG or in the vicinity thereof, 47. mG or in the vicinity thereof, 188.5 mG or in the vicinity thereof, 463.5 mG or in the vicinity thereof, 1601.0 mG or in the vicinity thereof, 3342.5 mG or in the vicinity thereof, and 7302.9 mG or in the vicinity thereof.

**37.** An electromagnetic field treatment apparatus for water according to any one of claims 29 to 36, **characterized in that** means for eliminating the influence of electromagnetic noise on the electromagnetic field imparted to the water is attached.

**38.** An electromagnetic field treatment apparatus for water according to any one of claims 21 to 37, **characterized in that** means for eliminating the influence of terrestrial magnetism on the oscillating electromagnetic field or the electromagnetic field imparted to the water is attached.

**39.** An electromagnetic field treatment apparatus for water according to any one of claims 21 to 38, **characterized in that**, after degassing of carbon dioxide is applied to the water, the electromagnetic field treatment is applied to the water.

FIG.1

1
6
5
3
2
4

FIG.2

ELECTRIC CURRENT
0
TIME

FIG.3

4
8
9
7

FIG.4

10
11
11
17
12
16
14
13
P
2
1
15
4
WEST
EAST

FIG.5

5
$\times 10^{-2}$
4
3
2
SOLUBILITY (MILLI-MOL/LITTER)
HALF-VALUE
WIDTH (Δf)
0.484
UNTREATED WATER
0.45
0.50
AC FREQUENCY (kHz)

FIG.6

5
× $10^{-2}$
4
3
2
SOLUBILITY (MILLI-MOL/LITTER)
Δf
0.954
UNTREATED WATER
0.9
1.0
1.1
AC FREQUENCY (kHz)

FIG.7

×10⁻²
5
4
3
2
SOLUBILITY (MILLI-MOL/LITTER)
Δf
3.5
UNTREATED WATER
3.0
3.2
3.4
3.6
3.8
4.0
AC FREQUENCY (kHz)

FIG.8

5
× 10-2
4
3
2
SOLUBILITY (MILLI-MOL/LITTER)
Δf
7.0
UNTREATED WATER
6.0
7.0
8.0
AC FREQUENCY (kHz)

FIG.9

5
$\times 10^{-2}$
4
3
2
SOLUBILITY (MILLI-MOL/LITTER)
Δf
20.0
UNTREATED WATER
15
20
25
AC FREQUENCY (kHz)

FIG.10

5
$\times 10^{-2}$
SOLUBILITY (MILLI-MOL/LITTER)
4
3
2
Δf
37.3
UNTREATED WATER
33
35
37
39
41
43
AC FREQUENCY (kHz)

FIG.11

5
$\times 10^{-2}$
4
3
2
SOLUBILITY (MILLI-MOL/LITTER)
Δf
151.5
UNTREATED WATER
145
150
155
AC FREQUENCY (Hz)

FIG.12

5
$\times 10^{-2}$
4
3
2
SOLUBILITY (MILLI-MOL/LITTER)
Δf
222.5
UNTREATED WATER
215
222.5
230
AC FREQUENCY (Hz)

FIG.13

5
$\times 10^{-2}$
4
3
2
SOLUBILITY (MILLI-MOL/LITTER)
Δf
345.0
UNTREATED WATER
335
345
355
AC FREQUENCY (Hz)

FIG.14

5
$\times 10^{-2}$
4
3
2
SOLUBILITY (MILLI-MOL/LITTER)
Δf
0.655
UNTREATED WATER
0.55
0.65
0.75
AC FREQUENCY (kHz)

FIG.15

5
×10⁻²
4
3
2
SOLUBILITY (MILLI-MOL/LITTER)
Δf
1.29
UNTREATED WATER
1.1
1.2
1.3
1.4
1.5
AC FREQUENCY (kHz)

FIG.16

5
×10^-2
4
3
2
SOLUBILITY (MILLI-MOL/LITTER)
Δf
4.73
UNTREATED WATER
4.3
4.5
4.7
4.9
5.1
AC FREQUENCY (kHz)

FIG.17

5
×10-2
4
3
2
SOLUBILITY (MILLI-MOL/LITTER)
Δf
9.47
UNTREATED WATER
8.5
9.5
10.5
AC FREQUENCY (kHz)

FIG.18

5
×10^-2
4
3
2
SOLUBILITY (MILLI-MOL/LITTER)
Δf
27.0
UNTREATED WATER
25
26
27
28
29
30
AC FREQUENCY (kHz)

FIG.19

5
$\times 10^{-2}$
4
3
2
SOLUBILITY (MILLI-MOL/LITTER)
Δf
50.4
UNTREATED WATER
48
49
50
51
52
53
AC FREQUENCY (kHz)

FIG.20

5
×10-2
4
3
2
SOLUBILITY (MILLI-MOL/LITTER)
Δf
205.0
UNTREATED WATER
200
205
210
AC FREQUENCY (Hz)

FIG.21

5
$\times 10^{-2}$
SOLUBILITY (MILLI-MOL/LITTER)
4
3
2
Δf
301.0
UNTREATED WATER
290
300
310
AC FREQUENCY (Hz)

FIG.22

5
×10-2
4
3
2
SOLUBILITY (MILLI-MOL/LITTER)
Δf
466.0
UNTREATED WATER
455
465
475
AC FREQUENCY (kHz)

FIG.23

5
×10-2
4
3
2
SOLUBILITY (MILLI-MOL/LITTER)
HALF-VALUE
WIDTH (Δb)
UNTREATED WATER
69.1
65
70
75
INDUCED MAGNETIC FIELD INTENSITY (mG)
22
25
ALTERNATING PEAK CURRENT (mA)

FIG.24

5
$\times 10^{-2}$
4
3
2
SOLUBILITY (MILLI-MOL/LITTER)
Δb
63.8
UNTREATED WATER
61
63
65
67
INDUCED MAGNETIC FIELD INTENSITY (mG)
21
22
23
24
ALTERNATING PEAK CURRENT (mA)

FIG.25

5
×10^-2
4
3
2
SOLUBILITY (MILLI-MOL/LITTER)
Δb
130.6
UNTREATED WATER
100
150
200
INDUCED MAGNETIC FIELD INTENSITY (mG)
30
40
50
60
70
ALTERNATING PEAK CURRENT (mA)

FIG.26

5
$\times 10^{-2}$
4
3
2
SOLUBILITY (MILLI-MOL/LITTER)
Δb
323.0
UNTREATED WATER
300
350
INDUCED MAGNETIC FIELD INTENSITY (mG)
90
110
130
ALTERNATING PEAK CURRENT (mA)

FIG.27

5
×10^-2
4
3
2
SOLUBILITY (MILLI-MOL/LITTER)
Δb
1123.5
UNTREATED WATER
1000
1250
INDUCED MAGNETIC FIELD INTENSITY (mG)
300
400
500
ALTERNATING PEAK CURRENT (mA)

FIG.28

5
$\times 10^{-2}$
4
3
2
SOLUBILITY (MILLI-MOL/LITTER)
Δb
2556.0
UNTREATED WATER
2250
2500
2750
INDUCED MAGNETIC FIELD INTENSITY (mG)
800
900
1000
ALTERNATING PEAK CURRENT (mA)

FIG.29

5
$\times 10^{-2}$
4
3
2
SOLUBILITY (MILLI-MOL/LITTER)
Δb
26.4
UNTREATED WATER
25
26
27
28
INDUCED MAGNETIC FIELD INTENSITY (mG)

FIG.30

5
×10-2
4
3
2
SOLUBILITY (MILLI-MOL/LITTER)
Δb
36.8
UNTREATED WATER
35
40
INDUCED MAGNETIC FIELD INTENSITY (mG)

FIG.31

5
×10⁻²
SOLUBILITY (MILLI-MOL/LITTER)
4
3
2
Δb
61.7
UNTREATED WATER
60
62.5
65
INDUCED MAGNETIC FIELD INTENSITY (mG)

FIG.32

5
×10⁻²
4
3
2
SOLUBILITY (MILLI-MOL/LITTER)
Δb
94.1
UNTREATED WATER
90
100
110
INDUCED MAGNETIC FIELD INTENSITY (mG)
30
35
40
ALTERNATING PEAK CURRENT (mA)

FIG.33

5
×10⁻²
4
3
2
SOLUBILITY (MILLI-MOL/LITTER)
Δb
94.1
UNTREATED WATER
80
90
100
110
INDUCED MAGNETIC FIELD INTENSITY (mG)
28
30
32
34
36
38
ALTERNATING PEAK CURRENT (mA)

FIG.34

5
×10⁻²
4
3
2
SOLUBILITY (MILLI-MOL/LITTER)
Δb
188.2
UNTREATED WATER
160
180
200
220
INDUCED MAGNETIC FIELD INTENSITY (mG)
60
70
80
ALTERNATING PEAK CURRENT (mA)

FIG.35

5
×10^-2
4
3
2
SOLUBILITY (MILLI-MOL/LITTER)
Δb
463.5
UNTREATED WATER
400
500
600
INDUCED MAGNETIC FIELD INTENSITY (mG)
120
160
200
ALTERNATING PEAK CURRENT (mA)

FIG.36

5
×10⁻²
SOLUBILITY (MILLI-MOL/LITTER)
4
3
2
Δb
1601.0
UNTREATED WATER
1500
2000
INDUCED MAGNETIC FIELD INTENSITY (mG)
400
600
800
ALTERNATING PEAK CURRENT (mA)

FIG.37

5
×10^-2
4
3
2
SOLUBILITY (MILLI-MOL/LITTER)
Δb
3342.5
UNTREATED WATER
3200
3400
3600
INDUCED MAGNETIC FIELD INTENSITY (mG)
1100
1200
1300
ALTERNATING PEAK CURRENT (mA)

FIG.38

5
$\times 10^{-2}$
4
3
2
SOLUBILITY (MILLI-MOL/LITTER)
Δb
35.3
UNTREATED WATER
34
35
36
37
INDUCED MAGNETIC FIELD INTENSITY (mG)

FIG.39

5
×10⁻²
4
3
2
SOLUBILITY (MILLI-MOL/LITTER)
Δb
52.1
UNTREATED WATER
50
52.5
55
INDUCED MAGNETIC FIELD INTENSITY (mG)

FIG.40

5
×10⁻²
SOLUBILITY (MILLI-MOL/LITTER)
4
3
2
Δb
81.6
UNTREATED WATER
76
80
84
86
INDUCED MAGNETIC FIELD INTENSITY (mG)

FIG.41

484 Hz
954 Hz
INDUCED MAGNETIC FIELD INTENSITY (mG)
0
50
100
150
SOLUBILITY (MILLI-MOL/LITTER)
×10-2
2
3
4
①
②
③
④

FIG.42

INDUCED MAGNETIC FIELD INTENSITY (mG)
0
100
200
300
400
500
SOLUBILITY (MILLI-MOL/LITTER)
$\times 10^{-2}$
2
3
4
①
①
②
②
③
3.5 kHz
4.73 kHz

FIG.43

N-TIMES MODE
INDUCED MAGNETIC FIELD INTENSITY (mG)
600
300
0
AC FREQUENCY (kHz)
0
1
2
3

FIG.44

N-TIMES MODE
0
10
20
30
40
AC FREQUENCY (kHz)
0
5
INDUCED MAGNETIC FIELD INTENSITY (G)

FIG.45

21
22
21
22
21
TIME
0
MODULATED AMPLITUDE

FIG.46

5a
1
$f_B$
24
$f_A$
23
3

FIG.47

23
24
$f_A$
$f_B$
8
9
25
26

FIG.48

×10-2
5
4
3
2
0
A-B HETEROGENEOUS MIXED FREQUENCY
SINGLE FREQUENCY
A-A HOMOGENEOUS
(B-B) MIXED FREQUENCY
UNTREATED WATER
SOLUBILITY (MILLI-MOL/LITTER)
0
5
10
STORAGE PERIOD (TIME)

28
28
FIG.49A
27
27
E
B
27
27
FIG.49B
27
27

FIG.50

31
Be
32

NORTH
SOUTH

FIG.51A
2
34
33
2
34
FIG.51B
2
34
33
2
34
FIG.51C
2
34
33a
2
34

FIG.52

1a
4
2
2a
36
35

FIG.53

38
39
2
37
1
39
2

FIG.54

1
2
43
42
41

FIG.55

ALTERNATING CURRENT
(MODULATED CURRENT)
47
AMPLITUDE
MODULATING
CIRCUIT
46
FREQUECY
MODULATING
CIRCUIT
45
FREQUENCY
DIVIDING
CIRCUIT
Xtal
44

FIG.56A
48
3
3
48
1
FIG.56B
50
1
3
50
3
49
49
50

FIG.57

51
41
RAW WATER
CARBON DIOXIDE DEGASSING APPARATUS
ELECTROMAGNETIC FIELD TREATMENT APPARATUS
TREATED LIQUID

FIG.58A

53
54
52
55

FIG.58B

FORWARD WOUND
COIL SUPPLY PULSE
(O V)
REVERSE WOUND
COIL SUPPLY PULSE
(O V)
TIME

FIG.59

5
×10-2
4
3
2
SOLUBILITY (MILLI-MOL/LITTER)
Δf
80.0
UNTREATED WATER
74
76
78
80
82
84
FREQUENCY OF POSITIVE CURRENT (KHz)

FIG.60

5
×10-2
4
3
2
SOLUBILITY (MILLI-MOL/LITTER)
Δf
108.0
UNTREATED WATER
102
104
106
108
110
112
FREQUENCY OF POSITIVE CURRENT (KHz)

FIG.61

5
×10⁻²
4
3
2
SOLUBILITY (MILLI-MOL/LITTER)
Δb
6039.0
UNTREATED WATER
5000
6000
7000
INDUCED MAGNETIC FIELD INTENSITY (mG)

FIG.62

5
$\times 10^{-2}$
4
3
2
SOLUBILITY (MILLI-MOL/LITTER)
Δb
7302.9
UNTREATED
WATER
6000
7000
8000
INDUCED MAGNETIC FIELD INTENSITY (mG)

FIG.63A

105
VB
X
104
VE
103a
108
106
109
101
102
103b
107
100
X

FIG.63B

103a
103d
103c
104
VE
108
102
103b
107
101

FIG.64A

+
$V_E$
0
t
−

FIG.64B

+
VB
0
t

FIG.65

104
$V_E$
105
$V_B$
111
112
110

FIG.66

114
114
113
120
115
119
117
116
P
118
100
101
105
104
WEST
EAST

FIG.67

5
× 10-2
4
3
2
SOLUBILITY (MILLI-MOL/LITTER)
Δ fE
9.45
UNTREATED WATER
9
9.5
10
FREQUENCY OF AC VOLTAGE VE (KHz)

FIG.68

①
①
②
②
③
③
$\times 10^{-2}$
4
3
2
SOLUBILITY (MILLI-MOL/LITTER)
0
200
400
600
STATIC MAGNETIC FIELD INTENSTY (mG)
7.0KHz
9.45KHz

FIG.69

STATIC MAGNETIC FIELD INTENSTY (G)
5
N-TIMES MODE
QUINTUPLE MODE
BASE MODE
DOUBLE MODE
E4
E3
E-2 E-1 E0 E1 E2 E5 E6 E7
F-2 F-1 F0 F F2 F F4 F5 F6 F7
1
10
100
FREQUENCY OF AC VOLTAGE VE (KHz)

FIG.70A

Y
121a
106
109
101
121b
103b
100
Y

FIG.70B

121a
101
S
N
103b
103a
108
104
107
VE
S
N
121b

FIG.71

123
122
122
+
VE
0
t
−

FIG.72A

100a
100b
106
109
101
VE1
104a
VE2
104b

FIG.72B

VE1
104a
VE2
104b
111
112
110a
110b

FIG.73

E-F HETEROGENEOUS MIXED FREQUENCY
SINGLE FREQUENCY
SOLUBILITY
E-E HOMOGENEOUS
(F-F) MIXED FREQUENCY
UNTREATED WATER
STORAGE PERIOD

FIG.74A

102
103a
124
101
102
103b
124

FIG.74B

102
103a
101
102
103b

FIG.75A

Z
121a
125
124
101
124
121b
125
Z

FIG.75B

121a
124
125
103a
103b
121b

FIG.76A
+
VE
0
t
−
FIG.76B
+
VE
0
t
−

FIG.77A
+
VE
0
t
−
FIG.77B
+
Vb
0
t
−

FIG.78A
+
VE
0
t
−
FIG.78B
+
Vb
0
t
−

## INTERNATIONAL SEARCH REPORT

International application No.
PCT/JP2007/060893

A. CLASSIFICATION OF SUBJECT MATTER
*C02F1/48*(2006.01)i, *B01D19/00*(2006.01)i, *C02F1/20*(2006.01)i, *C02F5/00*(2006.01)i

According to International Patent Classification (IPC) or to both national classification and IPC

B. FIELDS SEARCHED

Minimum documentation searched (classification system followed by classification symbols)
C02F1/48, B01D19/00, C02F1/20, C02F5/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2007 |
| Kokai Jitsuyo Shinan Koho | 1971-2007 | Toroku Jitsuyo Shinan Koho | 1994-2007 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2005-288436 A (Yugen Kaisha Techno Labo), 20 October, 2005 (20.10.05), Full text; all drawings (Family: none) | 1-39 |
| X | JP 2005-199274 A (SKA, Ltd.), 28 July, 2005 (28.07.05), Full text; all drawings (Family: none) | 1-39 |
| X | JP 2003-112186 A (Mitsubishi Corp.), 15 April, 2003 (15.04.03), Full text; all drawings (Family: none) | 1-39 |

[X] Further documents are listed in the continuation of Box C. [ ] See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 03 July, 2007 (03.07.07) | 10 July, 2007 (10.07.07) |

| Name and mailing address of the ISA/ | Authorized officer |
|---|---|
| Japanese Patent Office | |
| Facsimile No. | Telephone No. |

Form PCT/ISA/210 (second sheet) (April 2005)

**INTERNATIONAL SEARCH REPORT**

International application No. PCT/JP2007/060893

C (Continuation). DOCUMENTS CONSIDERED TO BE RELEVANT

| Category* | Citation of document, with indication, where appropriate, of the relevant passages | Relevant to claim No. |
|---|---|---|
| X | JP 2002-536175 A (De BAAT DOELMAN, Jan, Pieter), 29 October, 2002 (29.10.02), Full text; all drawings & WO 2000/047522 A1 & EP 1156986 A1 & US 6706170 B1 | 1-39 |
| X | JP 2001-38362 A (SKA, Ltd.), 13 February, 2001 (13.02.01), Full text; all drawings (Family: none) | 1-39 |
| X | JP 2001-525726 A (TELFER, David, Brian), 11 December, 2001 (11.12.01), Full text; all drawings & WO 98/052876 A1 & EP 1017635 A1 & US 2002/0195395 A1 | 1-39 |
| X | JP 9-503157 A (STEFANINI, Daniel), 31 March, 1997 (31.03.97), Full text; all drawings & WO 95/008510 A1 & EP 720588 A1 & US 5514283 A | 1-39 |
| X | JP 7-68266 A (Iwase Sangyo Co., Ltd.), 14 March, 1995 (14.03.95), Full text; all drawings (Family: none) | 1-39 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 7068266 A
- JP 11156365 A
- JP 2000212782 A